# EUROPEAN PATENT APPLICATION

(11) **EP 4 693 255 A1**
(43) Date of publication of application: **11.02.2026**
(21) Application number: 24811002.5
(22) Date of filing: 15.05.2024
(51) Int. Cl.: G09B 9/04, E02F 9/20, E02F 9/26, G05B 23/02, G09B 9/00

(54) **WORK SIMULATOR, WORK SIMULATION PROGRAM, AND WORK SIMULATION METHOD**

(30) Priority: 23.05.2023 JP 2023084875; 23.05.2023 JP 2023084876; 23.06.2023 JP 2023103477
(71) Applicant: KOBELCO CONSTRUCTION MACHINERY CO., LTD., Hiroshima-shi, Hiroshima 731-5161 (JP)
(72) Inventor: SAKAMOTO, Fumiya, Hiroshima-shi, Hiroshima 731-5161 (JP); SHIMAZU, Yasuhiko, Hiroshima-shi, Hiroshima 731-5161 (JP); SEKIZUKA, Ryota, Hiroshima-shi, Hiroshima 731-5161 (JP)
(74) Representative: TBK
(86) International application number: PCT/JP2024/018022
(87) International publication number: WO 2024/241995

(57) **Abstract**

A work simulator (1) simulates, in a virtual space, a work site where a work machine (40) performs work. A work simulator (1) includes a computer (13) that assists arrangement of at least one arrangement target (T) in a work site (S) in the virtual space.

## Description

### Technical Field

The present invention relates to a work simulator, a work simulation program, and a work simulation method for simulating a work site in a virtual space.

### Background Art

For example, Patent Literature 1 describes a work planning system that prepares a work plan (see claim 1 of Patent Literature 1).

For example, Patent Literature 2 describes a management system that executes a simulation of a work machine (see paragraph 0094 of Patent Literature 2).

### Citation List

### Patent Literature

Patent Literature 1: JP 2022-11680 A
Patent Literature 2: JP 2022-157635 A

### Summary of Invention

### Problems to be solved by Invention

When a user performs work for arranging an arrangement target such as an object or an area in a virtual space in a simulator, this work may require time and effort. For this reason, it is desirable to suppress an increase in time and effort for the work for arranging an arrangement target in a virtual space.

An object of the present invention is to provide a work simulator, a work simulation program, and a work simulation method capable of suppressing an increase in labor and time for work for arranging an arrangement target in a virtual space.

### Means for solving Problems

A work simulator simulates, in a virtual space, a work site where a work machine performs work. The work simulator includes a computer that assists arrangement of at least one arrangement target at the work site.

A work simulation program is a program for simulating, in a virtual space, a work site where a work machine performs work. The work simulation program causes a computer to execute an arrangement assisting step of assisting arrangement of at least one arrangement target at the work site.

A work simulation method is a method of simulating, in a virtual space, a work site where a work machine performs work. The work simulation method includes the arrangement assisting step in which a computer assists arrangement of at least one arrangement target at the work site.

### Effect of Invention

Each of the work simulator, the work simulation program, and the work simulation method described above can suppress an increase in time and effort required for work for arranging an arrangement target in a virtual space.

### Brief Description of Drawings

FIG. 1 is a block diagram illustrating a work simulator 1.
FIG. 2 is a flowchart illustrating processing of a computer 13 illustrated in FIG. 1.
FIG. 3A is a diagram illustrating display of an output device 15 illustrated in FIG. 1, and is a diagram in a case where a position of equipment 65 is calculated based on a position of a work machine 40.
FIG. 3B is a diagram illustrating display of the output device 15 in a case where a position of the equipment 65 is calculated based on a work machine area A40 having a shape different from the work machine area A40 illustrated in FIG. 3A.
FIG. 4A is a diagram illustrating display of the output device 15 when a work position P43c (work point) of the work machine 40 illustrated in FIG. 1 is set.
FIG. 4B is a diagram illustrating display of the output device 15 when the work position P43c illustrated in FIG. 4A and a work machine arrangement position P40c are set.
FIG. 4C is a diagram illustrating display of the output device 15 when a setting assist function of the work position P43c illustrated in FIG. 4B is used for a work area A45.
FIG. 4D is a diagram illustrating display of the output device 15 when a setting assist function of the work position P43c illustrated in FIG. 4B is used for a cargo bed area A61a.
FIG. 5A is a diagram illustrating display of the output device 15 when the work position P43c (work line) of the work machine 40 illustrated in FIG. 1 is set to a slope face.
FIG. 5B is a diagram illustrating display of the output device 15 when the work position P43c illustrated in FIG. 5A and the work machine arrangement position P40c are set.
FIG. 5C is a diagram illustrating display of the output device 15 when the work position P43c (work line) of the work machine 40 illustrated in FIG. 1 is set to an underground portion 31b.
FIG. 5D is a diagram illustrating display of the output device 15 when the work position P43c illustrated in FIG. 5A is set at a position separated from an obstacle 63 by an offset distance L63.
FIG. 6A is a diagram illustrating display of the output device 15 of the work machine 40 illustrated in FIG. 1 when the work machine arrangement position P40c is set.
FIG. 6B is a diagram illustrating display of the output device 15 when the work machine arrangement position P40c illustrated in FIG. 6A and the work position P43c are set.
FIG. 7A is a diagram illustrating display of the output device 15 when a workable area A40b in which the work machine 40 illustrated in FIG. 1 can work is displayed.
FIG. 7B is a diagram illustrating display by the output device 15 of a limited workable area A40b1 in which the workable area A40b illustrated in FIG. 7A is limited by a depth from a ground surface 31a or the like.
FIG. 7C is a diagram illustrating display by the output device 15 of the limited workable area A40b1 in which the workable area A40b illustrated in FIG. 7A is limited by a slewing angle of the work machine 40.
FIG. 7D is a diagram illustrating rated load display Db2 of the work machine 40 illustrated in FIG. 1 displayed by the output device 15.
FIG. 8A is a diagram illustrating display of the output device 15 when a state of interference between a work machine movable area A40a of the work machine 40 illustrated in FIG. 1 and the obstacle 63 is determined.
FIG. 8B is a diagram illustrating display of the output device 15 when the work machine movable area A40a illustrated in FIG. 8A and the obstacle 63 interfere with each other.
FIG. 8C is a diagram illustrating display of the output device 15 when a state of interference between the work machine movable area A40a having a shape different from that of the example illustrated in FIG. 8A and the obstacle 63 or the like is determined.
FIG. 9 is a diagram illustrating display of the output device 15 when the work machine 40 illustrated in FIG. 1 and a second work machine 50 are arranged at a work site S.
FIG. 10A is a diagram illustrating a grounding determination point P21 and the like of the work machine 40 illustrated in FIG. 1.
FIG. 10B is a diagram illustrating display of the output device 15 when the grounding determination point P21 illustrated in FIG. 10A and the like are projected onto the ground surface 31a.
FIG. 10C is a diagram illustrating display of the output device 15 when the work machine 40 illustrated in FIG. 10A is arranged on the ground surface 31a that is inclined.
FIG. 11 is a block diagram illustrating the work simulator 1.
FIG. 12 is a flowchart illustrating processing of the computer 13 illustrated in FIG. 11.
FIG. 13 is a diagram illustrating an image in a case where a state of an object 30 at the work site S illustrated in FIG. 11 is stored at each fixed time interval.
FIG. 14 is a diagram illustrating an image in a case where a state of an object 30 at the work site S illustrated in FIG. 11 is stored every time a task is started.
FIG. 15 is a diagram illustrating an image in a case where a state of the object 30 at the work site S illustrated in FIG. 11 is stored every time an event occurs.
FIG. 16 is a diagram illustrating a specific example of a display screen displayed on the output device 15 in a case where a state of the object 30 at the work site S illustrated in FIG. 11 is manually stored.
FIG. 17 is a diagram illustrating a specific example of a display screen displayed on the output device 15 when a reset timing is selected in a case where a state of the object 30 at the work site S illustrated in FIG. 11 is reset.
FIG. 18 is a diagram illustrating a specific example of a display screen displayed on the output device 15 after a reset timing is selected in a case where a state of the object 30 at the work site S illustrated in FIG. 11 is reset.
FIG. 19 is a flowchart illustrating reset processing of the computer 13 called in the flowchart illustrated in FIG. 12.
FIG. 20 is a diagram illustrating a specific example of a display screen displayed on the output device 15 in a case where automatic reset is performed in an operator operation mode in Step S30 in the flowchart illustrated in FIG. 13.

### Description of Embodiments

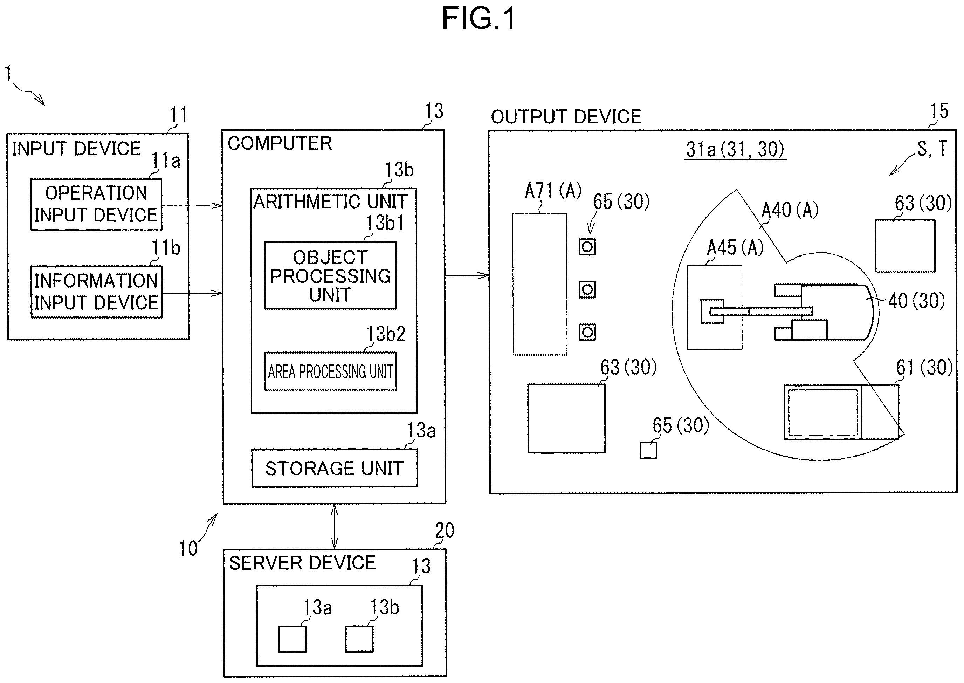

The work simulator 1 according to an embodiment will be described with reference to FIGS. 1 to 10C.

The work simulator 1 is a simulator that performs a work simulation that is a simulation for simulating a work site in a virtual space. As illustrated in FIG. 1, the work simulator 1 includes a computer 13 and an output device 15.

An image of a work site S displayed on the output device 15 is an image of a work site model obtained by simulating the work site in a virtual space. An image of an arrangement target T displayed on the output device 15 is an image of an arrangement target model obtained by simulating, in a virtual space, an arrangement target arranged at a work site. An image of the object 30, which is an example of the arrangement target T displayed on the output device 15, is an image of an object model obtained by simulating, in a virtual space, an object arranged at a work site. An image of an area A, which is an example of the arrangement target T displayed on the output device 15, is an image of an area model obtained by simulating, in a virtual space, an area at a work site. An image of a work machine 40, which is an example of the object 30 displayed on the output device 15, is an image of a work machine model obtained by simulating, in a virtual space, a work machine arranged at a work site.

Hereinafter, the work site model in a virtual space will be simply referred to as the work site S, the arrangement target model in a virtual space will be simply referred to as the arrangement target T, the object model in a virtual space will be simply referred to as the object 30, the area model in a virtual space will be simply referred to as the area A, and the work machine model in a virtual space will be simply referred to as the work machine 40.

The at least one arrangement target T may include only a single one of the arrangement targets T or may include a plurality of the arrangement targets T. The at least one arrangement target T may include at least one of the objects 30 or may include at least one of the areas A. The at least one arrangement target T includes one or both of the object 30 and the area A.

### [Arrangement assisting step]

The computer 13 performs arrangement assisting processing (arrangement assisting step) of assisting arrangement of the at least one arrangement target T at the work site S in a virtual space. By this, it is possible to suppress an increase in time and effort for work for arranging the arrangement target T in a virtual space. The arrangement assisting processing may include position setting processing, may include interference determination processing, and may include reset processing.

### [Position setting step]

The computer 13 may perform the position setting processing (position setting step) of setting a position of the arrangement target T at the work site S.

In a case where the at least one arrangement target T includes the first arrangement target T and the second arrangement target T, a position of the first arrangement target T at the work site S is set, and a position of the second arrangement target T at the work site S is not set, the computer 13 may set a position of the second arrangement target T based on a position of the first arrangement target T in the position setting processing.

In a case where the at least one arrangement target T includes the work machine 40, a position of a first specific portion of the work machine 40 at the work site S is set, and a position of a second specific portion of the work machine 40 at the work site S is not set, the computer 13 may set a position of the second specific portion based on a position of the first specific portion in the position setting processing.

### [Interference determination step]

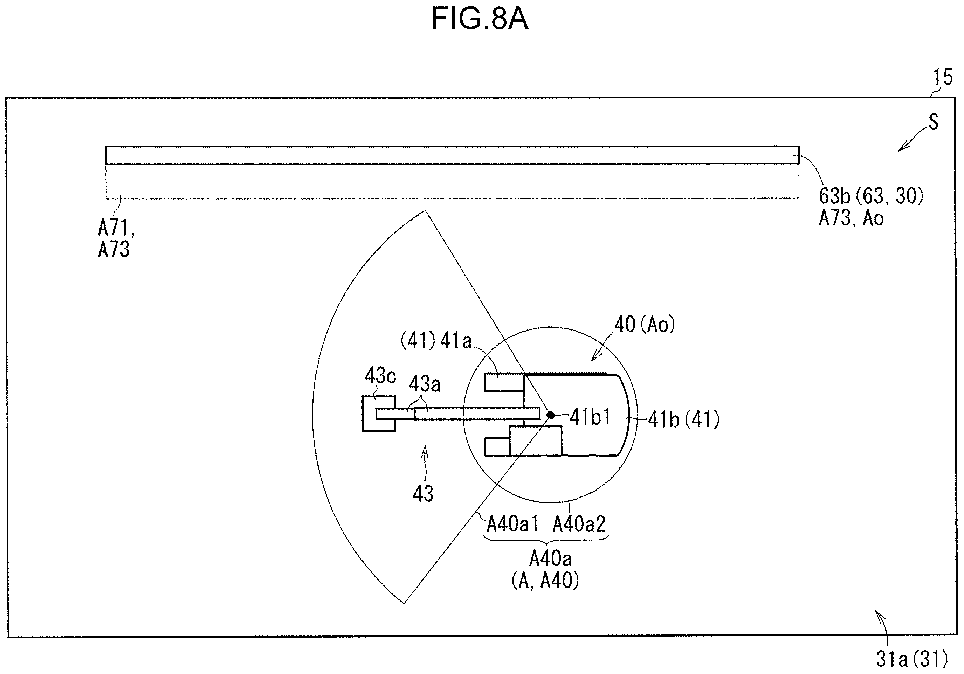

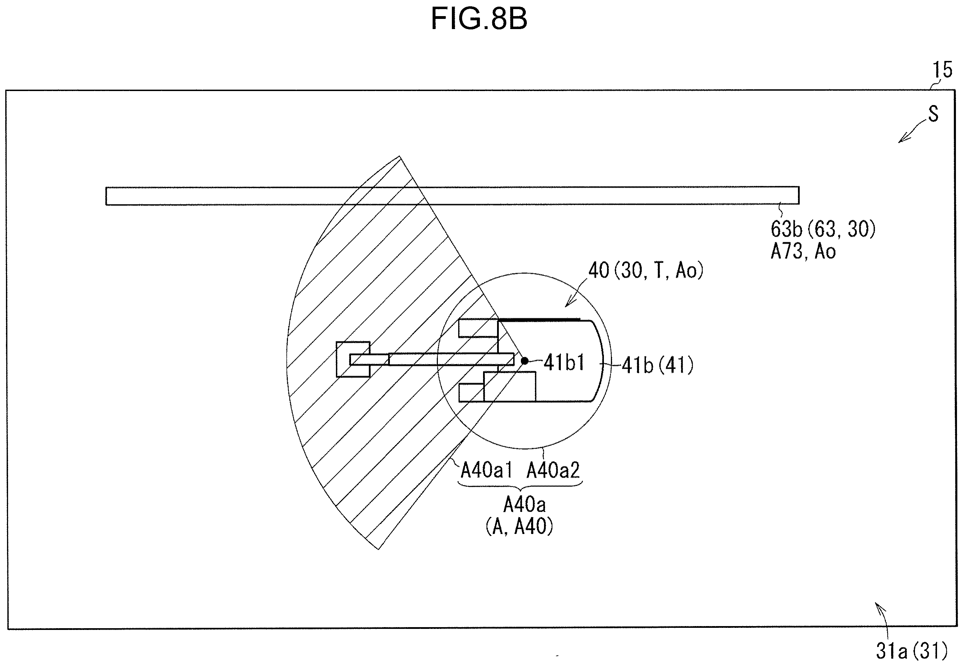

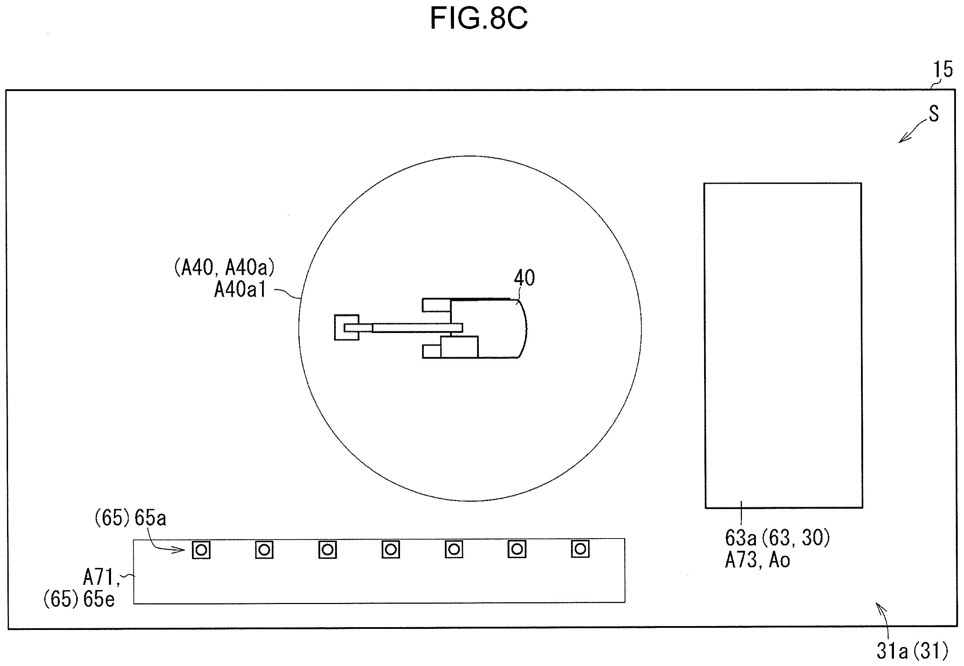

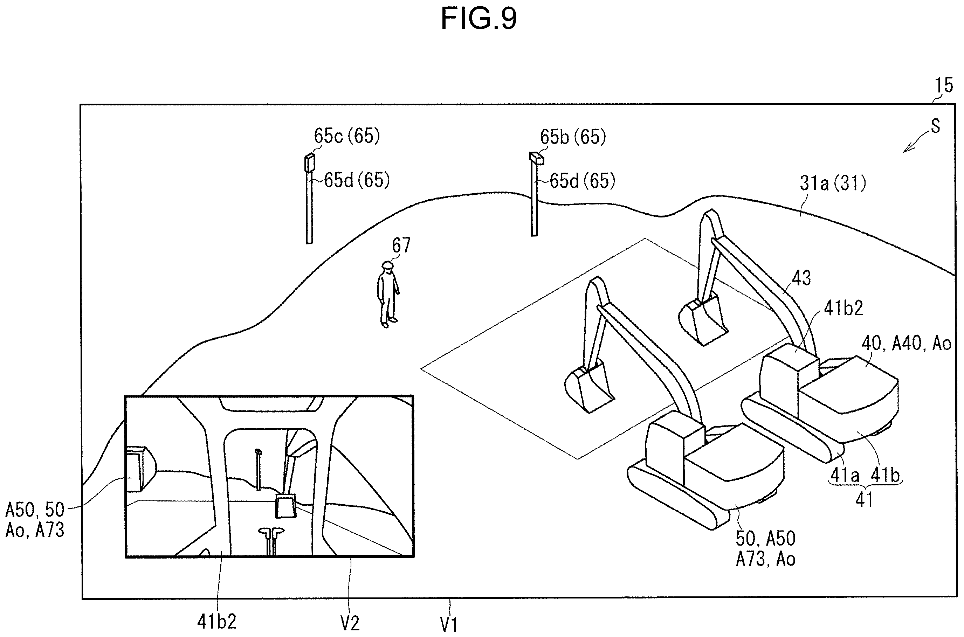

For example, as in an embodiment illustrated in FIGS. 8A, 8B, 8C, and 9, in a case where the at least one arrangement target T includes a work machine area A40 set in association with a position of the work machine 40 in a virtual space and a determination target area A73 set in the virtual space, the computer 13 may perform interference determination processing (interference determination step) of determining a state of interference between the work machine area A40 and the determination target area A73.

### [Reset step]

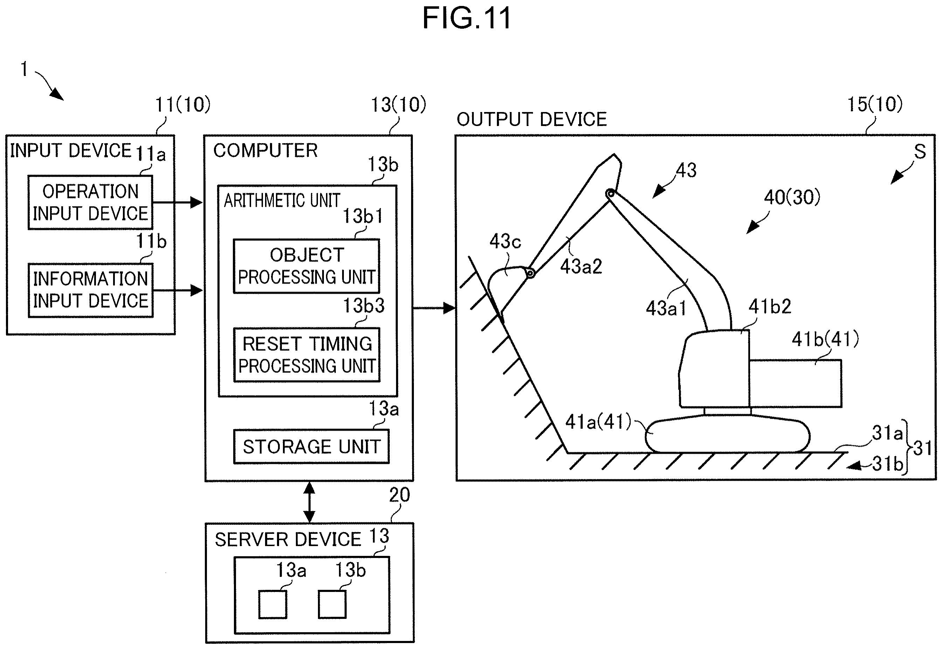

As in another embodiment illustrated in FIGS. 11 to 20, the computer 13 may perform reset processing (reset step) of resetting a state in a virtual space to a state at a designated timing.

Hereinafter, the work simulator 1 according to the present embodiment will be described in detail, but the work simulator according to the present invention is not limited to the embodiment described below.

The work simulator 1 according to the present embodiment may include at least one information terminal. The information terminal may be, for example, a personal computer, a portable information terminal such as a tablet or a smartphone, or another type of information terminal. The work simulator 1 includes an input device 11, the computer 13, and the output device 15. The work simulator 1 may include a client device 10 and a server device 20.

The input device 11 is a device for inputting information to the computer 13. The input device 11 includes an operation input device 11a and an information input device 11b.

The operation input device 11a is operated by the user (operator) of the work simulator 1. Operation of the operation input device 11a by the user is also referred to as "manual operation". The operation input device 11a may be used to set a position in a virtual space. The operation input device 11a may be used to set a position of the arrangement target T in a virtual space. The operation input device 11a may be used to designate a position of the arrangement target T in a virtual space. The operation input device 11a may be used to select a position of the arrangement target T in a virtual space. The arrangement target T includes one or both of the object 30 and the area A.

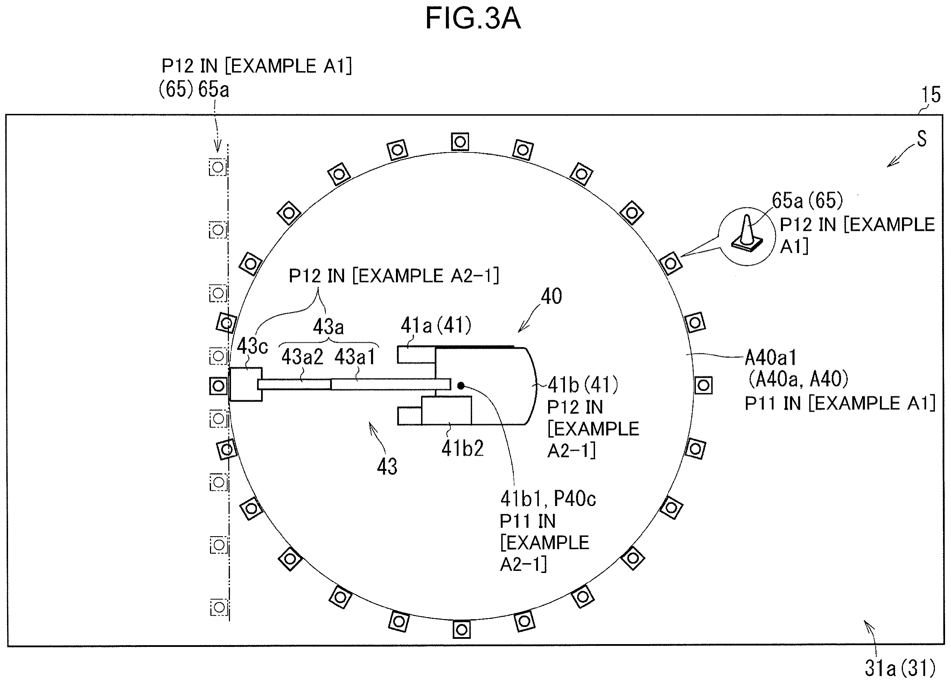

The operation input device 11a may be used for operating the work machine 40 in a virtual space. For example, the operation input device 11a may be used for an instruction to start and end operation of the work machine 40 in a virtual space, may be used for a travelling instruction for the work machine 40 in a virtual space, may be used for a slewing instruction for an upper slewing body 41b (see FIG. 3A) in a virtual space, or may be used for an instruction to operate an attachment 43 (see FIG. 3A) in a virtual space. For example, the operation input device 11a may include at least one of a mouse, a keyboard, a touch panel, and a game pad. The operation input device 11a may include operation levers that simulate left and right operation levers in an actual work machine (a machine corresponding to the work machine 40), or may include operation pedals that simulate left and right operation pedals (foot pedals) in an actual work machine.

The information input device 11b is a device for inputting various types of information (excluding information by operation of the operation input device 11a) to the computer 13. The various types of information may include, for example, information regarding the object 30 or information regarding the area A.

The computer 13 includes a computer that performs input and output of a signal, arithmetic operation, storage of information, and the like. The computer 13 includes a storage unit 13a and an arithmetic unit 13b. The computer 13 generates the work site S simulating a work site in a virtual space. A function of the computer 13 is realized by the arithmetic unit 13b executing a work simulation program that is a program stored in the storage unit 13a. Examples of the function of the computer 13 include a function of an object processing unit 13b1 and a function of an area processing unit 13b2 to be described later.

The computer 13 and another device may be connected by wireless communication or wired communication. Another device described above may be, for example, the input device 11 or the output device 15. Information output from the input device 11 is input to the computer 13. The computer 13 outputs information to the output device 15. The computer 13 (specifically, the computer 13 of the client device 10) may exchange information with the server device 20. Exchange between the computer 13 of the client device 10 and the server device 20 is performed through communicating means such as a mobile phone line, an optical line, a wireless local area network (LAN), or a wired LAN.

The storage unit 13a stores various types of information. The storage unit 13a stores a work simulation program.

The arithmetic unit 13b performs processing such as calculation and determination. The arithmetic unit 13b includes an object processing unit 13b1 and an area processing unit 13b2. The object processing unit 13b1 performs processing of the object 30 to be described later. The area processing unit 13b2 performs processing of the area A to be described later.

The computer 13 may define a virtual space using a coordinate system. The coordinate system may be, for example, a three-dimensional orthogonal coordinate system (X, Y, and Z). The storage unit 13a of the computer 13 may store the coordinate system in advance. The computer 13 may set the coordinate system based on information input to the input device 11. The computer 13 may identify the work site S, the object 30, and the area A in a virtual space with reference to the coordinate system.

The output device 15 performs output according to a command input from the computer 13. Specifically, the output device 15 may perform display according to a command input from the computer 13, for example. The output device 15 may be, for example, a monitor having a screen. The output device 15 may display a calculation result of the computer 13. The output device 15 displays a virtual space calculated by the computer 13. Specifically, a monitor as the output device 15 displays the work site S, the object 30, and the area A in a virtual space on a screen in response to a command input from the computer 13. The output device 15 displays a graphical user interface (GUI) for the user to perform operation of a work simulation. In description below, display of the output device 15 is display that the computer 13 causes the output device 15 to perform. The output device 15 may output sound.

The server device 20 includes a computer that operates in accordance with a command from the client device 10. The client device 10 includes the input device 11, the computer 13, and the output device 15. A function (for example, a function of the object processing unit 13b1 and a function of the area processing unit 13b2) of the work simulator 1 may be realized by the client device 10 and the server device 20. A part of the computer 13 (for example, one of the storage unit 13a and the arithmetic unit 13b) may be included in the client device 10, and another part of the computer 13 (for example, the other of the storage unit 13a and the arithmetic unit 13b) may be included in the server device 20. The input device 11 may be included in the server device 20 (not illustrated). In this case, for example, information (for example, the various types of information described above) may be input from the input device 11 included in the server device 20 to the computer 13 included in the client device 10. The work simulator 1 may include a plurality of the server devices 20. Note that the work simulator 1 does not need to include the server device 20.

The work simulator 1 (mainly the computer 13) is configured to perform a work simulation below. A work simulation program causes the computer 13 to execute a work simulation below. A work simulation method is a method in which a work simulation below is performed.

The work simulator 1 generates the work site S simulating a work site in a virtual space. The work site S is a site model (construction site model) in which the work machine 40 as a work machine model performs work in a virtual space. For example, the work simulator 1 (construction plan simulator) is used to make a construction plan which is a plan of the work site S. The work simulator 1 is used to make a plan related to the work machine 40 at the work site S. The work simulator 1 is used to check a position, size, workability (productivity), safety, and the like of the work machine 40. The work simulator 1 may be used to make a plan for an object other than the work machine 40 and the area A. The work simulator 1 has an object processing function and an area processing function. The work simulator 1 may have various functions such as an operation mode switching function, a time change function, and an interference determination function. For example, the work simulator 1 may have a function of recording (storing) a situation or the like at the work site S, and may have a function of reproducing a recorded situation.

### [Object processing function]

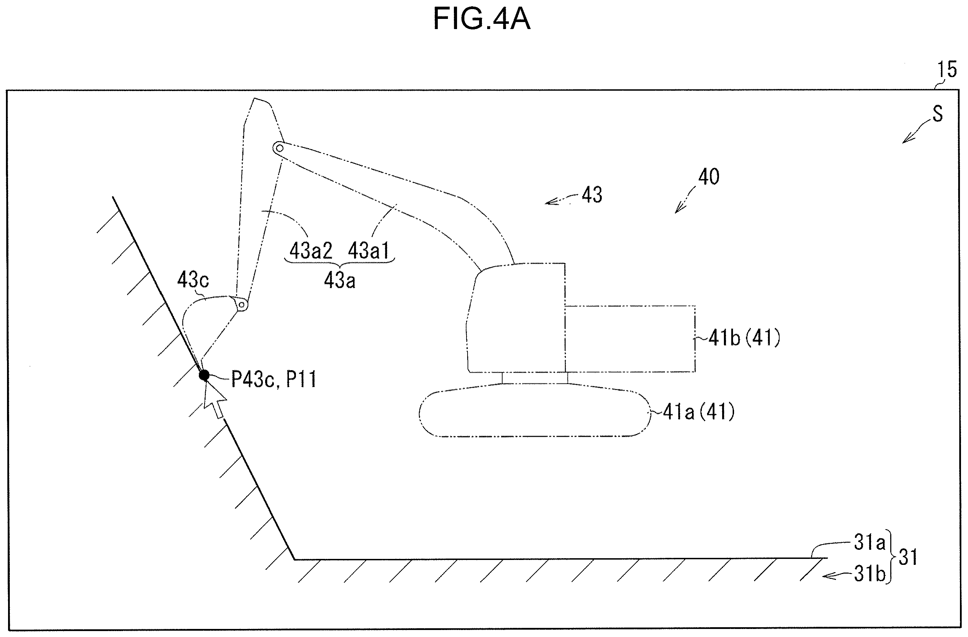

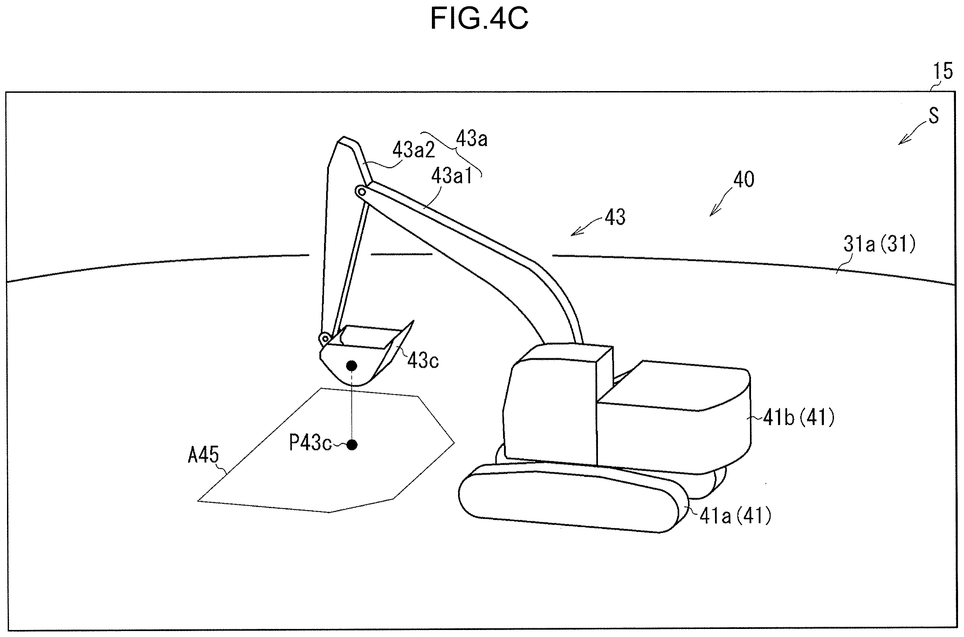

The object processing unit 13b1 of the computer 13 performs processing on the object 30 that is an example of the arrangement target T (an object processing function and an object processing step). The object 30 is a model of an object modeled from an object in the work site S in a virtual space. The object 30 may be, for example, a three-dimensional model as illustrated in FIG. 4C or a two-dimensional model. Operation or a function of the work simulator 1 may be described as a "step" in a work simulation program and a work simulation method. For example, performing processing of the object 30 may be referred to as "object processing step". Performing processing of the area A to be described later may be referred to as an "area processing step".

Processing of the object 30 includes deletion of the object 30 in a virtual space and arrangement of the object 30 in a virtual space. That is, processing of the object 30 includes deleting the object 30 arranged in a virtual space from the virtual space and arranging the object 30 in a virtual space.

Arrangement of the object 30 may be referred to as an arrangement step or an object arrangement step. Arrangement of the object 30 includes new arrangement of the object 30 in a virtual space and movement of the object 30 in a virtual space. The new arrangement of the object 30 is to newly arrange the object 30 at the work site S in a virtual space. The movement of the object 30 is to move the object 30 already present at the work site S in a virtual space.

Movement of the object 30 may include rotational movement of the object 30, or may include parallel movement of the object 30. The movement of the object 30 may include a posture change of the work machine 40 in a virtual space. The posture change of the work machine 40 is to change a posture of the work machine 40 in a virtual space. The movement of the object 30 may be a change in terrain 31 in a virtual space. The change in the terrain 31 is to change the terrain 31 in a virtual space.

In a case where the object 30 is arranged in a virtual space, the computer 13 stores a position of the object 30 arranged in a virtual space. Processing of the object 30 may include management of the object 30 in a virtual space. The management of the object 30 is to manage the object 30 arranged in a virtual space. The management of the object 30 may include, for example, managing a plurality of the objects 30 in a list format. The processing of the object 30 may include switching between display and non-display states for each of the objects 30 in the output device 15.

Hereinafter, an event in a virtual space will be described unless otherwise specified. For example, "the work machine 40 is arranged on a ground surface 31a" means that the work machine 40, which is an example of the object 30, is arranged on the ground surface 31a, which is an example of the object 30, in a virtual space. For example, "the work machine area A40 is set around the work machine 40" means that the work machine area A40, which is an example of the area A, is set around the work machine 40, which is an example of the object 30, in a virtual space.

A condition under which the computer 13 performs processing of the object 30 is as described below, for example. The computer 13 may perform processing of the object 30 when manual operation by the user is given to the input device 11. That is, the computer 13 may perform processing of the object 30 according to manual operation by the user. The computer 13 may automatically perform processing of the object 30 when a preset condition is satisfied in the computer 13.

A position of the object 30 will be described. The computer 13 may store a reference position of the object 30 in a virtual space as a position of the object 30. The computer 13 may store a reference position of the object 30 in a virtual space and a direction of the object 30 in the virtual space as a position of the object 30.

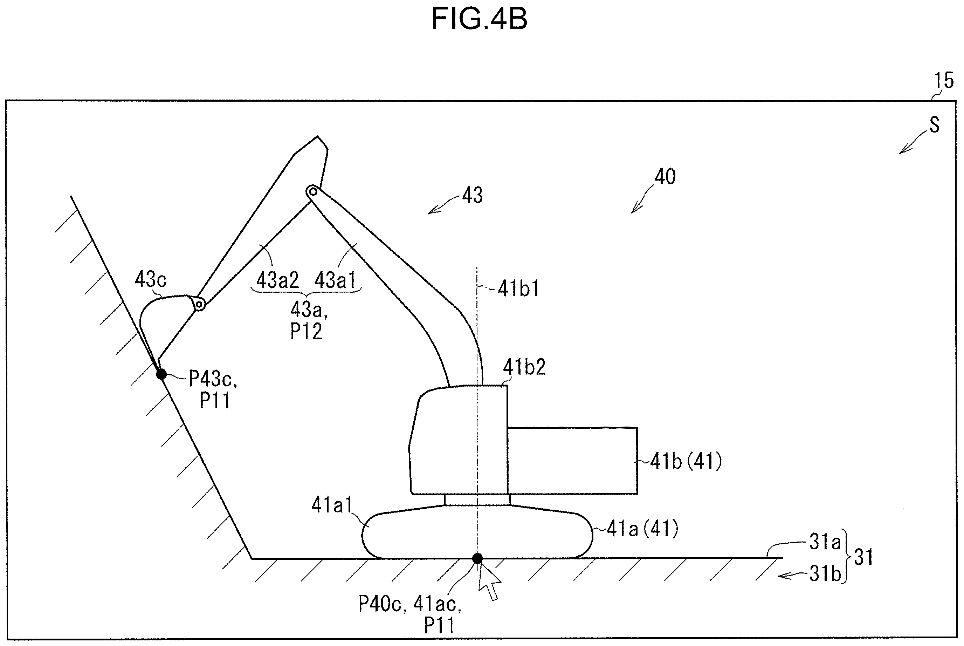

The reference position of the object 30 is a position as a reference of the object 30. For example, the reference position of the object 30 may be a center position of a lower surface of the object 30 or a center of gravity position of the object 30. The center position of a lower surface of the object 30 may be, for example, a work machine lower surface center point 41ac illustrated in FIG. 4B. The work machine lower surface center point 41ac will be described later.

The direction of the object 30 may be defined by a relative orientation of the object 30 with respect to a predetermined coordinate axis. The direction of the object 30 may be defined by a relative posture of the object 30 with respect to a predetermined coordinate axis. The direction of the object 30 may be defined by a rotation angle (for example, a three-dimensional rotation angle) with respect to a predetermined coordinate axis.

A specific example of the object 30 is as described below. In the present embodiment, the at least one arrangement target T includes a plurality of the objects 30. A plurality of the objects 30 may include the terrain 31 (surrounding environment information), the work machine 40, and the other objects 30.

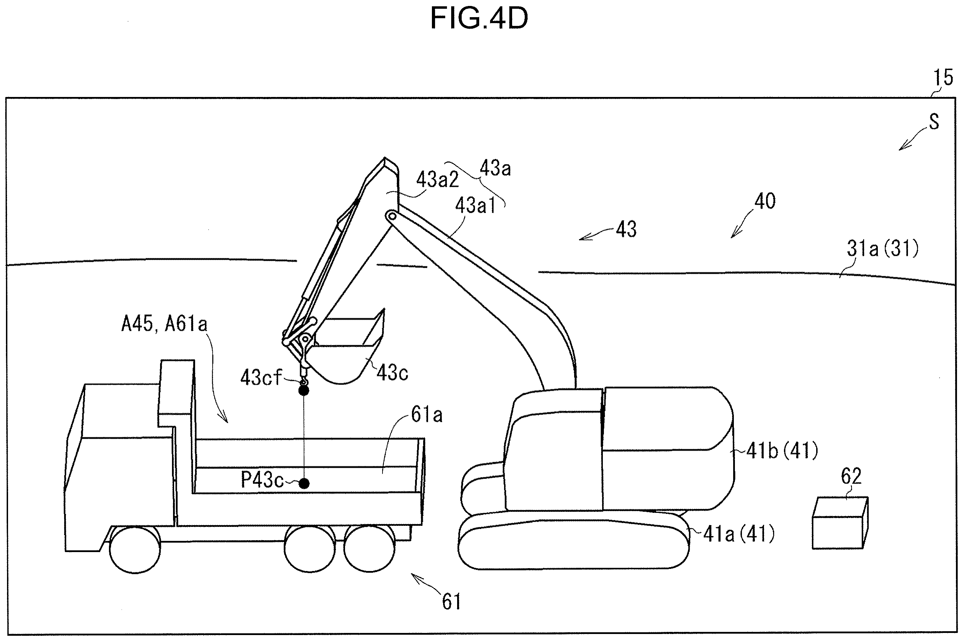

The other objects 30 may be, for example, a second work machine 50 (see FIG. 9), a transport vehicle 61, a suspended load 62 (see FIG. 4D), an obstacle 63, equipment 65, and a worker 67 (see FIG. 9).

As illustrated in FIG. 4B, the terrain 31 includes information on a shape of the land of the work site S in a virtual space. The terrain 31 may have a two-dimensional shape or a three-dimensional shape. The terrain 31 may include, for example, the flat ground, an inclined surface (for example, slope face), irregularities, and the like. The terrain 31 may include the ground surface 31a and an underground portion 31b. The ground surface 31a is a surface (ground surface) of the terrain 31, and is, for example, a surface such as earth and sand. The underground portion 31b is a portion below the ground surface 31a in the terrain 31, and is, for example, a portion where earth and sand exist.

The terrain 31 may be a terrain model simulating actual land. In this case, the terrain 31 may include information regarding a shape generated based on detection information on actual land. In this case, the detection information of actual land may be, for example, information on an environment of an actual work site. The detection information of actual land may be information detected by an information acquisition device. The information acquisition device may be a stereo camera, a distance sensor, or a combination of a distance sensor and a two-dimensional camera. The distance sensor may be, for example, light detection and ranging (LIDAR) or a millimeter wave radar. The information acquisition device may be a device included in the information input device 11b, or may be a device different from the information input device 11b. The information acquisition device inputs detection information of actual land to the computer 13.

Furthermore, the terrain 31 may include shape information (shape information of the terrain 31) based on design data designed on a computer. The design data may be data related to a design surface designed on a computer. The computer on which design data is designed may be the work simulator 1 or a computer other than the work simulator 1.

The computer 13 may set the terrain 31 in a virtual space as illustrated in FIG. 1 and store the set terrain 31 in the storage unit 13a. The computer 13 may set only a single portion of the terrain 31 or a plurality of portions of the terrain 31 in a virtual space. A plurality of portions of the terrain 31 may include the terrain 31 before work in a virtual space, may include the terrain 31 in the middle of work in a virtual space, and may include the terrain 31 after completion of work in a virtual space (completed terrain 31).

Similarly, for the objects 30 other than the terrain 31, the computer 13 may set only a single one of the objects 30 or may set a plurality of the objects 30 in a virtual space. Similarly for the area A, the computer 13 may set only a single one of the areas A or a plurality of the areas A in a virtual space.

The shape information of the terrain 31 may be input from the input device 11 to the computer 13, for example. That is, the computer 13 may read the shape information of the terrain 31 from the input device 11. When the user inputs the shape information of the terrain 31 to the input device 11, the computer 13 can acquire the shape information of the terrain 31 input to the input device 11 from the input device 11.

Similarly, for the object 30 other than the terrain 31, the computer 13 can acquire shape information of the object 30 input to the input device 11 from the input device 11. Similarly for the area A, the computer 13 can acquire shape information of the area A input to the input device 11 from the input device 11.

The computer 13 may deform the terrain 31 in a virtual space as time elapses in a work simulation. That is, the computer 13 may change display of the terrain 31 on the output device 15 as time elapses. A specific example of a case where the computer 13 deforms the terrain 31 is as described below.

In a specific example illustrated in FIG. 4B, the work machine 40 operates in a virtual space, and a tip attachment 43c to be described later performs work on the terrain 31 (for example, earth and sand). For example, in a virtual space, the work machine 40 performs operation of excavating the ground surface 31a. In such a case, the computer 13 may deform the terrain 31 according to work on the terrain 31 in a virtual space as time elapses. That is, the computer 13 may change display of the terrain 31 on the output device 15 according to work on the terrain 31. For example, in a virtual space, the computer 13 may deform the terrain 31 into a shape such as a hole or a groove formed by excavating earth and sand as time elapses. For example, in a virtual space, the computer 13 may deform the terrain 31 into a shape of an earth pile formed by discharge of earth and sand and depositing of earth and sand as time elapses.

The work machine 40 is a model of a work machine that performs work, and is, for example, a model of a construction machine that performs construction work. The work machine 40 may be, for example, a model of an excavator, a model of a crane, a model of a bulldozer, or a model of a wheel loader. Hereinafter, a case where the work machine 40 is a model of an excavator will be mainly described. The work machine 40 includes a machine body 41 and the attachment 43. The machine body 41 is a main body portion of the work machine 40. The machine body 41 includes a lower travelling body 41a and the upper slewing body 41b.

The computer 13 may output a command to operate the work machine 40 in a virtual space (work machine operation step). The computer 13 may operate the work machine 40 in a virtual space based on preset information. The output device 15 may perform display in which the work machine 40 operates according to the command input from the computer 13. The preset information may be, for example, information regarding a series of operations of the work machine 40 in work performed by the work machine 40. The storage unit 13a may store the information.

The computer 13 may operate the work machine 40 in a virtual space according to manual operation by the user given to the input device 11 (see an operator operation mode to be described later). The computer 13 may output a command according to manual operation by the user to the output device 15, and the output device 15 may display an image for operating the work machine 40 in a virtual space based on the command input from the computer 13. By this, the work machine 40 performs movement corresponding to manual operation by the user on a screen of the output device 15. Specifically, the computer 13 may cause the work machine 40 to travel in a virtual space, may cause the upper slewing body 41b to slew with respect to the lower travelling body 41a in a virtual space, or may change a posture of the attachment 43 in a virtual space. Note that the computer 13 does not need to operate the work machine 40 in a virtual space. That is, the work machine 40 may be simply arranged at the work site S in a virtual space.

The computer 13 can cause the lower travelling body 41a to travel on a travelling surface such as the ground surface 31a in a virtual space. The computer 13 may cause the output device 15 to perform display for causing the lower travelling body 41a to travel according to manual operation by the user given to the input device 11.

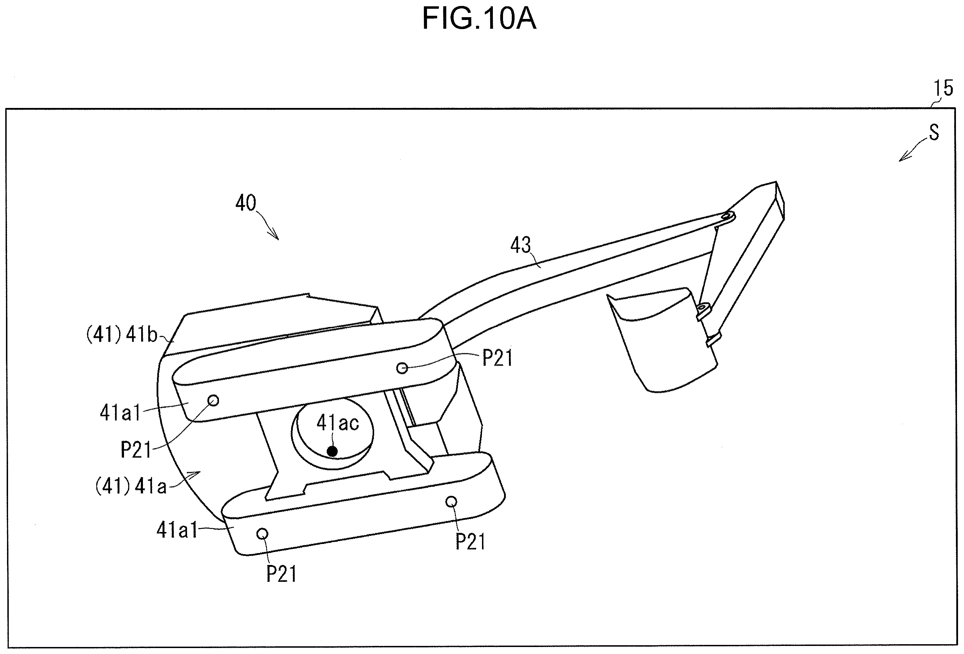

The lower travelling body 41a may include a crawler 41al and may include a wheel (not illustrated). A center point of a lower surface of the work machine 40 (that is, a lower surface of the lower travelling body 41a) is referred to as the work machine lower surface center point 41ac. For example, as illustrated in FIG. 10A, the work machine lower surface center point 41ac is an intersection of a virtual plane in contact with a lower surface of the lower travelling body 41a and a slewing center axis 41b1 to be described later. The work machine lower surface center point 41ac may be, for example, a reference position of the work machine 40.

The computer 13 can slew the upper slewing body 41b with respect to the lower travelling body 41a in a virtual space. The computer 13 may cause the output device 15 to perform display for slewing the upper slewing body 41b with respect to the lower travelling body 41a in accordance with manual operation by the user given to the input device 11.

A rotation axis of slewing of the upper slewing body 41b with respect to the lower travelling body 41a is referred to as the slewing center axis 41b1. The upper slewing body 41b includes a cab 41b2. The cab 41b2 is a portion corresponding to a cab in which an operator operates a work machine in an actual work machine. The cab 41b2 may be fixed to a bottom portion (slewing frame) of the upper slewing body 41b. The cab 41b2 may be movable with respect to a bottom portion of the upper slewing body 41b. In this case, the cab 41b2 may be a cab such as an elevator cab or a link cab having a mechanism movable in an up-down direction with respect to a bottom portion of the upper slewing body 41b. Further, the cab 41b2 may be a tilt cab having a mechanism that is rotatable or tiltable upward and downward about a rotation axis extending in a lateral direction with respect to a bottom portion of the upper slewing body 41b for easy view of the upper side from the inside of the cab 41b2. The cab 41b2 may include an accessory attached to a main body portion of the cab 41b2. This accessory may be, for example, a guard for protecting an upper surface of the cab 41b2, a front window, and the like from a flying object or the like.

### [Direction]

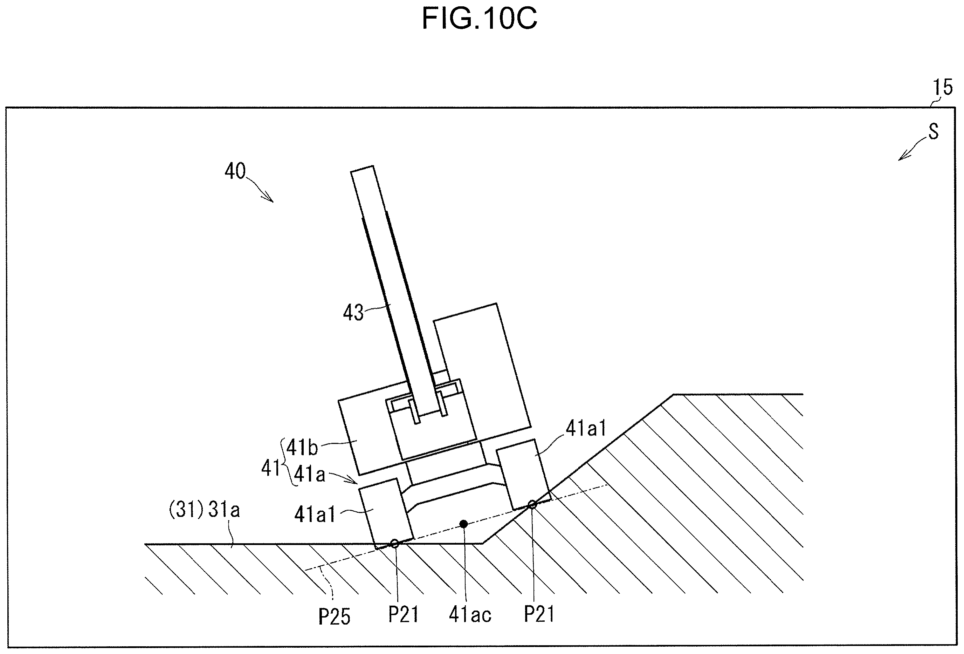

A direction regarding the work machine 40 in a virtual space is defined as described below. A direction in which the slewing center axis 41b1 extends is defined as an up-down direction. A direction in which a rotation axis of an undulation of a boom 43a1 (described later) with respect to the upper slewing body 41b extends is defined as a lateral direction. A direction orthogonal to each of the up-down direction and the lateral direction is defined as a front-rear direction. In the front-rear direction, a side on which the attachment 43 protrudes with respect to the upper slewing body 41b is defined as a front side, and the opposite side is defined as a rear side. A direction of slewing of the upper slewing body 41b with respect to the lower travelling body 41a is defined as a slewing direction. Note that the work machine 40 may be arranged on an inclined surface (see FIG. 10C). For this reason, the up-down direction of the work machine 40 does not necessarily coincide with a vertical direction, and each of the lateral direction and the front-rear direction of the work machine 40 does not necessarily coincide with a horizontal direction.

The attachment 43 is a work device that performs work in a virtual space. The computer 13 can raise and lower the attachment 43 with respect to the upper slewing body 41b, that is, can rotate the attachment 43 upward and downward. The computer 13 may cause the output device 15 to perform display for raising and lowering the attachment 43 with respect to the upper slewing body 41b according to manual operation by the user given to the input device 11.

The attachment 43 includes a base end side attachment 43a and the tip attachment 43c.

The base end side attachment 43a is arranged between the tip attachment 43c and the upper slewing body 41b. The base end side attachment 43a includes the boom 43a1 and an arm 43a2. The boom 43a1 is attached to the upper slewing body 41b so as to be rotatable (rotatable upward and downward). The arm 43a2 is attached to the boom 43a1 so as to be rotatable (rotatable forward and rearward).

The tip attachment 43c is located at a tip portion of the attachment 43. The tip attachment 43c is attached to the base end side attachment 43a so as to be rotatable (rotatable forward and rearward), and specifically, is rotatably attached to the arm 43a2. The tip attachment 43c may be a bucket for performing work of scooping a work object, excavation, and the like. The tip attachment 43c may be a device such as a grapple or a nibbler that sandwiches a work object, a device such as a breaker that crushes a work object, or a device having a magnet that attracts a metal work object. As illustrated in FIG. 4D, the tip attachment 43c may include a hook 43cf. The hook 43cf is a member for lifting the suspended load 62. A work object as a target of work by the tip attachment 43c illustrated in FIG. 4B may be earth and sand, a stone, wood, metal, resin, waste, a structure such as a block, or the suspended load 62 illustrated in FIG. 4D.

The second work machine 50 is a model of a work machine arranged in a virtual space as illustrated in FIG. 9, and is a model of a work machine different from the work machine 40. The second work machine 50 is a machine (for example, an excavator, a crane, or the like) similar to the work machine 40. Specifically, similarly to the work machine 40, the second work machine 50 is a machine including the machine body 41 including the lower travelling body 41a and the upper slewing body 41b, and the attachment 43. When there are two work machines at the work site S in a virtual space, and one of the objects 30 between the two work machines is the work machine 40, the object 30 different from the work machine 40 between the two work machines is the second work machine 50. The second work machine 50 may be the same model as or a different model from the work machine 40. The number of work machines arranged in a virtual space may be three or more.

The transport vehicle 61 is a model of a vehicle arranged in a virtual space as illustrated in FIG. 4D, and is a model of a vehicle that transports a work object of work by the work machine 40. The transport vehicle 61 may be, for example, a dump truck. The transport vehicle 61 includes a cargo bed 61a. The cargo bed 61a is a container in which a work object is placed. Note that a model (not illustrated) of a container in which a work object is placed other than the cargo bed 61a may be arranged at the work site S in a virtual space.

The suspended load 62 is a model of a work object to be lifted by the work machine 40 in a virtual space.

The obstacle 63 is a model of an obstacle arranged at the work site S in a virtual space as illustrated in FIG. 8C, and is, for example, a model of an obstacle when the work machine 40 performs work. The obstacle 63 may include, for example, a building 63a, and may include a wall 63b fixed to the ground surface 31a as illustrated in FIG. 8B.

The equipment 65 is a model of equipment arranged at the work site S in a virtual space. The equipment 65 may include a partition tool 65a, may include, as illustrated in FIG. 9, an imaging device 65b, an antenna 65c, and a pole 65d, and may include, as illustrated in FIG. 8C, a path 65e.

As illustrated in FIG. 3A, the partition tool 65a is a model of a partition tool arranged at the work site S in a virtual space, and the partition tool is a member that partitions the work site S and is a member used as a boundary. The partition tool 65a may be a traffic cone (traffic pylon), may be a combination of a cone and a bar, or may be a fence temporarily arranged on the ground surface 31a.

As illustrated in FIG. 9, the imaging device 65b is a model of an imaging device that images the work site S. For example, the imaging device 65b may be a model of a camera that detects information obtained by overlooking a situation of the work site S. For example, the imaging device 65b may be a model of a camera used when an actual work machine is remotely operated or automatically operated. The imaging device 65b may be a model of a camera that allows an operator to grasp a situation around a work machine when an actual work machine is remotely operated. The imaging device 65b may be a model of an imaging device for monitoring the worker 67 and the work machine 40 at the work site S. Specifically, the imaging device 65b may be a model of an imaging device for monitoring whether or not there is the worker 67 or the work machine 40 approaching a specific one of the areas A, the objects 30, or the like. The imaging device 65b may be a model of an imaging device used for purposes other than that described above. The imaging device 65b may be, for example, a model of an imaging device fixed to the object 30 such as the work machine 40. The imaging device 65b may be arranged inside the cab 41b2. The imaging device 65b may be a model of an imaging device that shoots an image from an operator's viewpoint. The imaging device 65b may be a model of a camera that captures a two-dimensional image (model of surveillance camera, model of on-site camera, or the like). The imaging device 65b may be a model of a device that detects a range image (model of a stereo camera, LIDAR, a millimeter wave radar, or the like). The range image may be, for example, a three-dimensional image including two-dimensional information and depth information.

The antenna 65c is a model of a member used for wireless communication with the work machine 40. For example, the antenna 65c may be a model of an antenna used when an actual work machine is remotely operated or automatically operated.

The pole 65d is a model of a support column that supports a device. The device supported by the pole 65d may be, for example, the imaging device 65b or the antenna 65c.

The path 65e (see FIG. 8C) is a model of a portion through which a person, a vehicle, or the like passes (such as model of a passage, a road, or the like). Note that the equipment 65 may include a model other than the above specific example. For example, the equipment 65 may include a model of a material, may include a model of a material yard (stock yard), and may include a light model for illuminating the work site S.

The worker 67 is a model of a person, and may be, for example, a model of a person who works by human power or a model of a watchperson.

### [Area processing function]

The area processing unit 13b2 of the computer 13 performs processing for the area A which is an example of the arrangement target T (area processing function and area processing step). The area A is a region in a virtual space. The area A may be a region having a three-dimensional shape in a virtual space, a region having a two-dimensional shape in a virtual space, or a region having a one-dimensional shape in a virtual space. The area A may be a region represented by a three-dimensional shape in a virtual space, a region represented by a plane in a virtual space, or a region represented by a line in a virtual space. The area A may be represented by a point in a virtual space.

Similarly to processing of the object 30, processing of the area A includes deletion of the area A in a virtual space and arrangement of the area A in a virtual space. That is, processing of the area A includes deleting the area A arranged in a virtual space from the virtual space and arranging the area A in a virtual space.

The arrangement of the area A may be referred to as an arrangement step or an area arrangement step. The arrangement of the area A may be referred to as setting of the area A. The computer 13 may set the area A based on a position of the object 30. Specifically, for example, the computer 13 may set the work machine area A40, which is an example of the area A, based on a position of the work machine 40. The computer 13 may set the area A based on a position of the object 30 other than the work machine 40. The computer 13 may set the area A without being based on a position of the object 30. Specifically, for example, the computer 13 may set the area A based on manual operation by the user given to the input device 11.

A condition under which the computer 13 performs processing of the area A is, for example, as described below. The computer 13 may perform processing of the area A when manual operation by the user is given to the input device 11. The computer 13 may perform processing of the area A according to manual operation by the user. The computer 13 may automatically perform processing of the area A when a preset condition in the computer 13 is satisfied. For example, the computer 13 may arrange the area A based on a position of the object 30 when the object 30 is arranged in a virtual space, specifically, when the object 30 is newly arranged or when the object 30 is moved.

A specific example of the area A is as described below. The at least one arrangement target T may include only one of the areas A or may include a plurality of the areas A. A plurality of the areas A may include an object matching area Ao (see FIG. 8A), the work machine area A40, and another area A.

The other area A may be, for example, a work area A45, a second work machine area A50 illustrated in FIG. 9, an entry prohibited area A71, the cargo bed area A61a illustrated in FIG. 4D, or the determination target area A73 illustrated in FIG. 8C.

As illustrated in FIG. 8A, the object matching area Ao is a region that matches or substantially matches a region where the object 30 exists (region occupied by the object 30) in a virtual space. The object matching area Ao may be used for interference determination described later, for example. For example, when the work machine 40, which is an example of the object 30, is arranged at the work site S, the computer 13 may set a region matching a region where the work machine 40 exists as the object matching area Ao for the work machine 40. Note that the object 30 and the object matching area Ao are not necessarily distinguished from each other. That is, the computer 13 may process the object 30 and the object matching area Ao as one piece of information instead of processing them as separate pieces of information.

As illustrated in FIG. 1, the work machine area A40 is a region associated with a position of the work machine 40 in a virtual space. Processing of setting the work machine area A40 by the computer 13 may be referred to as a work machine area setting step. A position of the work machine 40 may be, for example, a work machine arrangement position P40c as illustrated in FIG. 4B.

In a case where the work machine 40 moves at the work site S in a virtual space, the computer 13 moves the work machine area A40 along with the movement of the work machine 40. Note that when the work machine 40 moves and the work machine area A40 moves, the computer 13 may set a region (track) through which the work machine area A40 passes as the new work machine area A40. The object matching area Ao (see FIG. 8A) for the work machine 40 is included in the work machine area A40.

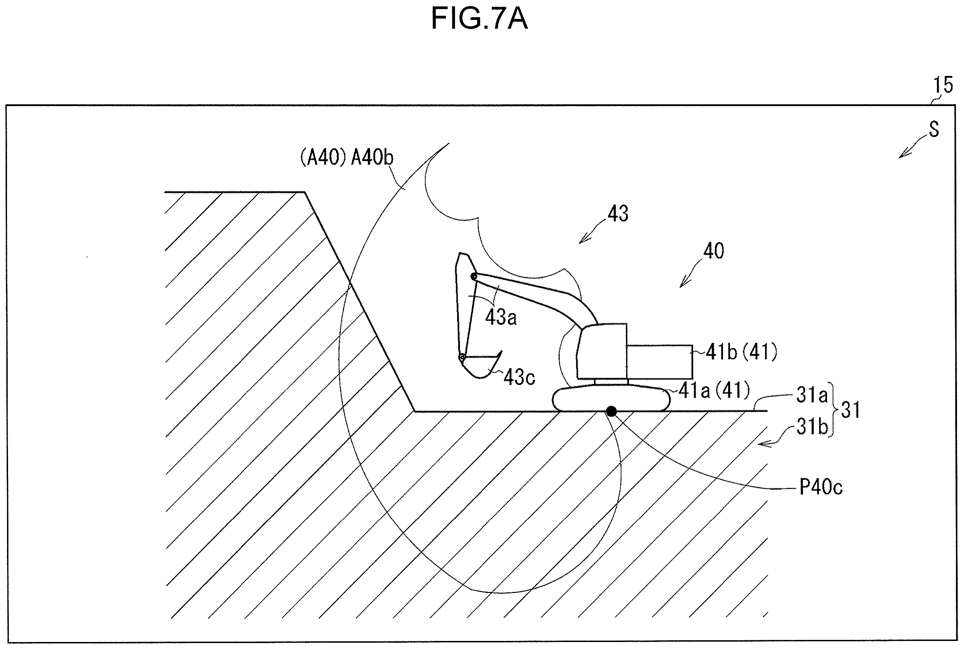

The work machine area A40 may be a work machine movable area A40a as illustrated in FIG. 3A or a workable area A40b as illustrated in FIG. 7A.

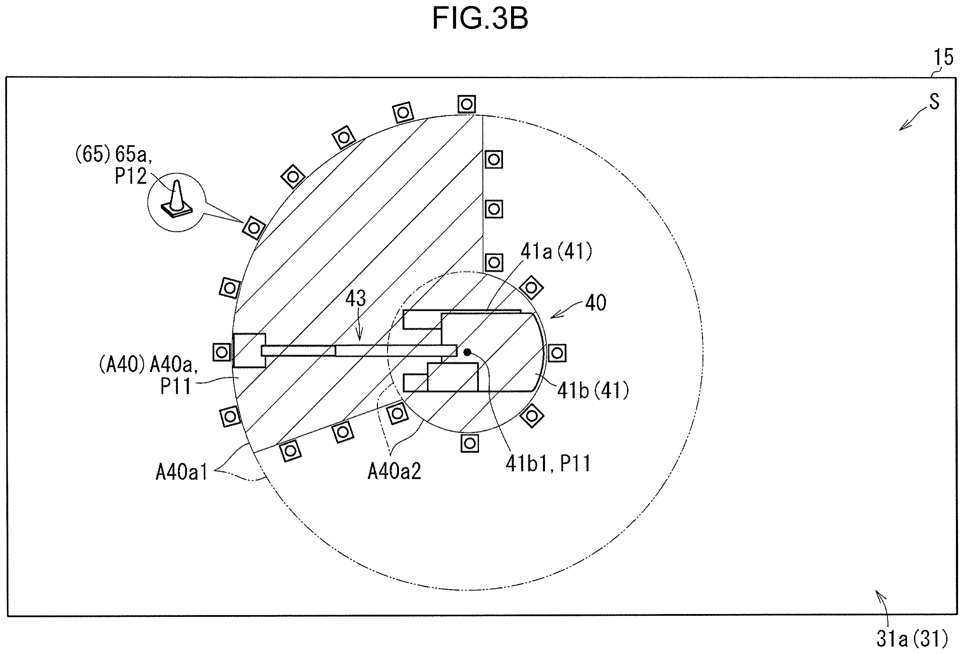

As illustrated in FIG. 3A, the computer 13 sets the work machine movable area A40a based on a range in which the work machine 40 is possibly arranged when the work machine 40 is operated. The work machine movable area A40a is used, for example, to check a separation distance between the work machine 40 and the object 30 around the work machine 40 (safety check). The computer 13 sets the work machine movable area A40a based on a range in which the work machine 40 is possibly arranged when the upper slewing body 41b slews with respect to the lower travelling body 41a without the work machine 40 travelling. Specifically, the computer 13 may set the work machine movable area A40a based on one or both of a maximum work radius of the attachment 43 and a rear end slewing radius of the upper slewing body 41b. In the specific example illustrated in FIG. 3B, the work machine movable area A40a includes a maximum work radius area A40al and a rear end radius area A40a2.

The computer 13 sets the maximum work radius area A40a1 based on a maximum work radius of the attachment 43. The "maximum work radius" is a maximum value of an attachment slewing radius which is a radius of the attachment 43 about the slewing center axis 41b1. Specifically, the "maximum work radius" is a horizontal distance from the slewing center axis 41b1 to a tip portion of the tip attachment 43c when the tip portion of the tip attachment 43c is arranged at a farthest position from the upper slewing body 41b (foremost position).

The maximum work radius area A40a1 may be circular when viewed from above as illustrated in FIG. 3A, or may be fan-shaped or substantially fan-shaped when viewed from above as illustrated in FIG. 3B. For example, in a case where a slewing angle of the upper slewing body 41b is limited, the maximum work radius area A40a1 may be fan-shaped or substantially fan-shaped when viewed from above. In the specific example illustrated in FIG. 3A, a radius of the maximum work radius area A40a1 coincides or substantially coincides with a maximum work radius. Note that a radius of the maximum work radius area A40a1 does not need to coincide with a maximum work radius, and may be larger than a maximum work radius, for example. Specifically, for example, a radius of the maximum work radius area A40a1 may have a value obtained by adding a predetermined value (margin) to a maximum work radius.

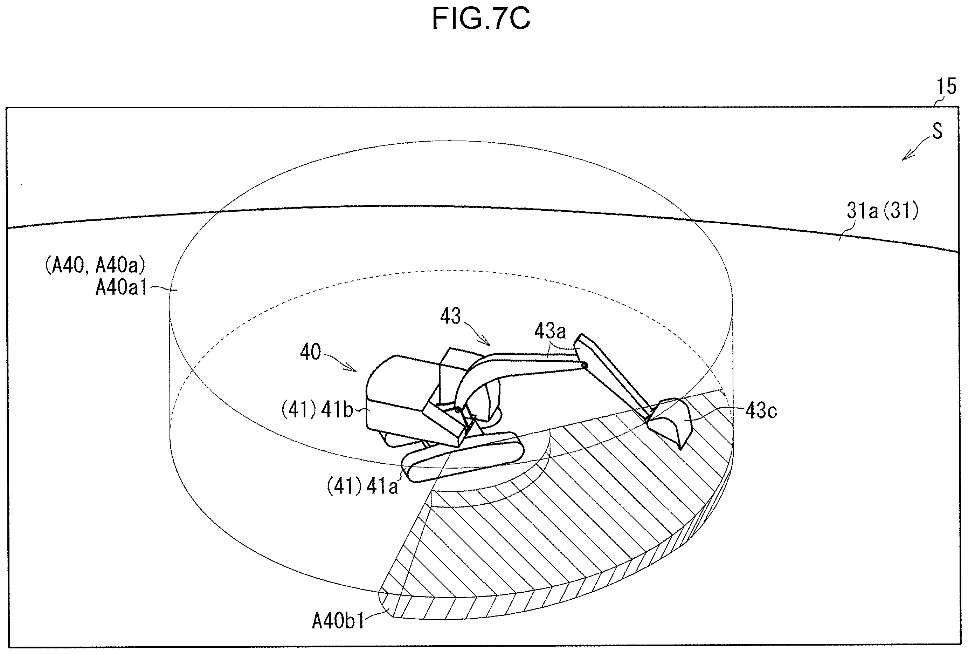

As illustrated in FIG. 7C, in a case where the maximum work radius area A40a1 has a three-dimensional shape, the maximum work radius area A40a1 may have a cylindrical shape having a predetermined height. Similarly, the rear end radius area A40a2 illustrated in FIG. 8B may have a cylindrical shape having a predetermined height. Further, the maximum work radius area A40a1 may have a three-dimensional shape having a fan-shaped or a substantially fan-shaped cross section and a predetermined height. Specifically, the maximum work radius area A40al may have a three-dimensional shape in which a bottom surface and a top surface are fan-shaped or substantially fan-shaped. Similarly, the rear end radius area A40a2 illustrated in FIG. 8B may have a three-dimensional shape having a predetermined height, in which a bottom surface and a top surface are fan-shaped or substantially fan-shaped.

In a case where the maximum work radius area A40a1 is fan-shaped or substantially fan-shaped when viewed from above, the computer 13 moves the maximum work radius area A40a1 in a slewing direction, that is, rotates the maximum work radius area A40a1 about the slewing center axis 41b1, along with slewing of the upper slewing body 41b. Similarly, in a case where the rear end radius area A40a2 is fan-shaped or substantially fan-shaped when viewed from above, the computer 13 moves the rear end radius area A40a2 in a slewing direction, that is, rotates the rear end radius area A40a2 about the slewing center axis 41b1, along with slewing of the upper slewing body 41b. Note that the computer 13 may set, as the new maximum work radius area A40a1, a region (track) through which the maximum work radius area A40a1 passes when the maximum work radius area A40a1 moves in a slewing direction. Similarly, the computer 13 may set, as the new rear end radius area A40a2, a region (track) through which the rear end radius area A40a2 passes when the rear end radius area A40a2 moves in a slewing direction.

As illustrated in FIG. 3B, the computer 13 sets the rear end radius area A40a2 based on a rear end slewing radius of the upper slewing body 41b. The "rear end slewing radius" is a horizontal distance from the slewing center axis 41b1 to a rear end portion of the upper slewing body 41b. The rear end radius area A40a2 may be circular when viewed from above and may be fan-shaped or substantially fan-shaped when viewed from above. For example, in a case where a slewing angle of the upper slewing body 41b is limited, the rear end radius area A40a2 may be fan-shaped or substantially fan-shaped when viewed from above. In the specific example illustrated in FIG. 3B, a radius of the rear end radius area A40a2 coincides or substantially coincides with a rear end slewing radius. Note that a radius of the rear end radius area A40a2 does not need to coincide with a rear end slewing radius, and may be larger than a rear end slewing radius, for example. Specifically, for example, a radius of the rear end radius area A40a2 may have a value obtained by adding a predetermined value (margin) to a rear end slewing radius.

The computer 13 may set the work machine movable area A40a based only on the maximum work radius area A40a1. The computer 13 may set the work machine movable area A40a based on the maximum work radius area A40al and the rear end radius area A40a2. For example, the computer 13 may set a region in which the maximum work radius area A40a1 and the rear end radius area A40a2 are overlapped as the work machine movable area A40a.

The computer 13 may set the work machine area A40 such that a shape of the work machine area A40 varies depending on use of the work machine area A40. The same applies to the area A other than the work machine area A40. For example, the computer 13 may set the area A based on a map in which a relationship between use of the area A and a shape of the area A is set in advance and use of the area A. The use of the work machine area A40 may be, for example, simple display or interference determination.

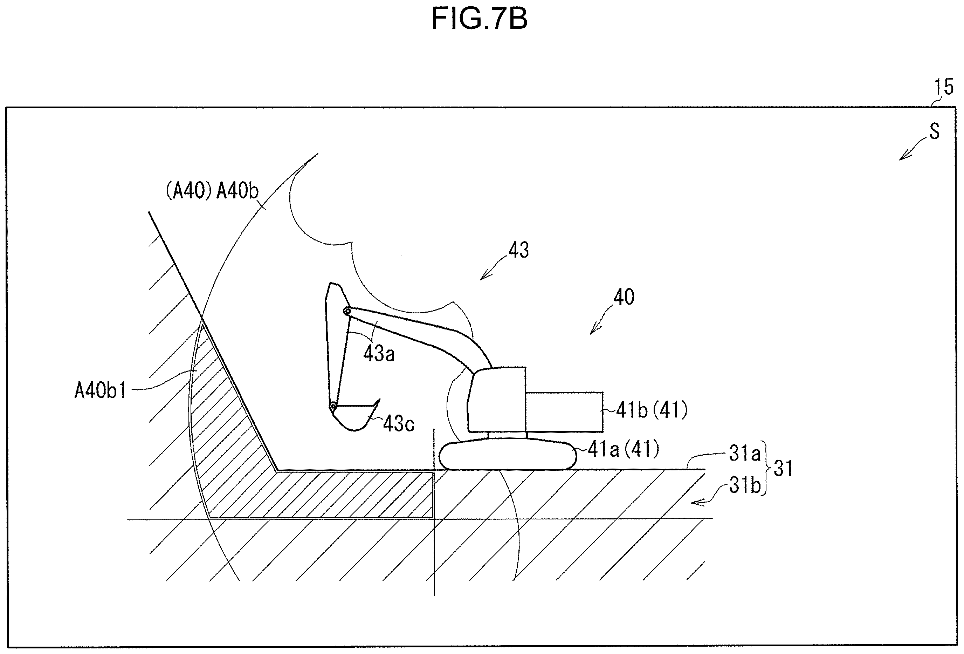

As illustrated in FIG. 7A, the workable area A40b may be used to check workability (productivity) of the work machine 40, for example. Details of the workable area A40b will be described later. The limited workable area A40b1 illustrated in FIG. 7B is a region limited to a part of the workable area A40b. Details of the limited workable area A40b1 will be described later.

As illustrated in FIG. 1, the work area A45 is a region where the work machine 40 performs work in a virtual space. The work area A45 may be referred to as a work range. For example, the work area A45 is a region where work by the work machine 40 is scheduled. The computer 13 may set the work area A45 based on, for example, information such as a construction plan input from the information input device 11b to the computer 13. For example, information such as a construction plan may be input to the input device 11 by manual operation by the user, and the computer 13 may set the work area A based on the information input to the input device 11.

As illustrated in FIG. 9, the second work machine area A50 is a region associated with a position of the second work machine 50 in a virtual space. A position of the second work machine area A50 may be a work machine setting position similar to the work machine arrangement position P40c as a position of the work machine 40. The second work machine area A50 may be a work machine movable area similar to the work machine movable area A40a of the work machine area A40 illustrated in FIG. 3A, or may be a workable area similar to the workable area A40b of the work machine area A40 illustrated in FIG. 7A.

As illustrated in FIG. 4D, the cargo bed area A61a is an area set inside the cargo bed 61a in a virtual space. In a case where the work machine 40 performs work on the cargo bed 61a, the cargo bed area A61a may be the work area A45. The computer 13 may set whether or not the work machine 40 performs work on the cargo bed 61a based on selection by the user given to the input device 11.

As illustrated in FIG. 8C, the entry prohibited area A71 is a region where the work machine 40 cannot enter in a virtual space. The entry prohibited area A71 may be referred to as a restricted area. The computer 13 may set the entry prohibited area A71 based on a position of the object 30. For example, the computer 13 may set the entry prohibited area A71 based on a position of the obstacle 63. The computer 13 may set the entry prohibited area A71 based on a position of the path 65e such as a safety passage or a road. The computer 13 may set the entry prohibited area A71 based on a position of a material yard such as a stock yard (not illustrated). The computer 13 may set the entry prohibited area A71 based on the terrain 31. Specifically, for example, the computer 13 may set the entry prohibited area A71 in a ground unstable portion such as a slope shoulder. The computer 13 may set the entry prohibited area A71 based on information given to the input device 11 by manual operation by the user.

The determination target area A73 is a region to be subjected to interference determination in a virtual space. A step of setting the determination target area A73 and interference determination will be described later.

### [Operation mode switching function]

The work simulator 1 has an operation mode switching function. The work simulator 1 may be configured to be able to set any operation mode among a plurality of operation modes as a mode of the work simulator 1.

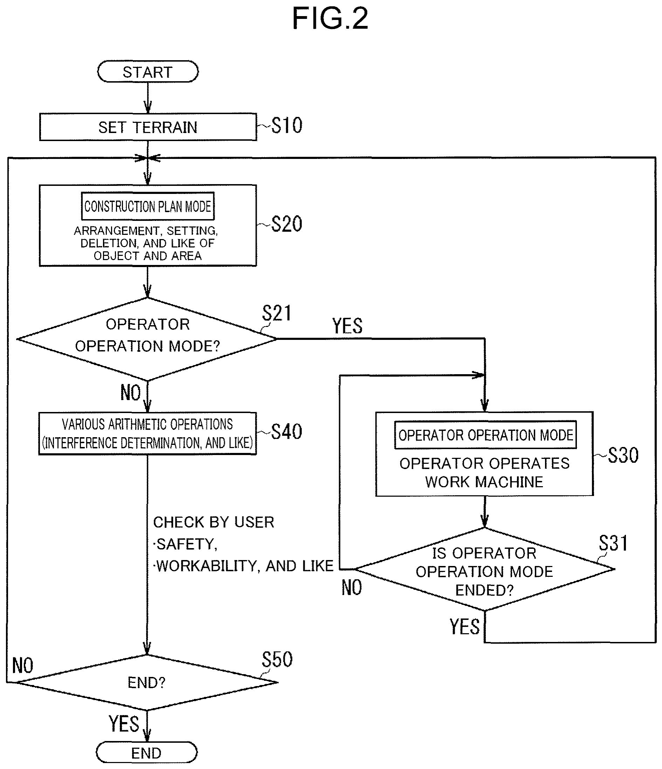

A function for each of a plurality of operation modes may be set in the computer 13 illustrated in FIG. 1. The computer 13 may switch start and end of control for each of a plurality of operation modes. In the present embodiment, a plurality of operation modes include a construction plan mode illustrated in Step S20 of FIG. 2 and an operator operation mode illustrated in Step S30 of FIG. 2. Note that a function for an operation mode other than these may be set in the computer 13.

The construction plan mode illustrated in Step S20 of FIG. 2 is an operation mode for performing a construction plan. In Step S20, the computer 13 sets a mode of the work simulator 1 to the construction plan mode and performs arithmetic processing for a construction plan.

For example, in the construction plan mode, the computer 13 may cause the output device 15 to display an image of the work site S in a virtual space. In the specific example illustrated in FIG. 1, the computer 13 causes the output device 15 to display an overhead image of the work site S. For example, in the construction plan mode, the computer 13 may perform processing such as arrangement of the object 30, deletion of the object 30, arrangement of the area A, and deletion of the area A according to manual operation given to the input device 11 by the user. In the construction plan mode, the computer 13 may automatically perform processing such as arrangement of the object 30, deletion of the object 30, arrangement of the area A, and deletion of the area A based on a construction plan mode program for the construction plan mode stored in advance in the storage unit 13a. The work simulation program may include a construction plan mode program.

The operator operation mode illustrated in Step S30 of FIG. 2 is an operation mode in which an operator can steer the work machine 40 simulating an actual work machine in a virtual space. In Step S30, the computer 13 sets a mode of the work simulator 1 to the operator operation mode and performs arithmetic processing for the operator operation mode.

For example, in the operator operation mode, the computer 13 operates the work machine 40 in a virtual space in accordance with manual operation by the user given to the operation input device 11a. That is, the computer 13 outputs a command corresponding to manual operation by the user to the output device 15, and the output device 15 displays movement of the work machine 40 corresponding to the manual operation by the user. Specifically, for example, in a case where the user's manual operation is travelling operation corresponding to travelling of the lower travelling body 41a, the computer 13 outputs a command corresponding to the travelling operation to the output device 15, and the output device 15 displays movement of the lower travelling body 41a travelling. In a case where user's manual operation is a posture changing operation of changing a posture of the attachment 43 or a posture of the upper slewing body 41b, the computer 13 outputs a command according to the posture changing operation to the output device 15, and the output device 15 displays movement of changing a posture of the attachment 43 or the upper slewing body 41b. A change in a posture of the attachment 43 may be a change in a posture of the boom 43a1 illustrated in FIG. 4B, a change in a posture of the arm 43a2, or a change in a posture of the tip attachment 43c.

In the operator operation mode, the computer 13 may change a state of the work site S according to operation of the work machine 40 in a virtual space. A state of the work site S includes a state of a work object which is an example of the object 30. The work object may be, for example, earth and sand forming the terrain 31, or may be the suspended load 62 illustrated in FIG. 4D. The computer 13 may deform the terrain 31 according to progress of work such as excavation work and leveling work performed by the work machine 40 in a virtual space. The computer 13 may move the suspended load 62 in accordance with progress of lifting work performed by the work machine 40 in a virtual space.

The operator operation mode may be used for storage (teaching) of operation of the work machine 40. The teaching is performed as described below. The user operates the work machine 40 in a virtual space by giving manual operation to the operation input device 11a while viewing the work machine 40 displayed on the output device 15, and the computer 13 stores teaching data which is data regarding the operation of the work machine 40. After that, the computer 13 may operate the work machine 40 based on the stored teaching data.

The computer 13 may have various functions other than the above. A specific example of the functions is as described below.

The computer 13 may have a time change function that is a function of simulating a change in the work site S as time elapses. That is, the computer 13 may perform a time change step of simulating a change in the work site S as time elapses. For example, the object 30 and the area A may change according to a predetermined step or a lapse of time in a work simulation.

The computer 13 has an arrangement assisting function that assists arrangement of the arrangement target T. The computer 13 may perform an arrangement assisting step for realizing an arrangement assisting function. The work simulator 1 may have a site construction support tool for realizing an arrangement assisting function. Details of the arrangement assisting function will be described later.

The computer 13 has an interference determination function that is a function of determining interference between the areas A. The computer 13 may perform the interference determination step for realizing the interference determination function. Details of the interference determination function will be described later. The interference determination function may be included in the arrangement assisting function.

### [Specific example of processing by computer]

The computer 13 can perform various pieces of processing in various orders. An example of flow of processing of the computer 13 will be described with reference to FIG. 2. A specific example of the arithmetic processing illustrated in FIG. 2 includes processing of Steps S10 to S50.

In Step S10, the computer 13 illustrated in FIG. 1 sets the terrain 31, which is an example of the object 30, in a virtual space. That is, the computer 13 arranges the terrain 31 in a virtual space. For example, the computer 13 reads information of the terrain 31 from the information input device 11b. Further, the computer 13 may set the terrain 31 in a virtual space based on information input by the user to the input device 11. The computer 13 may store information of the terrain 31 set in advance.

In Step S20, the computer 13 sets a mode of the work simulator 1 to the construction plan mode and starts control of the construction plan mode. In the construction plan mode, the object processing unit 13b1 arranges and deletes the object 30. In the construction plan mode, the area processing unit 13b2 arranges (sets) and deletes the area A. The computer 13 may perform arrangement of the object 30, deletion of the object 30, arrangement of the area A, and deletion of the area A based on, for example, information input to the input device 11 by the user, or based on information stored in the storage unit 13a in advance.

In Step S21, the computer 13 determines whether or not to start control for the operator operation mode. Specifically, the computer 13 determines whether or not an operator operation mode start condition, which is a condition for starting control regarding the operator operation mode, is satisfied. For example, the operator operation mode start condition may be that start of the operator operation mode is selected by user's manual operation (for example, operation on a GUI). In a case where the operator operation mode start condition is satisfied (YES in Step S21), the computer 13 performs processing of Step S30. In a case where the operator operation mode start condition is not satisfied (NO in Step S21), the computer 13 performs processing of Step S40 without starting control for the operator operation mode.

In Step S30, the computer 13 sets a mode of the work simulator 1 to the operator operation mode and starts control for the operator operation mode. In the operator operation mode, the user can operate the work machine 40 by manual operation in a virtual space constructed in the work simulator 1. By this, the user can check workability of the work machine 40 in a virtual space.

In Step S31, the computer 13 determines whether or not to end the operator operation mode. Specifically, the computer 13 determines whether or not an operator operation mode end condition, which is a condition for ending the operator operation mode, is satisfied. For example, the operator operation mode end condition may be that end of the operator operation mode is selected by manual operation (for example, operation on a GUI) of the user. In a case where the operator operation mode end condition is not satisfied (NO in Step S31), the computer 13 continues control for the operator operation mode in Step S30. In a case where the operator operation mode end condition is satisfied (YES in Step S31), the computer 13 ends the operator operation mode, sets a mode of the work simulator 1 to the construction plan mode in Step S20, and performs processing in and after Step S20.

When ending the operator operation mode, the computer 13 may store a situation of the work site S changed in the operator operation mode (for example, a shape of the ground surface 31a after the change) in the storage unit 13a. The computer 13 may set the work site S in the construction plan mode as the stored work site S when the mode of the work simulator 1 is changed from the operator operation mode to the construction plan mode. In other words, the computer 13 may transfer a change in a situation of the work site S in the operator operation mode to the construction plan mode. However, when a mode of the work simulator 1 is changed from the operator operation mode to the construction plan mode, the computer 13 may set the work site S in the construction plan mode as the work site S at a start time point of the operator operation mode (for example, the operator operation mode immediately before). In other words, the computer 13 does not need to transfer a change in a situation of the work site S in the operator operation mode to the construction plan mode. The computer 13 may prompt the user to select whether or not to transfer a change in a situation of the work site S in the operator operation mode to the construction plan mode.

In Step S40, the computer 13 performs various arithmetic operations. For example, the computer 13 performs arithmetic operation of various events at the work site S. In Step S40, the computer 13 may perform arithmetic operation regarding safety at the work site S. The computer 13 may perform, for example, interference determination described later as arithmetic operation regarding safety. In Step S40, the computer 13 may calculate workability (productivity) of work by the work machine 40. The computer 13 may output a result of the interference determination to the output device 15, or may output an arithmetic operation result of the workability (the productivity) to the output device 15. By this, the user can check safety at the work site S and workability of the work machine 40.

In Step S50, the computer 13 determines whether or not to end the work simulation. Specifically, the computer 13 determines whether or not the work simulation end condition, which is a condition for ending a work simulation, is satisfied. For example, the work simulation end condition may be that end of a work simulation is selected by user's manual operation (for example, operation on a GUI). In a case where the work simulation end condition is satisfied (YES in Step S50), the computer 13 ends the work simulation. In a case where the work simulation end condition is not satisfied (NO in Step S50), the computer 13 continues the work simulation. In this case, the computer 13 performs processing in and after Step S20 again.

### [Specific example of position setting by manual operation]

A position of the arrangement target T in a virtual space can be set or designated by manual operation by the user. That is, the computer 13 can set each of a position of the object 30 in a virtual space and a position of the area A in a virtual space based on manual operation by the user. A specific example of a method of setting a position by manual operation is as described below.

The computer 13 may set a position of the arrangement target T in a virtual space based on a numerical value input by the user to the input device 11. The numerical value may be, for example, a numerical value that designates a coordinate and/or a direction representing a position of the arrangement target T. The numerical value designating a direction may be, for example, a rotation angle with respect to a predetermined coordinate axis.

The computer 1 3 may set a position of the arrangement target T in a virtual space based on operation such as mouse operation or touch operation by the user. Specifically, for example, when the user moves a mouse pointer, a position on the ground surface 31a is selected as the mouse pointer moves. When the user clicks a mouse, a position on the ground surface 31a is set. In a state where a position on the ground surface 31a is set, the user moves (for example, drags) a mouse pointer upward or downward and clicks at a desired height, so that a position above or below the ground surface 31a is set. The user moves (for example, drags) a mouse pointer and clicks in a desired direction in a state where a mode of setting a direction is set by operation on a GUI or the like, so that a direction is set. Note that the above-described method of setting a position by manual operation is merely an example, and a position may be set by various methods.

### [Specific example of arrangement assisting function]

The computer 13 has a function of assisting arrangement of the arrangement target T in a virtual space. The arrangement target T is at least one of the object 30 and the area A. That is, the arrangement target T may be the object 30, the area A, or both the object 30 and the area A.

For example, as illustrated in [Example A] below, the computer 13 may calculate a position of the arrangement target T. The computer 13 may automatically arrange the arrangement target T at the calculated position of the arrangement target T, or may cause the output device 15 to output a candidate for a position of the arrangement target T. As illustrated in [Example B], [Example C], [Example D], and [Example E] below, the computer 13 may calculate information useful for arrangement of the arrangement target T.

Hereinafter, a specific example of the arrangement assisting function will be described. Note that, as described above, the input device 11, the computer 13, and a constituent element of these (such as the storage unit 13a) will be described with reference to FIG. 1. Further, the object 30, the area A, and the arrangement target T will also be described with reference to FIG. 1.

### [Example A] Calculate position of arrangement target T

As described above, in the work simulator 1, the computer 13 may set a position of the at least one arrangement target T (the object 30 and/or the area A) by manual operation by the user. However, in a case where user's manual operation is required for all settings of a position of the arrangement target T, setting work requires time and effort.

In view of the above, the computer 13 preferably calculates (automatically calculates) a position of the arrangement target T as described below, for example.

In a case where the at least one arrangement target T includes the first arrangement target T and the second arrangement target T, a position of the first arrangement target T at the work site S is set, and a position of the second arrangement target T at the work site S is not set, the computer 13 preferably sets a position of the second arrangement target T based on a position of the first arrangement target T.

In a case where the at least one arrangement target T includes the work machine 40, a position of a first specific portion of the work machine 40 at the work site S is set, and a position of a second specific portion of the work machine 40 at the work site S is not set, the computer 13 may set a position of the second specific portion based on a position of the first specific portion. Specifically, for example, a position of the first specific portion is a work position P43c which is a position of the tip attachment 43c when the work machine 40 works, the work machine arrangement position P40c which is a position where the machine body 41 is arranged at the work site S is set, the second specific portion is the base end side attachment 43a, and the computer 13 may set a position of the base end side attachment 43a based on the work position P43c and the work machine arrangement position P40c.

Hereinafter, description will be made based on a specific example such as FIG. 3A more specifically.

The computer 13 calculates an unset position P12 based on a set position P11 illustrated in FIG. 3A. The set position P11 is a position of the arrangement target T whose position is already set. The unset position P12 is a position of the arrangement target T whose position is not set.

For example, the computer 13 may output the calculated unset position P12 to the output device 15 as a candidate for a position of the arrangement target T, and the output device 15 may display a candidate for a position of the arrangement target T. By this, the user can select a candidate for a position of the arrangement target T. In a case where a candidate for a position of the arrangement target T is selected by the user, the computer 13 may set the selected candidate as a position of the arrangement target T and arrange the arrangement target T at the set position. Further, for example, the computer 13 may automatically arrange the arrangement target T at the calculated unset position P12. By the computer 13 calculating a position of the arrangement target T, it is possible to suppress an increase in time and effort required for work of arranging the arrangement target T by manual operation by the user.

Positions of various types of the arrangement targets T may be the set position P11 and the unset position P12. A specific example of the set position P11 and the unset position P12 is as described below.

The set position P11 may be a position of at least a part of the work machine 40. For example, the set position P11 may be a position of the work machine area A40 associated with a position of the work machine 40, and the unset position P12 may be a position of the arrangement target T different from the work machine 40, for example, as illustrated in [Example A1] below. As illustrated in FIG. 4B, the set position P11 may be a position of a part of the work machine 40 as the object 30, and the unset position P12 may be a position of a portion of the work machine 40 different from a portion corresponding to the set position P11, for example, as illustrated in [Example A2] below. Note that the set position P11 and the unset position P12 may be positions of the arrangement target T different from the work machine 40.

### [Example A1] Example of calculating position of arrangement target T different from work machine 40

For example, as illustrated in FIG. 3A, the set position P11 may be a position of the work machine area A40. Specifically, the set position P11 may be a position of the work machine movable area A40a. The unset position P12 may be a position of the arrangement target T different from the work machine 40. The computer 13 may calculate a position of the arrangement target T different from the work machine 40 based on a position of the work machine area A40 (for example, the work machine movable area A40a).

Here, the computer 13 may set a shape and size of the work machine area A40 according to specifications such as a type and size of the work machine 40. In this example, the computer 13 calculates a position of the arrangement target T different from the work machine 40 based on the work machine area A40. Therefore, the computer 13 can calculate an appropriate position according to specifications such as a type and size of the work machine 40 as a position of the arrangement target T different from the work machine 40.

The "arrangement target T different from the work machine 40" which is at the unset position P12 may be the object 30 or the area A. In the example illustrated in FIG. 3A, the "arrangement target T different from the work machine 40" is the equipment 65 and is the partition tool 65a (for example, a traffic cone). The "arrangement target T different from the work machine 40" may be the second work machine 50 as illustrated in FIG. 9, the transport vehicle 61 as illustrated in FIG. 4D, or the obstacle 63 as illustrated in FIG. 1. The "arrangement target T different from the work machine 40" may be the area A, for example, the second work machine area A50 as illustrated in FIG. 9, the work area A45 as illustrated in FIG. 1, or the entry prohibited area A71 as illustrated in FIG. 1.

A specific example of the unset position P12 (a position of the partition tool 65a in the example illustrated in FIG. 3A) calculated by the computer 13 is as described below. The computer 13 calculates the unset position P12 based on the work machine movable area A40a. For example, the computer 13 sets the unset position P12 outside the work machine movable area A40a (a side far from the work machine 40). The computer 13 may set the unset position P12 at a position located outward from the work machine movable area A40a by a predetermined distance. The predetermined distance may be a margin (for example, 1 m). The computer 13 may set the unset position P12 at a position along an outer periphery of the work machine movable area A40a. The computer 13 may set the unset position P12 at a position along a tangent of an arc-shaped portion of the work machine movable area A40a. This tangent is indicated by a two-dot chain line in FIG. 3A. The number of the tangents may be one or more.

The computer 13 may change the work machine area A40 used to calculate the unset position P12 according to a type of the arrangement target T (for example, the partition tool 65a or the like) for which the unset position P12 is to be calculated. For example, as illustrated in FIG. 3B, the computer 13 may combine the maximum work radius area A40a1 and the rear end radius area A40a2 in various ways according to a type of the arrangement target T for which the unset position P12 is to be calculated. At this time, for the maximum work radius area A40a1, a slewing angle may be limited or may not be limited. In the example illustrated in FIG. 3B, the work machine area A40 used for calculation of the unset position P12 is the hatched work machine movable area A40a.

In a case where a plurality of the unset positions P12 (a plurality of the partition tools 65a in the diagram) are calculated, a plurality of the unset positions P12 are calculated as described below, for example. Note that, in FIGS. 3A and 3B, only one of a plurality of the unset positions P12 (a plurality of the partition tools 65a) is denoted by a reference sign. As illustrated in FIG. 3B, the computer 13 may set a plurality of the unset positions P12 at intervals. The interval may be set in various ways. Specifically, the interval may be a set value manually set by the user or may be a set value preset in the computer 13. The computer 13 may calculate a plurality of the unset positions P12 such that the intervals are equal or substantially equal.

### [Example A2] Example of calculating posture of work machine 40

For example, as illustrated in FIG. 4B, the set position P11 may be a position of a part of the work machine 40 as the object 30. The unset position P12 may be a position of a portion of the work machine 40 different from the set position P11. The computer 13 may calculate a position of a portion of the work machine 40 different from the set position P11 based on a position of a part of the work machine 40.

Here, a position of the work machine 40 (a posture of the work machine 40) is determined by a position of the lower travelling body 41a (for example, the work machine arrangement position P40c), a slewing angle of the upper slewing body 41b with respect to the lower travelling body 41a, and a posture of the attachment 43. A posture of the attachment 43 is determined by an angle of the boom 43a1 with respect to the upper slewing body 41b, an angle of the arm 43a2 with respect to the boom 43a1, and an angle of the tip attachment 43c with respect to the arm 43a2. In a case where the user sets all positions of units of the work machine 40 based on manual operation, setting work requires time and effort.

In view of the above, in a case where a position (the set position P11) of a part of the work machine 40 is set, the computer 13 preferably calculates a position (the unset position P12) of a portion of the work machine 40 different from the set position P11 based on the set position P11. In this case, it is possible to suppress an increase in time and effort required for work of setting a position of each unit of the work machine 40.

### [Example A2-1] Calculation of posture of work machine 40 based on work machine arrangement position P40c

For example, as illustrated in FIG. 4B, the set position P11 may be the work machine arrangement position P40c. The unset position P12 may be a position of another portion of the work machine 40 or a posture of the work machine 40. In this example, the computer 13 calculates a posture of the work machine 40 based on the work machine arrangement position P40c and a preset posture (described later).

The work machine arrangement position P40c (set position P11) is a position where the lower travelling body 41a is arranged. For example, the work machine arrangement position P40c is a position of the work machine lower surface center point 41ac as illustrated in FIG. 10A.

A calculated posture of the work machine 40 (calculated unset position P12) may be a posture of the attachment 43, and specifically, may be positions (angles) of the boom 43a1, the arm 43a2, and the tip attachment 43c. The calculated posture of the work machine 40 may be a slewing angle of the upper slewing body 41b with respect to the lower travelling body 41a.

The "preset posture" is a posture of the work machine 40 set in advance in the computer 13. Various postures of the work machine 40 may be set as the preset postures. Further, a parameter regarding the preset posture may be set by manual operation by the user.

A specific example of the preset posture is as described below. The preset posture may be a maximum reach posture. The maximum reach posture is a posture of the work machine 40 when a radius ("attachment slewing radius") of the attachment 43 around the slewing center axis 41b1 is maximized. The preset posture may be a minimum slewing radius posture (not illustrated). The minimum slewing radius posture is a posture of the work machine 40 when the attachment slewing radius is minimized. The preset posture may be a travelling posture (not illustrated). The travelling posture is a posture of the work machine 40 when the work machine 40 travels. Specifically, the travelling posture is a posture in which the arm 43a2 and the tip attachment 43c illustrated in FIG. 4B are brought close to the boom 43a1.

As illustrated in FIG. 4D, the preset posture may be a lifting posture (crane work posture). The lifting posture is a posture of the work machine 40 when the work machine 40 performs work of lifting the suspended load 62. Specifically, the lifting posture is a posture in which work using the hook 43cf can be performed in a posture in which a tip portion of the tip attachment 43c is brought close to the arm 43a2. A parameter of the lifting posture may be set by the user. For example, a lifting height (height of the hook 43cf) in the lifting posture may be set. The lifting height may be a height from a lower surface of the work machine 40, a height from the suspended load 62, or a height from a position (for example, the cargo bed 61a) where the suspended load 62 is placed. For example, a work radius in the lifting posture may be set. A parameter of the lifting posture may be set in the computer 13 based on the suspended load 62. For example, a parameter of the lifting posture may be set in the computer 13 in advance in association with the suspended load 62. In this case, the computer 13 may read and set a parameter of the lifting posture associated with the suspended load 62 when the suspended load 62 to be lifted is selected. For example, a parameter of the lifting posture may be calculated by the computer 13 based on a state of the suspended load 62. A state of the suspended load 62 may be, for example, mass, volume, and/or a shape of the suspended load 62.

The preset posture may be a loading posture. The loading posture is a posture of the work machine 40 when the work machine 40 loads a work object (earth and sand or the like) onto the transport vehicle 61 or the like. A parameter of the loading posture may be set by the user. For example, a loading height (height of the tip attachment 43c) in the loading posture may be set. The loading height may be a height from a lower surface of the work machine 40, or may be a height from a loading position (for example, the cargo bed 61a). Further, for example, a work radius in the loading posture may be set. A parameter of the loading posture may be set in the computer 13 based on a target onto which a work object is loaded (for example, the transport vehicle 61). Hereinafter, a case where the "target onto which a work object is loaded" is the transport vehicle 61 will be described. For example, a parameter of the loading posture may be preset in the computer 13 in association with the transport vehicle 61. In this case, the computer 13 may read and set a parameter of the loading posture associated with the transport vehicle 61 when the transport vehicle 61 onto which a work object is loaded is selected. For example, a parameter of the loading posture may be calculated by the computer 13 based on a state of the transport vehicle 61. A state of the transport vehicle 61 may be, for example, size, height and/or shape of the cargo bed 61a.

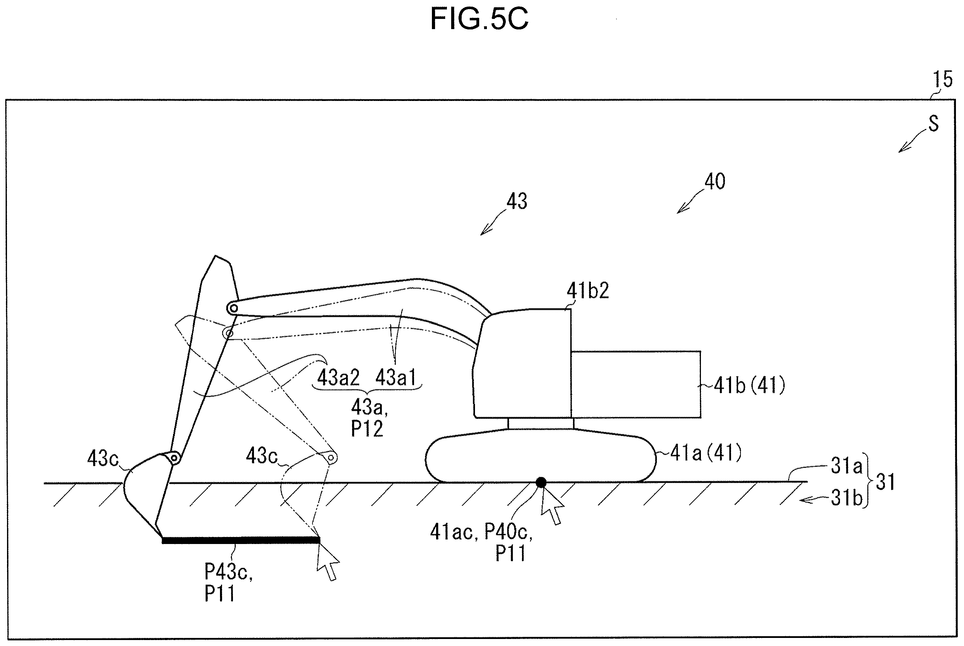

The preset posture may be an excavation posture illustrated in FIG. 5C. The excavation posture is a posture of the work machine 40 when the work machine 40 excavates a work object. A parameter of the excavation posture may be set by the user. For example, excavation height in the excavation posture may be set. The excavation height may be a height from a lower surface of the work machine 40 to the upper side, or may be a height (depth) from a lower surface of the work machine 40 to the lower side. Further, a work radius in the excavation posture may be set. An angle of the tip attachment 43c (specifically, a bucket) in the excavation posture may be set by the user, or may be automatically set by the computer 13 according to an angle of the ground surface 31a to be excavated.

The preset posture may be a slope cutting posture as illustrated in FIG. 4B. The slope cutting posture is a posture of the work machine 40 when the work machine 40 moves the tip attachment 43c (specifically, a bucket) along a slope face which is the inclined ground surface 31a. A parameter of the slope cutting posture may be set by the user. For example, excavation depth (for example, depth from a slope face) in the slope cutting posture may be set. An angle of the tip attachment 43c (specifically, a bucket) in the slope cutting posture may be set by the user, or may be automatically set by the computer 13 according to an angle of a slope face (the ground surface 31a).

A specific example of operation by the user in [Example A2-1] is as described below. The user sets the work machine arrangement position P40c illustrated in FIG. 3A. For example, the user moves a mouse cursor to a position to be set as the work machine arrangement position P40c and clicks. The user selects one preset posture from a plurality of preset posture options. The user may set a parameter regarding the preset posture. By this, a posture of the work machine 40 is set to the selected preset posture. A posture of the work machine 40 may be adjustable from the preset posture to a desired posture of the user. For example, in a state where a portion of the attachment 43 is fixed, a posture (angle) of another portion of the attachment 43 may be adjustable by user's operation.

### [Example A2-2] Calculation of posture of work machine 40 based on work position P43c and work machine arrangement position P40c

For example, as illustrated in FIG. 4B, the set position P11 may be the work position P43c and the work machine arrangement position P40c. The unset position P12 may be a position of the base end side attachment 43a. The computer 13 may calculate a position of the base end side attachment 43a based on the work position P43c and the work machine arrangement position P40c.

The work position P43c is a position of a part of the tip attachment 43c when the work machine 40 works. The work position P43c varies depending on a type of the tip attachment 43c and a type of work performed by the tip attachment 43c (the work machine 40). At least one of a type of the tip attachment 43c and a type of work performed by the tip attachment 43c may be selected by the user, or may be automatically selected by the computer 13.

For example, in a case where the tip attachment 43c is a bucket and the work machine 40 performs excavation, compaction, or the like, the work position P43c may be a tip (leading end) of the tip attachment 43c (bucket). Further, for example, as illustrated in FIG. 4C, when the tip attachment 43c is a bucket and the work machine 40 performs earth discharge, the work position P43c may be a central portion of an internal region of the tip attachment 43c (bucket). Note that a posture of the work machine 40 illustrated in FIG. 4C may be a posture in which earth discharge is performed or a posture before excavation is performed. Further, for example, in a case where the tip attachment 43c is a device (not illustrated) that grips a work object, the work position P43c may be a position for gripping a work object. Further, for example, as illustrated in FIG. 4D, in a case where lifting work is performed with the hook 43cf, the work position P43c is a position of the hook 43cf, and may be, for example, a position (lifting position) where a rope is hung on the hook 43cf.

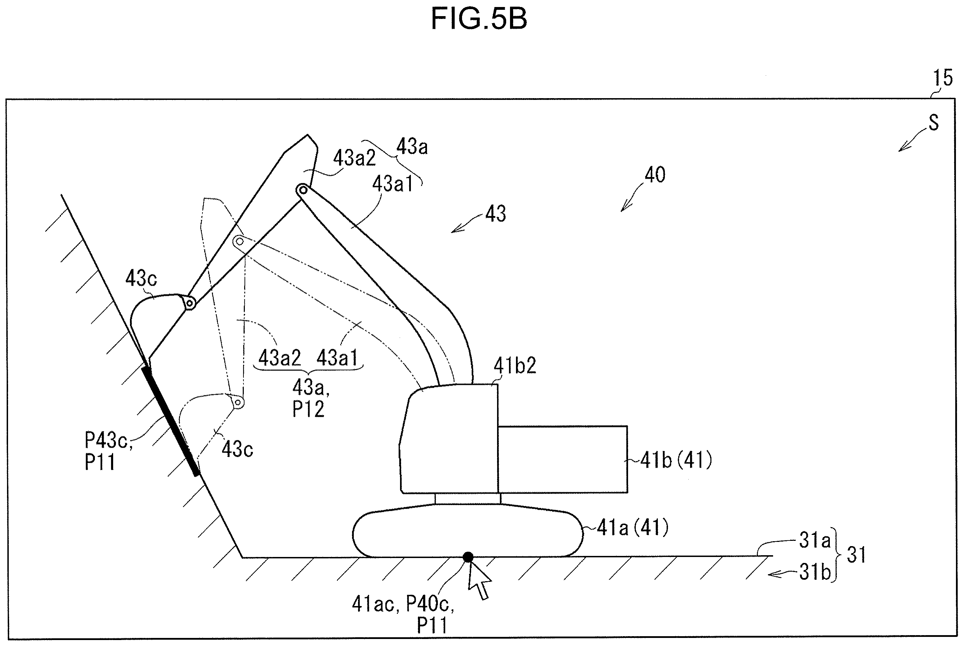

As illustrated in FIG. 4B, the work position P43c may be a point (work point). The work position P43c may be one point or a plurality of points. As illustrated in FIG. 5B, the work position P43c may be a line (work line). The work line may include a straight line or a curve. The work position P43c may be a surface (work surface) (not illustrated). The work surface may include a flat surface or a curved surface. The work position P43c may have a three-dimensional shape (working three-dimensional body) (not illustrated).

The work position P43c is set as described below, for example. The computer 13 may set the work position P43c based on manual operation by the user. The work position P43c may be set by use of a setting auxiliary function to be described later. The work position P43c may be automatically set by the computer 13.

A specific example of a case where the computer 13 sets the work position P43c based on manual operation by the user is as described below.

As illustrated in FIG. 4A, in a case where the work position P43c is a point (work point), the user may designate a position to be set as a work point, and the computer 13 may set the designated position as the work position P43c. For example, the user may move a mouse cursor to a position to be set as the work position P43c and click to designate the position, and the computer 13 may set the designated position as the work position P43c.

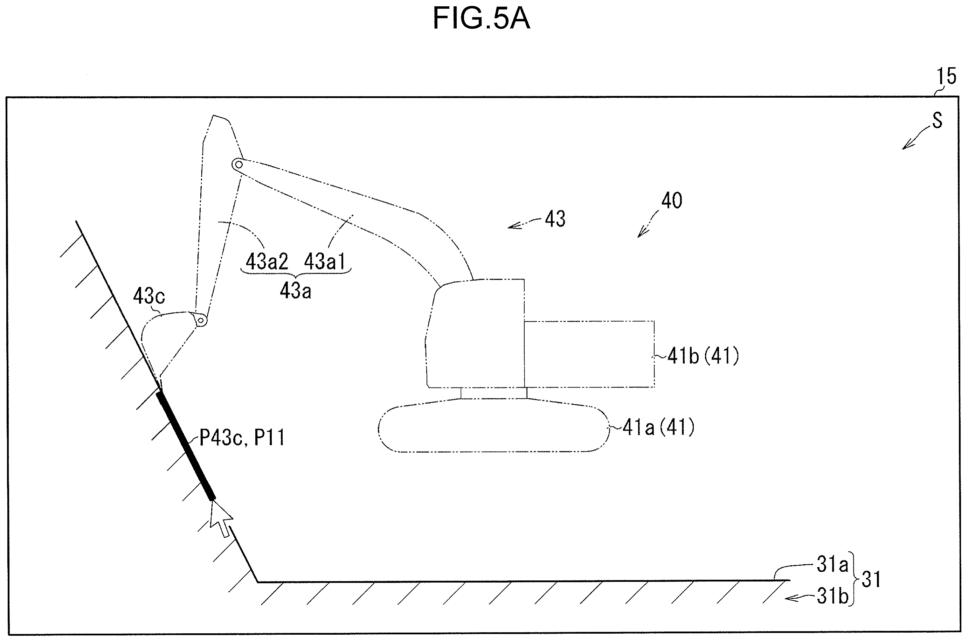

As illustrated in FIG. 5A, a specific example of a method of setting the work position P43c in a case where the work position P43c is a line (work line) is as described below. Both ends (work start point and work end point) of a work line may be designated by the user for the work position P43c as a work line, and the computer 13 may set the work position P43c based on positions of the both ends that are designated. The work position P43c, which is a work line, may be set by the user designating an end of a work line (For example, a work start point), an angle of a work line, and a length of a work line. The work position P43c which is a work line may be set so as to pass through a via point (intermediate point) designated by the user. The work position P43c, which is a work line, may include a curve (for example, a spline curve or the like) calculated based on a plurality of points. The work position P43c which is a work line may be set by, for example, a line drawn by the user dragging a mouse.

In a case where the work position P43c is a surface (work surface) (not illustrated), for example, a position of an outer periphery of a work surface (a point, a line, or the like on the outer periphery) may be designated by the user, and the computer 13 may set the work position P43c based on the designated position of the outer periphery. A method of setting a point, a line, or the like on an outer periphery may be, for example, the same as the method of setting a work point or a work line described above. In a case where the work position P43c is a three-dimensional body (work three-dimensional body) (not illustrated), for example, a lower surface and an upper surface of the work three-dimensional body may be designated by the user, and the computer 13 may set the work position P43c based on the designated lower surface and upper surface. The method of setting a lower surface and an upper surface of a work three-dimensional body may be, for example, the same as the method of setting a work surface described above.

A position where the work position P43c is set may be limited based on some condition. For example, the work position P43c may be limited in accordance with specifications of the work machine 40 or the like. Specifically, an upper limit of a distance from the slewing center axis 41b1 to the work position P43c illustrated in FIG. 4B, an upper limit of length of a work line (see FIG. 5B), an upper limit of size of a work surface or a work three-dimensional body, or the like may be set.

### [Setting assist function of work position P43c]

The computer 13 preferably calculates a position suitable as the work position P43c illustrated in FIG. 4A. The computer 13 may cause the output device 15 to output (for example, display) the calculated position as a candidate for the work position P43c. The computer 13 may automatically set the calculated position as the work position P43c. By the computer 13 calculating the work position P43c, it is possible to reduce time and effort required for work of setting the work position P43c as compared with a case where the user sets the work position P43c only by manual operation.

The computer 13 calculates the work position P43c as described below, for example. The computer 13 may calculate the work position P43c based on a surrounding situation of the work machine 40. The surrounding situation may be, for example, a situation of the object 30 or a situation of the area A. The computer 13 may calculate the work position P43c based on a type of work (for example, excavation, loading, lifting, and the like) performed by the work machine 40. The computer 13 may calculate the work position P43c in consideration of a change over time in a work simulation. A specific example of the calculation of the work position P43c is as described below.

The computer 13 may calculate the work position P43c based on the object 30.

The computer 13 may calculate the work position P43c based on the terrain 31. For example, in a case where the work machine 40 performs work such as excavation and slope cutting on the terrain 31 (for example, the ground surface 31a), the computer 13 may calculate the work position P43c based on the terrain 31. The computer 13 may calculate a position on the ground surface 31a (a slope face in the example illustrated in FIG. 4A) as the work position P43c. As illustrated in FIG. 5C, the computer 13 may calculate a position away from the ground surface 31a by a predetermined distance (offset amount) as the work position P43c. In this case, the computer 13 may calculate a position (deep position) lower than the ground surface 31a as the work position P43c, or may calculate a position (air) higher than the ground surface 31a as the work position P43c. As illustrated in FIG. 4A, in a case where the ground surface 31a is a slope face, the computer 13 may calculate a position away from the ground surface 31a by a predetermined distance (offset amount) in a direction perpendicular to the ground surface 31a as the work position P43c. The offset amount may be set by user's manual operation or may be set in the computer 13 in advance.

In a case where the computer 13 calculates the work position P43c based on the terrain 31, the terrain 31 on which the work machine 40 is arranged and the terrain 31 used for calculating the work position P43c may be different. For example, in a case where the work machine 40 is arranged on the terrain 31 (the ground surface 31a) as a model of actual land (see FIG. 4B), the computer 13 may calculate the work position P43c based on the terrain 31 as design data (design surface).

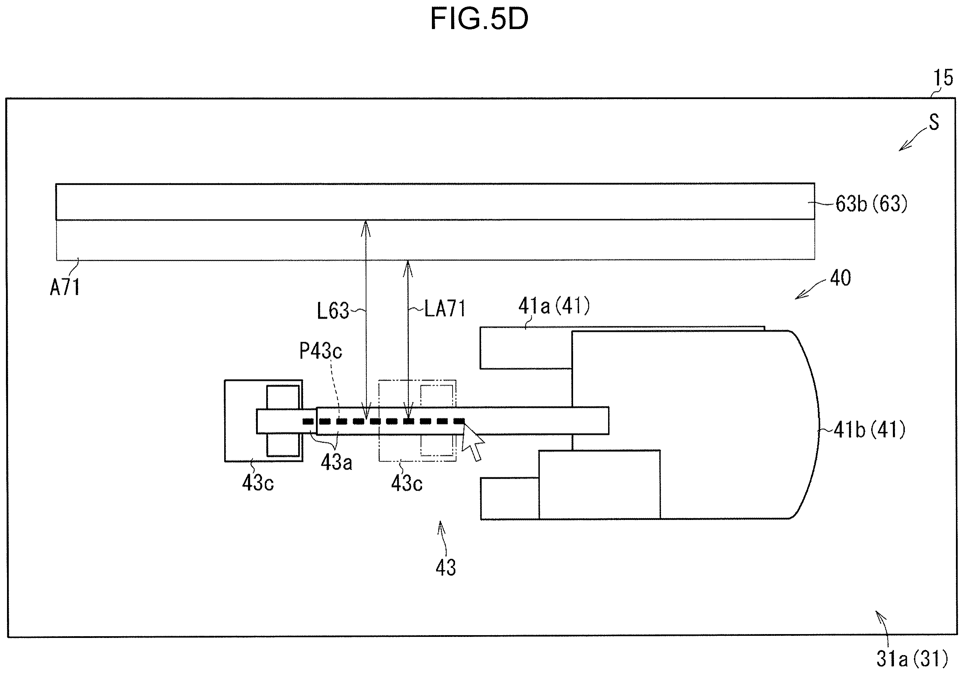

As illustrated in FIG. 5D, the computer 13 may calculate the work position P43c based on the obstacle 63 (for example, the wall 63b) or the like. For example, the computer 13 may calculate a position away from the obstacle 63 by a predetermined distance (offset distance L63) as the work position P43c.

As illustrated in FIG. 4D, in a case where the work machine 40 performs lifting work, the computer 13 may calculate the work position P43c based on the suspended load 62. For example, the computer 13 may calculate, as the work position P43c, a position immediately above the suspended load 62, the position being above the suspended load 62 by a predetermined distance (offset amount) (not illustrated).

The computer 13 may calculate the work position P43c based on the area A.

As illustrated in FIG. 4C, the computer 13 may calculate the work position P43c based on the work area A45 (an area where the work machine 40 performs work). The computer 13 may calculate a predetermined position in the work area A45 as the work position P43c. For example, the computer 13 may calculate a center of gravity position, a centroid position, or an end (corner) position of the work area A45 as the work position P43c.

As illustrated in FIG. 5D, the computer 13 may calculate the work position P43c based on the entry prohibited area A71 or the like. The computer 13 may calculate a position away from the entry prohibited area A71 by a predetermined distance (offset distance LA71) as the work position P43c.

The computer 13 may calculate the work position P43c based on the object 30 and the area A. For example, in a case where the work machine 40 performs excavation work, as illustrated in FIG. 5C, the computer 13 may calculate a position deeper than the ground surface 31a by a predetermined distance and in the work area A45 illustrated in FIG. 4C as the work position P43c. In a case where the work machine 40 performs earth discharge work (see FIGS. 4C and 4D), the computer 13 may calculate a position in the work area A45 and higher than an earth discharge position by a predetermined distance as the work position P43c (not illustrated). The earth discharge position may be, for example, the ground surface 31a or the cargo bed 61a illustrated in FIG. 4D.

The computer 13 may calculate the work position P43c in consideration of a change over time in a work simulation. For example, a case where work is completed only in a part of the work area A45 in previous work performed by the work machine 40 is assumed. In this case, the computer 13 may calculate a next position to perform work after a position where work is completed in previous work as the work position P43c. In this case, order of work in the work area A45, that is, order in which work is performed may be preset in the computer 13.

### [Designation of angle of tip attachment 43c]

As illustrated in FIG. 4A, when the work position P43c is set (determined), a position of at least a part of the tip attachment 43c is set (determined). At this time, there is a case where an angle (posture, for example, angle relative to the ground) of the tip attachment 43c is not determined. In this case, an angle of the tip attachment 43c is set as described below, for example.

The computer 13 may set an angle of the tip attachment 43c based on manual operation by the user. For example, the user may input a numerical value corresponding to an angle of the tip attachment 43c to the input device 11, may input an angle by operation such as mouse operation, or may select one angle from a plurality of angle options.

The computer 13 may set an angle of the tip attachment 43c based on a type of work of the work machine 40 or based on a preset posture set in the computer 13. For example, as illustrated in FIG. 4D, in a case where lifting work or a preset posture of a lifting posture is selected, the computer 13 may set an angle of the tip attachment 43c such that a tip portion (for example, a leading end of a bucket) of the tip attachment 43c approaches the arm 43a2. Further, for example, as illustrated in FIG. 5C, in a case where of excavation work or a preset posture of an excavation posture is selected, the computer 13 may set an angle of the tip attachment 43c such that the tip attachment 43c (bucket) is inclined by a predetermined angle with respect to the ground surface 31a. The "predetermined angle" may be, for example, a parameter set by the user (see description of the preset posture).

### [Order of setting of work position P43c and work machine arrangement position P40c]

In this [Example A2-2], as illustrated in FIG. 4B, the computer 13 calculates a position of the base end side attachment 43a based on the work position P43c and the work machine arrangement position P40c. The computer 13 may set either the work position P43c or the work machine arrangement position P40c first.

The computer 13 may set the work machine arrangement position P40c as illustrated in FIG. 4B after setting the work position P43c as illustrated in FIG. 4A. Setting of the work position P43c and the work machine arrangement position P40c in this case is performed as described below, for example. The computer 13 may set the work position P43c based on manual operation by the user. Further, the computer 13 may set the work position P43c by using a setting assist function. After setting the work position P43c, the computer 13 may move the work machine 40 (for example, the work machine lower surface center point 41ac) according to movement of a mouse pointer by operation by the user, for example. At this time, the computer 13 may cause the output device 15 to display a posture of the work machine 40 obtained from the inverse kinematics. Then, when the user moves a mouse pointer and clicks, the computer 13 may set (determine) a position corresponding to the movement of a mouse pointer and the click as the work machine arrangement position P40c.

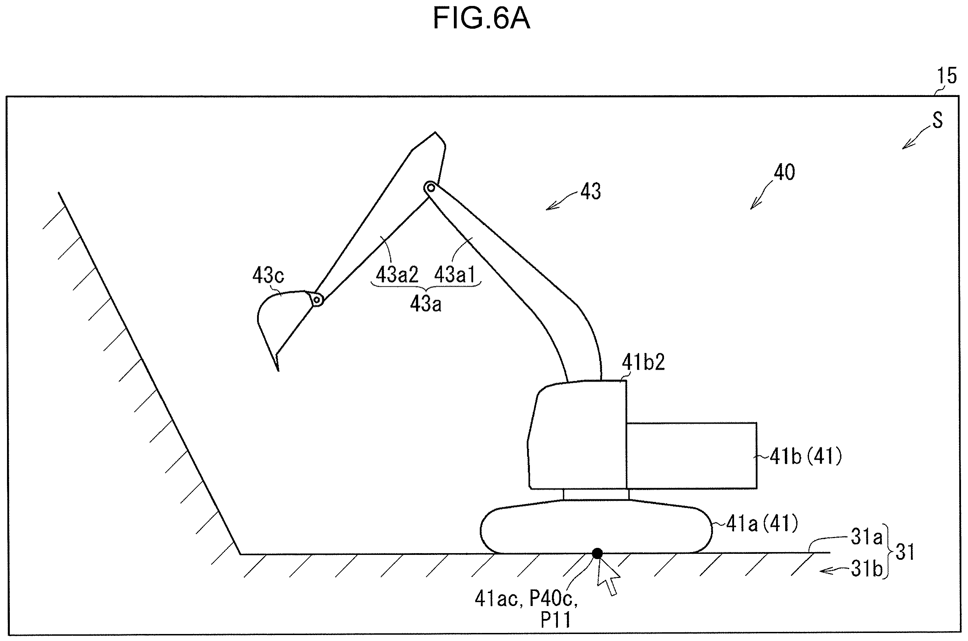

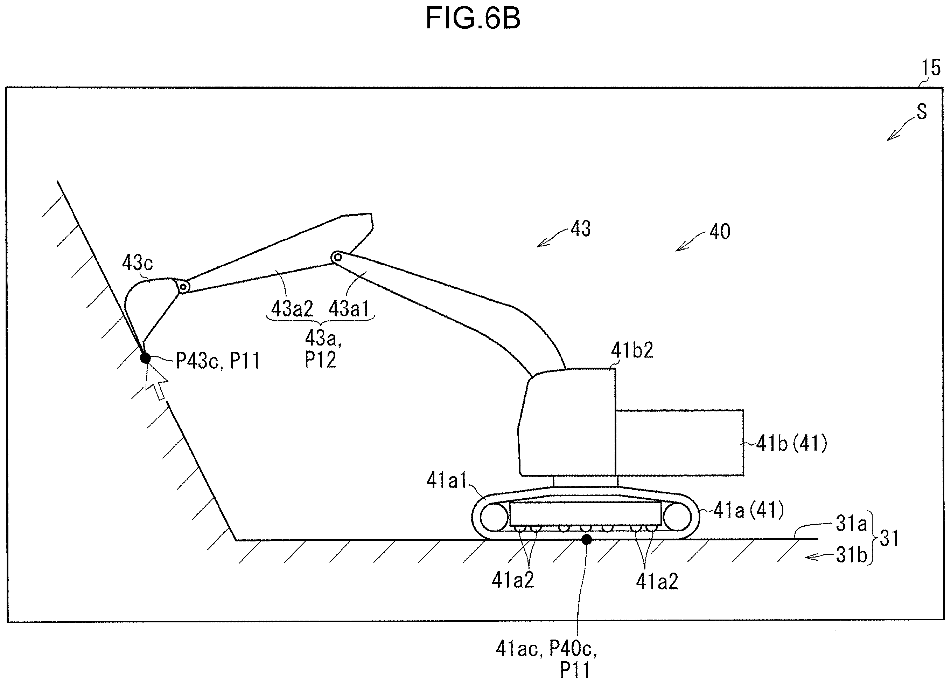

The computer 13 may set the work position P43c as illustrated in FIG. 6B after setting the work machine arrangement position P40c as illustrated in FIG. 6A. Setting of the work machine arrangement position P40c and the work position P43c in this case is performed as described below, for example. For example, when the user moves a mouse pointer and clicks, the computer 13 may set a position corresponding to the movement of a mouse pointer and the click as the work machine arrangement position P40c. After setting the work machine arrangement position P40c, the computer 13 may move the tip attachment 43c according to movement of a mouse pointer by operation by the user, for example. At this time, the computer 13 may cause the output device 15 to display a posture of the work machine 40 obtained from the inverse kinematics. Then, when the user moves a mouse pointer and clicks, the computer 13 may set a position corresponding to the movement of a mouse pointer and the click as the work position P43c. Further, the computer 13 may set the work position P43c by using a setting assist function of the work position P43c.

### [Calculation of position of base end side attachment 43a]

As described above, the work position P43c and the work machine arrangement position P40c are set. Then, the computer 13 calculates a position of the base end side attachment 43a based on the work position P43c and the work machine arrangement position P40c. At this time, the computer 13 calculates a position of the base end side attachment 43a by the inverse kinematics. Specifically, the computer 13 calculates a position of the boom 43a1 (angle of the boom 43a1 with respect to the upper slewing body 41b) and a position of the arm 43a2 (angle of the arm 43a2 with respect to the boom 43a1).

### [Determination as to whether or not posture of the work machine 40 is established]

As described above, the computer 13 calculates a position of the base end side attachment 43a by the inverse kinematics. However, depending on a relative position between the work machine arrangement position P40c and the work position P43c, a case where a posture of the work machine 40 is not established, that is, a case where a posture of the work machine 40 is not actually achievable is assumed. For example, in a case where the work machine arrangement position P40c and the work position P43c are too far or too close, a posture of the work machine 40 is not established. In view of the above, the computer 13 preferably determines whether or not a posture of the work machine 40 is established.

In a case where a posture of the work machine 40 is not established, the computer 13 preferably causes the output device 15 to issue a notification to the user. A specific example of this notification is as described below, for example. The output device 15 may output a message indicating that a posture of the work machine 40 is not established. The message may be, for example, an error message of a character, voice, and the like. The output device 15 may change a display mode between when a posture of the work machine 40 is established and when the posture is not established. The display mode may be represented by, for example, a color, transmittance, or the like of display of the work machine 40. The output device 15 may display the work machine 40 when a posture of the work machine 40 is established, and may not display or semi-transparently display the work machine 40 when a posture of the work machine 40 is not established. The output device 15 may issue a notification for prompting correction of the work position P43c or the work machine arrangement position P40c.

In this example, in a case where a posture of the work machine 40 is not established, a notification is issued to the user. Therefore, the user can consider whether the work machine 40 can be arranged (whether the work machine arrangement position P40c can be set) in a positional relationship with respect to a place to perform work (the work position P43c). Alternatively, the user can consider whether work can be performed (whether the work position P43c can be set) in a positional relationship with respect to a position where the work machine 40 is to be arranged (the work machine arrangement position P40c).

### [Display of plurality of postures of work machine 40]

For example, when a posture of the work machine 40 is set (determined) as in [Example A2-1] and [Example A2-2] described above, the computer 13 causes the output device 15 to display the work machine 40 having the set posture. The computer 13 may cause the output device 15 to display only one posture of the work machine 40, or may cause the output device 15 to display a plurality of postures of the work machine 40 as illustrated in FIG. 5B. In a case where the output device 15 displays a plurality of postures of the work machine 40, the computer 13 may cause the output device 15 to simultaneously display a plurality of postures of the work machine 40, or may cause the output device 15 to display a change (movement) in posture of the work machine 40 as an animation (animation display). By displaying a plurality of postures of the work machine 40, the user can easily grasp movement of the work machine 40.

A specific example of a case where the output device 15 displays a plurality of postures of the work machine 40 is as described below.

In a case where the work position P43c is a plurality of work points (not illustrated), the computer 13 may cause the output device 15 to display a posture of the work machine 40 when performing work at each work point.

In a case where the work position P43c is a work line, the computer 13 may cause the output device 15 to display a posture of the work machine 40 when the tip attachment 43c is at each of a plurality of points on the work line. A plurality of points may include a start point, an intermediate point, and an end point. In a case where the work position P43c is a work line, a track of at least a part of the attachment 43 when the tip attachment 43c moves along the work line may be displayed on the output device 15. The track displayed at this time may be a linear track, which is a track of a certain point of the attachment 43, or may be a three-dimensional shape (a track of a surface or a three-dimensional body of the attachment 43) (three-dimensional track).

In a case where the work position P43c is a surface (work surface) or a three-dimensional body (work three-dimensional body), the output device 15 may perform display as described below. In this case, the computer 13 may cause the output device 15 to simultaneously display a posture when the tip attachment 43c is at a certain position in a work surface or the work three-dimensional body and a posture when the tip attachment 43c is at another position. The computer 13 may cause the output device 15 to display a track of at least a part of the attachment 43 when the attachment 43 moves on a work surface or in a work three-dimensional body.

The computer 13 may cause the output device 15 to display each posture of the work machine 40 when the work machine 40 performs a plurality of types of work. For example, in a case where the work machine 40 performs excavation work and earth discharge work, the computer 13 may cause the output device 15 to simultaneously display a posture of the work machine 40 when performing excavation work (see FIG. 5C) and a posture of the work machine 40 when performing earth discharge work (see FIG. 4C).

The computer 13 may display a plurality of postures for a portion of the work machine 40 and cause the output device 15 to display only one posture for another portion (not illustrated). For example, in a case where the upper slewing body 41b slews, the computer 13 may cause the output device 15 to display a plurality of postures of the upper slewing body 41b and the attachment 43. In this case, there is a case where display of the upper slewing body 41b may be overlapped and be difficult to see. Therefore, the computer 13 may cause the output device 15 to display a plurality of postures of the attachment 43, and cause the output device 15 to display only one posture for the upper slewing body 41b.

The computer 13 may cause the output device 15 to display a change (movement) in a posture of the work machine 40 as an animation. For example, the computer 13 may cause the output device 15 to display, as an animation, a change in posture of the work machine 40 when the tip attachment 43c moves along the work position P43c of a work line.

### [Example A3] Calculation of position of arrangement target T different from work machine 40

Note that the set position P11 illustrated in FIG. 3A may be a position of an arrangement target T different from the work machine 40, and the unset position P12 may be a position of an arrangement target T different from the work machine 40. The computer 13 may calculate a position of an arrangement target T different from the work machine 40 based on an arrangement target T different from the work machine 40. Specifically, for example, as illustrated in FIG. 1, a case where the entry prohibited area A71 is set by user's manual operation is assumed. The computer 13 may calculate a position of the equipment 65 based on a position of the entry prohibited area A71. For example, the computer 13 may calculate a position of a boundary between the inside and the outside of the entry prohibited area A71 (or the vicinity of the boundary) as a position of the equipment 65.

### [Example B] Display for assisting arrangement of arrangement target T, and the like

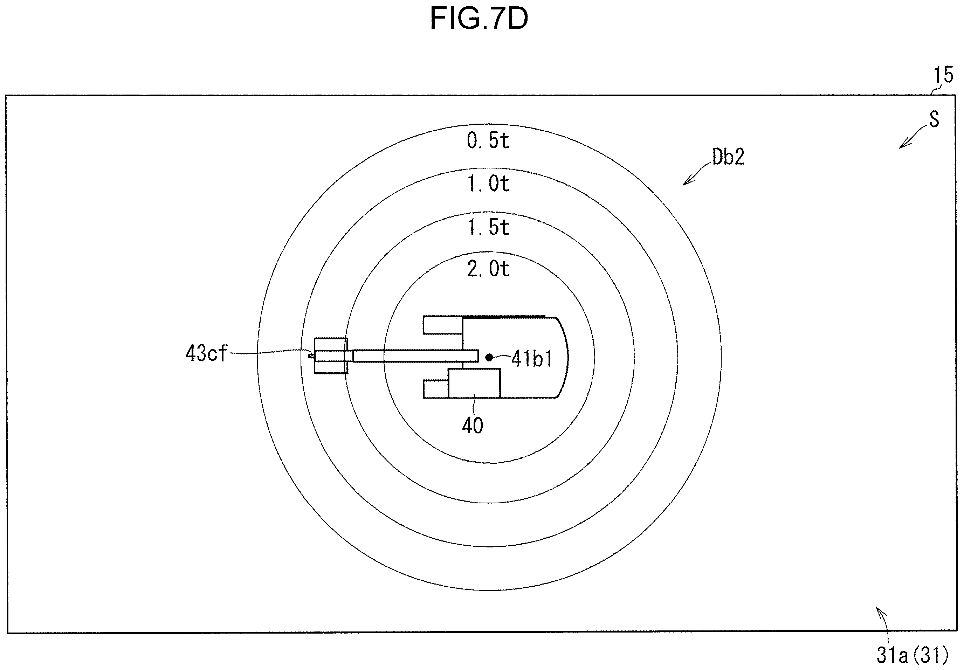

As illustrated in FIG. 7A, the computer 13 preferably causes the output device 15 to perform display that assists arrangement of the at least one arrangement target T (at least one of the object 30 and the area A). For example, the computer 13 may cause the output device 15 to perform display that assists arrangement of the work machine 40. Specifically, the computer 13 may cause the output device 15 to display the work machine area A40 as in [Example B1] below, or may cause the output device 15 to perform display indicating capability of the work machine 40 as in [Example B2] below illustrated in FIG. 7D.

### [Example B1] Display of work machine area A40

The computer 13 may cause the output device 15 to display the work machine area A40 superimposed on the work machine 40. As described above, the work machine area A40 is associated with a position of the work machine 40. In a case where the work machine 40 moves, the computer 13 moves the work machine area A40 along with movement of the work machine 40. At this time, the computer 13 causes the output device 15 to display the work machine area A40 after the movement. As described above, when the work machine 40 moves and the work machine area A40 moves, the computer 13 may set a region (track) through which the work machine area A40 passes as the new work machine area A40. In this case, the computer 13 may cause the output device 15 to display the "new work machine area A40".

### [Example B1-1] Display of work machine movable area A40a

As illustrated in FIG. 7C, the computer 13 may cause the output device 15 to display the work machine movable area A40a (see FIGS. 3A and 3B). As described above, in a case where the maximum work radius area A40a1 is fan-shaped or substantially fan-shaped when viewed from above, the maximum work radius area A40a1 may also slew as the upper slewing body 41b slews. At this time, the computer 13 causes the output device 15 to display the maximum work radius area A40a1 after slewing. Similarly, for the rear end radius area A40a2, the computer 13 causes the output device 15 to display the rear end radius area A40a2 after slewing. Further, as described above, when the upper slewing body 41b slews and the maximum work radius area A40a1 moves in a slewing direction, the computer 13 may set a region (track) through which the maximum work radius area A40a1 passes as the new maximum work radius area A40a1. Similarly, for the rear end radius area A40a2, the computer 13 may set a region (track) through which the rear end radius area A40a2 passes as the new rear end radius area A40a2. In this case, the computer 13 may cause the output device 15 to display the "new maximum work radius area A40a1" and/or the "new rear end radius area A40a2".

### [Example B1-2] Display of workable area A40b

As illustrated in FIG. 7A, the computer 13 may cause the output device 15 to display the workable area A40b. The workable area A40b is an area where the tip attachment 43c can be arranged when the attachment 43 operates. A difference between the workable area A40b and the work machine movable area A40a (see FIG. 7C) is as described below.

As illustrated in FIG. 7C, the work machine movable area A40a is a region considering a movable region in the front-rear direction of the tip attachment 43c, and is a region not considering a movable region in the up-down direction of the tip attachment 43c. For this reason, it is difficult for the user to accurately grasp how far the work machine 40 can work in the up-down direction only by display of the work machine movable area A40a. On the other hand, as illustrated in FIG. 7A, the workable area A40b is a region considering a movable region in the front-rear direction and the up-down direction of the tip attachment 43c. The workable area A40b is a region indicating how far the work machine 40 can work in the front-rear direction and the up-down direction, specifically, how deep and how high the work machine 40 can work. The workable area A40b is a region determined by physical constraints such as a dimension and a shape of the attachment 43 and an operation range of an actuator that operates the attachment 43. The operation range of the actuator may be, for example, a range of a stroke of a cylinder.

The output device 15 displays the workable area A40b, so that the user can grasp a workable region of the work machine 40 at a position where the work machine 40 is arranged (the work machine arrangement position P40c). Therefore, the user can consider and check workability (productivity) of the work machine 40, for example. As a result, the user can easily consider an arrangement position of the work machine 40.

The computer 13 causes the output device 15 to display the workable area A40b as described below, for example.

The computer 13 may cause the output device 15 to display the workable area A40b in two dimensions. For example, the computer 13 may cause the output device 15 to display, in a superimposed manner, two-dimensional display, which is display of the machine body 41 and the attachment 43 viewed from the lateral direction, and the two-dimensional workable area A40b (operation range diagram).

The computer 13 may cause the output device 15 to display the workable area A40b in three dimensions. For example, the computer 13 may superimpose an operation range diagram, which is the two-dimensional (planar) workable area A40b, on the work machine 40 displayed in three dimensions and cause the output device 15 to display the superimposed diagram (not illustrated). In this case, the workable area A40b may be displayed at a center position in the lateral direction (width direction) of the attachment 43. The computer 13 may rotate the workable area A40b about the slewing center axis 41b1 following slewing of the upper slewing body 41b with respect to the lower travelling body 41a.

### [Display of limited workable area A40b1]

As illustrated in FIG. 7B, the computer 13 may cause the output device 15 to display the limited workable area A40b1. The limited workable area A40b1 is a region within a range of the workable area A40b and narrower than the workable area A40b, and is a region limited to a part of the workable area A40b. For example, the limited workable area A40b1 is set based on at least one workable area limit value (predetermined parameter).

As described above, the workable area A40b is a region determined by physical constraints such as the attachment 43. On the other hand, the limited workable area A40b1 is determined by the at least one workable area limit value set based on, for example, operational constraints of the work machine 40.

Specifically, the at least one workable area limit value may include a limit value based on the work machine 40 or may include a limit value based on the work site S. The at least one workable area limit value may include a limit value in a height direction. For example, the at least one workable area limit value may include a limit value in the height direction from a lower surface of the work machine 40, or may include a limit value in the height direction (in the height or depth direction) from the ground surface 31a. For example, as illustrated in FIG. 7B, in a case where the workable area limit value is set to a predetermined depth below the ground surface 31a, the computer 13 sets the limited workable area A40b1 to a height equal to or more than the "predetermined depth".

The at least one workable area limit value may include a limit value in the front-rear direction of the upper slewing body 41b, or may include a limit value in the lateral direction of the upper slewing body 41b. For example, as illustrated in FIG. 7B, in a case where the workable area limit value is set at a predetermined position further on the front side than the lower travelling body 41a, the computer 13 sets the limited workable area A40b1 at a position further on the front side than the "predetermined position".

As illustrated in FIG. 7C, the at least one workable area limit value may include a limit value in the slewing direction (slewing angle) of the upper slewing body 41b. In this case, the limit value of slewing angle may be set to a value (numerical value of angle) larger than 0 degrees and smaller than 360 degrees, or may be set by a value indicating a multiple of the width of the tip attachment 43c (for example, a bucket).

The computer 13 may make a display mode (for example, a display color) of the limited workable area A40b1 in the output device 15 different from a display mode of a portion different from the limited workable area A40bl. For example, the computer 13 may make display of the limited workable area A40b1 on the output device 15 different from display of the work machine movable area A40a, or different from display of the terrain 31 outside a range of the limited workable area A40b1.

### [Example B2] Display indicating capability of work machine 40

As illustrated in FIG. 7D, the computer 13 may cause the output device 15 to perform display indicating capability of the work machine 40 other than the workable area A40b (see FIG. 7A). For example, in a case where the work machine 40 performs lifting work, the computer 13 may cause the output device 15 to perform display below. The computer 13 may cause the output device 15 to perform rated load display Db2 that is display indicating a relationship between a work radius (horizontal distance from the slewing center axis 41bl to the hook 43cf) and a load that can be lifted (mass of the suspended load 62 illustrated in FIG. 4D). The computer 13 may cause the output device 15 to change a display mode such as a display color according to a load that can be lifted. The computer 13 may cause the output device 15 to display, in a superimposed manner, the display indicating a relationship between a work radius and a load and the work machine 40. Note that the computer 13 may cause the output device 15 to display a rated load table that is a table indicating a relationship between a load that can be lifted and a work radius without superposition on the work machine 40.

### [Example C] Calculation of workable amount (productivity)

The computer 13 preferably calculates a value indicating a workable amount (productivity) of the work machine 40. The calculated value indicating a workable amount may be the workable amount itself or a value correlated with the workable amount. The workable amount is an amount of a work object (for example, earth and sand) that the work machine 40 can handle. Specifically, for example, the workable amount may be an amount of earth and sand that can be excavated by the work machine 40. The computer 13 calculates a value indicating the workable amount of the work machine 40, so that the user can make a work plan (for example, arrange the arrangement target T) while checking the workable amount.

As illustrated in FIG. 7B, the computer 13 may calculate a value indicating the workable amount based on the workable area A40b. The computer 13 may calculate a value indicating the workable amount such as an excavatable amount based on the limited workable area A40b1. For example, the computer 13 may calculate an area of a region surrounded by the two-dimensional limited workable area A40b1 and the ground surface 31a as a value indicating the workable amount. The computer 13 may calculate volume that is the product of the above area and width of the tip attachment 43c (bucket in this case) as a value indicating the workable amount. The computer 13 may calculate volume of a region surrounded by the three-dimensional limited workable area A40b1 and the ground surface 31a as a value indicating the workable amount. The computer 13 may calculate workable mass as a value indicating the workable amount based on the above volume and density of a work object (for example, earth and sand).

The computer 13 may display a value (for example, area, volume, mass, and the like) indicating the calculated workable amount on the output device 15. The computer 13 may cause the output device 15 to perform display based on a value indicating the calculated workable amount. For example, the computer 13 may cause the output device 15 to change a display mode (for example, a display color) of the workable area A40b or the limited workable area A40b1 used for calculating the workable amount according to the calculated workable amount.

### [Example D] Interference determination function

As illustrated in FIG. 8A, the computer 13 preferably performs interference determination for determining a state of interference between the areas A. The area A includes the object matching area Ao. In this case, the user can check a state of interference between the areas A. As a result, the user can check whether positions of the object 30 and the area A are appropriate. The "interference" between the areas A means that the areas A overlap each other, that is, positions overlap each other. The "state of interference" determined by the computer 13 includes at least whether or not interference occurs. The "state of interference" determined by the computer 13 may include an amount of interference (for example, area and volume), may include time for interference, and may include the number of times of interference.

Various ones of the areas A may be subjected to interference determination. For example, as in [Example D1] below, the computer 13 may perform interference determination between the work machine area A40 and the determination target area A73. For example, as in [Example D2] below, the computer 13 may perform interference determination between the area A different from the work machine 40 (that is, the area A different from the work machine area A40) and the determination target area A73. A specific example of the interference determination is as described below.

### [Example D1] Interference determination between work machine area A40 and determination target area A73

The computer 13 may perform interference determination between the work machine area A40 and the determination target area A73. This determination may be used, for example, to check whether a separation distance from the work machine 40 to the determination target area A73 is secured.

In this example, the determination target area A73 is the area A different from the work machine area A40. Various ones of the areas A may be the determination target area A73. For example, the determination target area A73 may be the area A different from the second work machine area A50 (see FIG. 9) as in [Example D1-1], or may be the second work machine area A50 (see FIG. 9) as in [Example D1-2] below.

### [Example D1-1] Interference determination between work machine area A40 and area A different from second work machine area A50

As illustrated in FIG. 8A, the computer 13 may perform interference determination between the work machine area A40 and an area A (example of the determination target area A73) different from the second work machine area A50.

The determination target area A73 may be the object 30 (specifically, the object matching area Ao for the object 30). The object 30 to be determined may be, for example, the transport vehicle 61 illustrated in FIG. 4D, the suspended load 62 illustrated in FIG. 4D, the obstacle 63, the equipment 65 illustrated in FIG. 8C, or the worker 67 illustrated in FIG. 9. The determination target area A73 is the area A set based on a position of the object 30 to be determined, and may be the area A other than the object matching area Ao. The determination target area A73 may be the area A set without being based on a position of the object 30 (for example, the area A set by user's manual operation).

Specifically, for example, the determination target area A73 may be the entry prohibited area A71. For example, the entry prohibited area A71 may be set between a position away from the object 30, such as the obstacle 63, by a predetermined distance, and the object 30 (obstacle 63 in this example). As illustrated in FIG. 8C, a boundary between the inside and the outside of the entry prohibited area A71 may be set based on a position of the object 30 such as the partition tool 65a, for example. The entry prohibited area A71 may be set by user's manual operation.

### [Example D1-2] Interference determination between work machine area A40 and second work machine area A50

As illustrated in FIG. 9, the computer 13 may perform interference determination between the work machine area A40 and the second work machine area A50. The second work machine area A50 is an example of the determination target area A73. For example, the computer 13 may perform interference determination between the work machine 40 and the second work machine 50. The "work machine 40" in this case is the object matching area Ao (work machine area A40) for the work machine 40, and the "second work machine 50" in this case is the object matching area Ao (second work machine area A50) for the second work machine 50. As interference determination between the work machine area A40 and the second work machine area A50 is performed, it is possible to determine a state of contact or approach between a plurality of work machines (the work machine 40 and the second work machine 50). In a case where interference determination between the object matching area Ao for the work machine 40 and the object matching area Ao for the second work machine 50 is performed, the presence or absence of contact between a plurality of machines (the work machine 40 and the second work machine 50) can be determined.

### [Example D2] Interference determination between area A different from work machine 40 and determination target area A73

Note that the computer 13 may perform interference determination between the areas A set independently of the work machine 40. Specifically, for example, the computer 13 may perform interference determination between the equipment 65 (specifically, the object matching area Ao for the equipment 65) illustrated in FIG. 8C and the obstacle 63 (specifically, the object matching area Ao for the obstacle 63). In this case, for example, it is possible to determine whether the equipment 65 overlaps the obstacle 63 or is too close to the obstacle 63.

### [Change in determination criterion]

The computer 13 may change a determination criterion of interference determination (at least one of two of the areas A to be subjected to interference determination). For example, the computer 13 may change a determination criterion for interference determination according to a type of the area A for which interference determination is performed.

Here, as a specific example, as illustrated in FIG. 8A, a case where interference determination between the work machine area A40 and the determination target area A73 is performed (the case of [Example D1] described above) will be described. The computer 13 may change the work machine area A40 (determination criterion) used for interference determination depending on a type of the determination target area A73.

Specifically, for example, in the example illustrated in FIGS. 8A and 8B, the computer 13 performs interference determination between the work machine area A40 and the wall 63b (specifically, the object matching area Ao for the wall 63b). In this example, the work machine area A40 used for interference determination is a region in which the maximum work radius area A40a1 with a limited slewing angle and the rear end radius area A40a2 are overlapped. Further, in the example illustrated in FIG. 8C, the computer 13 performs interference determination between the work machine area A40 and the building 63a (specifically, the object matching area Ao for the building 63a). In this example, the work machine area A40 used for interference determination is the maximum work radius area A40a1. Further, in this example, the computer 13 performs interference determination between the work machine area A40 and the entry prohibited area A71. In this example, the work machine area A40 used for interference determination is the maximum work radius area A40a1. As described above, the computer 13 may change a determination criterion for interference determination according to a type of the area A for which interference determination is performed.

### [Use of result of interference determination]

Information of a result of interference determination may be used for various types of processing. A specific example of a method of using a result of interference determination is as described below.

The computer 13 may cause the output device 15 to change a display mode (for example, a display color) of the area A for which interference determination is performed depending on whether or not the areas A interfere with each other. For example, the computer 13 may cause the output device 15 to change a display mode of the determination target area A73 between a case where the work machine area A40 and the determination target area A73 interfere with each other as illustrated in FIG. 8B and a case where the work machine area A40 and the determination target area A73 do not interfere with each other as illustrated in FIG. 8A (not illustrated). The computer 13 may cause the output device 15 to change a display mode of the work machine area A40 between a case where the work machine area A40 and the determination target area A73 interfere with each other and a case where they do not interfere with each other. In this case, the computer 13 may cause the output device 15 to change a display mode of the entire work machine area A40 (not illustrated). Further, the work machine area A40 may include a plurality of portions (specifically, the maximum work radius area A40a1 and the rear end radius area A40a2). In the example illustrated in FIG. 8B, the computer 13 causes the output device 15 to change a display mode of only a portion that interferes with the determination target area A73 in the work machine area A40 to be different from a display mode when there is no interference.

The computer 13 may cause the output device 15 to issue a notification in a case where the areas A interfere with each other. The computer 13 may cause the output device 15 to output a message indicating that the areas A interfere with each other. The message may be, for example, an error message of a character, voice, and the like. In a case where the areas A interfere with each other, the computer 13 may cause the output device 15 to output a notification prompting the user to change a position of the arrangement target T. In this case, the computer 13 may cause the output device 15 to display an option of a position of the arrangement target T by which the areas A do not interfere with each other. In a case where the areas A interfere with each other, the computer 13 may cause the output device 15 to output a notification prompting the user to change a model of the work machine 40. In this case, the computer 13 may cause the output device 15 to display an option of a model of the work machine 40 and the like by which the areas A do not interfere with each other.

For example, there is a case where the area A moves, such as a case where the work machine 40 or the like operates. In such a case, the areas A may interfere with each other a plurality of times (a state of interference and a state of no interference are repeated). In view of the above, the computer 13 may count the number of times the areas A interfere with each other.

The computer 13 may store a posture of the work machine 40 when the work machine area A40 and the determination target area A73 interfere with each other. In this case, the computer 13 may cause the output device 15 to display the stored posture of the work machine 40. This allows the user to grasp a posture of the work machine 40 when the work machine area A40 and the determination target area A73 interfere with each other.

### [Arrangement limitation based on result of interference determination]

The computer 13 may limit arrangement of the arrangement target T based on a result of interference determination. For example, the computer 13 may limit arrangement of the object 30 (for example, the work machine 40 or the like) to be arranged based on a result of interference determination. For example, the computer 13 may limit arrangement of the object 30 to be arranged so that the area A associated with the object 30 to be arranged does not interfere with the determination target area A73.

For example, in a case where the work machine area A40 and the determination target area A73 interfere with each other, the computer 13 preferably limits arrangement of the work machine 40 to avoid interference between the work machine area A40 and the determination target area A73. That is, the computer 13 may limit arrangement of the work machine 40 so that the work machine area A40 of the work machine 40 to be arranged does not interfere with the determination target area A73. Specifically, for example, as in the example illustrated in FIG. 8B, the computer 13 limits arrangement of the work machine 40 to a position where the work machine area A40 and the obstacle 63 interfere with each other. Further, as in the example illustrated in FIG. 8A, the computer 13 allows the work machine 40 to be arranged at a position where the work machine area A40 and the obstacle 63 do not interfere with each other.

For example, the computer 13 may limit arrangement of the equipment 65 so that the equipment 65 (see FIG. 8C) about to be arranged does not interfere with the determination target area A73 (for example, the object matching area Ao for the obstacle 63).

### [Interference determination when time changes]

As described above, the computer 13 may change a state (position, shape, and the like) of the area A according to lapse of time in a work simulation (change in time, step, and the like). Then, the computer 13 may perform interference determination between the areas A when a state of the area A changes. The computer 13 may perform interference determination continuously or stepwise according to a continuous or stepwise change in time.

For example, when the work machine 40 operates (for example, travels, slews, and the like), the work machine area A40 may move. In this case, the computer 13 performs interference determination between the moving work machine area A40 and the determination target area A73. In this case, interference determination during operation of the work machine 40 can be performed.

### [Time change in plurality of machines]

As illustrated in FIG. 9, in a case where there are a plurality of machines (the work machine 40 and the second work machine 50) at the work site S, a plurality of the machines may operate and move according to lapse of time in a work simulation (time change in a work simulation). In this case, the computer 13 may perform interference determination as described below, for example. The computer 13 may determine a state of interference between the work machine area A40 and the second work machine area A50 when each of the work machine 40 and the second work machine 50 is operated. In this case, it is possible to check a work plan and safety in a case where a plurality of machines (the work machine 40 and the second work machine 50) are operated (activated) at the work site S.

A machine may be operated by various methods in a case where interference determination is performed for a plurality of machines (the work machine 40 and the second work machine 50) that operate. The computer 13 may operate at least one of the work machine 40 and the second work machine 50 simultaneously with manual operation by the user in accordance with manual operation by the user in the operator operation mode (Step S30 in FIG. 2). The computer 13 may operate at least one of the work machine 40 and the second work machine 50 based on information stored in advance according to manual operation by the user, for example, information taught in advance. The computer 13 may operate at least one of the work machine 40 and the second work machine 50 based on operation information (preset information) stored in advance in the computer 13.

A specific example of operation by the user for operating the work machine 40 and the second work machine 50 is as described below.

### [Specific example 1 of operation]

For example, the user selects a machine in which operation is to be stored, that is, a machine to be taught, from among a plurality of machines (the work machine 40 and the second work machine 50). For example, the user selects one of the work machines 40 by operating an operation target selection part (not illustrated) of a GUI. The user operates and activates the selected work machine 40. The computer 13 stores the operation of the work machine 40. For example, the user selects start of operation of the work machine 40 by taught operation by operating a GUI. Then, the work machine 40 starts operation by taught operation. Further, before, simultaneously with, or after the start of operation of the work machine 40, the user selects a machine (the second work machine 50) for which interference is determined. The user operates the second work machine 50 by manual operation. Then, the computer 13 may perform interference determination between the work machine area A40 of the operating work machine 40 and the second work machine area A50 of the operating second work machine 50.

### [Specific example 2 of operation]

Further, for example, the user may perform teaching of each of the work machine 40 and the second work machine 50. For example, the user operates a GUI to operate the work machine 40 and the second work machine 50 based on taught information. Then, the computer 13 may perform interference determination between the work machine area A40 of the operating work machine 40 and the second work machine area A50 of the operating second work machine 50.

### [Specific example 3 of operation]

Further, for example, the user may operate at least one of the work machine 40 and the second work machine 50 based on the preset information by operating a GUI.

### [Example E] Checking field of view

As described above, the computer 13 causes the output device 15 to display the work site S in a virtual space. The computer 13 may cause the output device 15 to show various fields of view. The computer 13 may cause the output device 15 to display fields of view from various positions (a reference position and a direction) of the work site S. The computer 13 may cause the output device 15 to display fields of view of various angles of view (a range and an angle of view). The computer 13 may switch various fields of view to display them on the output device 15. The computer 13 may cause the output device 15 to simultaneously display a plurality of fields of view. The computer 13 may cause the output device 15 to display a field of view from the object 30, or may cause the output device 15 to display a field of view from the area A. The computer 13 may cause the output device 15 to display a field of view from the outside of the object 30, or may cause the output device 15 to display a field of view from the outside of the area A. A specific example of a field of view output by the output device 15 is as described below.

The computer 13 may cause the output device 15 to display an overhead field of view of the whole or most of the work site S (site overhead view mode). The computer 13 may cause the output device 15 to display a field of view from the outside (work machine external viewpoint) of the work machine 40. In a case where the work machine external viewpoint is displayed, the user can check how the work machine 40 is viewed from the surroundings of the work machine 40. Therefore, for example, the user can easily grasp a state of separation between the work machine 40 and an object around the work machine 40.

The computer 13 may cause the output device 15 to display a field of view from the work machine 40. For example, the computer 13 may cause the output device 15 to display a field of view from a camera (rear camera) or the like arranged on a rear side portion of the upper slewing body 41b.

The computer 13 may cause the output device 15 to display a field of view from the inside of the cab 41b2 (viewpoint inside the cab) (see a second view V2). By displaying the viewpoint in the cab, it is possible to allow the user to check a field of view from an operator in the cab 41b2 (operator's viewpoint). In this case, the user can check the operator's viewpoint in advance without operating an actual work machine corresponding to the work machine 40. For example, the user can check where a blind spot is located when viewed from the cab 41b2. As a result, a danger prediction activity is easily performed. In a case where the viewpoint in the cab is displayed in the operator operation mode, the user (operator) can check a field of view from the cab 41b2 while experiencing operation of the work machine 40.

Further, as described above, the cab 41b2 may be movable with respect to a bottom portion of the upper slewing body 41b. In this case, the viewpoint in the cab (angle and height) may be changed according to a position (angle and height) of the cab 41b2 with respect to the bottom portion of the upper slewing body 41b. By this, it is possible to allow the user to check the operator's viewpoint in a case where a position of the cab 41b2 with respect to the bottom portion of the upper slewing body 41b changes. Further, as described above, the cab 41b2 may include an accessory (for example, a guard or the like). In this case, the computer 13 may cause the output device 15 to display a field of view from the viewpoint inside the cab in a state where the accessory is attached to a main body portion of the cab 41b2. By this, it is possible to allow the user to check the operator's viewpoint in a state where the accessory is attached to a main body portion of the cab 41b2.

As illustrated in FIG. 8A, the computer 13 may perform interference determination between the work machine area A40 of the work machine 40 and the determination target area A73 ([Example D1] described above). In this case, the computer 13 may cause the output device 15 to display an overhead field of view of the work machine 40 (the work machine 40 corresponding to the work machine area A40 where interference determination is performed) and the determination target area A73. In this case, the user can grasp a state of separation between the work machine 40 and the determination target area A73.

Further, in a case where the computer 13 performs interference determination between the work machine area A40 of the work machine 40 and the determination target area A73, the computer 13 may cause the output device 15 to display a field of view of the determination target area A73 viewed from the work machine 40. In this case, as illustrated in FIG. 9 (see the second view V2), a field of view from the work machine 40 may be a field of view from the inside of the cab 41b2, or may be a field of view from a position (for example, a rear camera) of the work machine 40 different from the inside of the cab 41b2. Display of a field of view of the determination target area A73 from the work machine 40 allows the user to grasp a field of view when viewed in a direction from the work machine 40 toward the determination target area A73.

The computer 13 may cause the output device 15 to display a field of view from the object 30 other than the work machine 40. The computer 13 may cause the output device 15 to display a field of view from the obstacle 63 (see FIG. 8C), may cause the output device 15 to display a field of view from the equipment 65 (such as the imaging device 65b), or may cause the output device 15 to display a field of view from the worker 67 (such as a watchperson).

An actual imaging device corresponding to the imaging device 65b can be arranged at various positions at the actual work site S, and the user may want to consider an appropriate arrangement position of the imaging device 65b. In view of the above, the computer 13 causes the output device 15 to display a field of view from the imaging device 65b. By this, it is possible to allow the user to grasp (check) at which position of the work site S the imaging device 65b should be arranged.

When the object 30 smaller than the work machine 40 or the like, such as the imaging device 65b or the antenna 65c, is arranged at the work site S, there is a case where it is difficult for the user who views display of the output device 15 to grasp presence or absence and a position of the small object 30. In view of the above, for example, the small object 30 (such as the imaging device 65b) and the pole 65d are preferably arranged as a set (integrally).

### [Simultaneous display of plurality of fields of view]

The computer 13 may cause the output device 15 to simultaneously display a plurality of (two or more) fields of view. The computer 13 may cause the output device 15 to display a first view V1 and the second view V2. The first view V1 and the second view V2 are fields of view from different positions (viewpoints) in a virtual space. The computer 13 may cause the output device 15 to display three or more fields of view (third view, fourth view,...). A specific example of a case where the output device 15 displays a plurality of fields of view is as described below.

The computer 13 may cause the output device 15 to display a field of view from the work machine 40 (work machine viewpoint) and a field of view from the outside of the work machine 40 (work machine external viewpoint) (overhead video). For example, in the construction plan mode (Step S20 in FIG. 2), the computer 13 may cause the output device 15 to display a field of view from the outside of the work machine 40 in most of a display region. At this time, the computer 13 may cause the output device 15 to display a field of view from an optional (user's desired) position in a part of the display region. The field of view from an optional position may be, for example, a field of view from the imaging device 65b, a field of view from the worker 67 (for example, a watchperson), or a field of view from the cab 41b2.

For example, in the operator operation mode (Step S30 in FIG. 2), the computer 13 may display a field of view from the inside of the cab 41b2 in most of a display region (for example, a screen) of the output device 15, and may display a field of view from the outside of the work machine 40 in a part of the display region of the output device 15. In this case, the user can check a state of contact or approach between the work machine 40 and an object around the work machine 40 while experiencing operation of the work machine 40.

### [Calculation of arrangement of object 30]

As described above, the computer 13 arranges the object 30 at the work site S in a virtual space. The object 30 is usually arranged so as to be in contact with the ground surface 31a. Note that there may be the object 30 that is not arranged so as to be in contact with the ground surface 31a. For example, there may be the object 30 floating in the air (such as a flying object such as a drone) or the object 30 arranged only in the underground portion 31b.

The work machine 40 is arranged so as to be in contact with (or substantially in contact with) the ground surface 31a. Specifically, as illustrated in FIG. 4B, a lower surface of the lower travelling body 41a is arranged so as to be in contact with (or substantially in contact with) the ground surface 31a. A specific example of arrangement of the work machine 40 on the ground surface 31a is as described below, for example.

### [Arrangement example 1]

The computer 13 may arrange the work machine 40 such that a lower surface of the lower travelling body 41a and the ground surface 31a are in contact with each other. At this time, the computer 13 may arrange the work machine 40 so that a lower surface of the lower travelling body 41a is not arranged below the ground surface 31a (so as not to enter the underground portion 31b).

### [Arrangement example using grounding determination point P21]

### [Arrangement example 2]

A calculation load regarding arrangement of the work machine 40 by the computer 13 is preferably suppressed. Specifically, as illustrated in FIG. 10 C, the computer 13 may calculate contact between a grounding determination point P21 and the ground surface 31a without calculating contact between an entire lower surface of the work machine 40 and the ground surface 31a.

The grounding determination point P21 is used for determination for arranging the work machine 40 on the ground surface 31a so that the work machine 40 is in contact with or substantially in contact with the ground surface 31a. As illustrated in FIG. 10A, the grounding determination point P21 may be set at three or more specific points (positions) on a lower surface of the work machine 40. For example, the grounding determination point P21 may be set at four specific points on a lower surface of the work machine 40. For example, a plurality of the grounding determination points P21 may be arranged at positions equidistant from the work machine lower surface center point 41ac.

In a case where the lower travelling body 41a includes the left and right crawlers 41a1 and 41a1, a front end portion and a rear end portion, which are both end portions in the longitudinal direction, of each of the left and right crawlers 41a1 and 41a1 may be set as the grounding determination point P21. In this case, the number of the grounding determination points P21 is four in total. For example, as illustrated in FIG. 6B, when the crawler 41a1 includes a plurality of rollers 41a2, the grounding determination point P21 (see FIG. 10A) may be set at a position below the foremost roller 41a2 in the longitudinal direction and a position below the rearmost roller 41a2 in the longitudinal direction among a plurality of the rollers 41a2. As illustrated in FIG. 10A, the grounding determination point P21 may be set at the center in a width direction of the crawler 41a1. The grounding determination point P21 may be set at an end portion in the width direction of the crawler 41a1 or the like (not illustrated).

In a case where the lower travelling body 41a includes a plurality of wheels (not illustrated), the grounding determination point P21 may be set at a lower end portion of the wheel. The grounding determination point P21 may be set at the center in a width direction of the wheel or may be arranged at an end portion in the width direction of the wheel or the like.

As illustrated in FIG. 10 C, the computer 13 rotates the work machine 40 with respect to the horizontal direction such that three of the grounding determination points P21 and the ground surface 31a are in contact with each other. The computer 13 arranges the work machine 40 such that three of the grounding determination points P21 and the ground surface 31a are in contact with each other. A specific example of this arrangement is as described below.

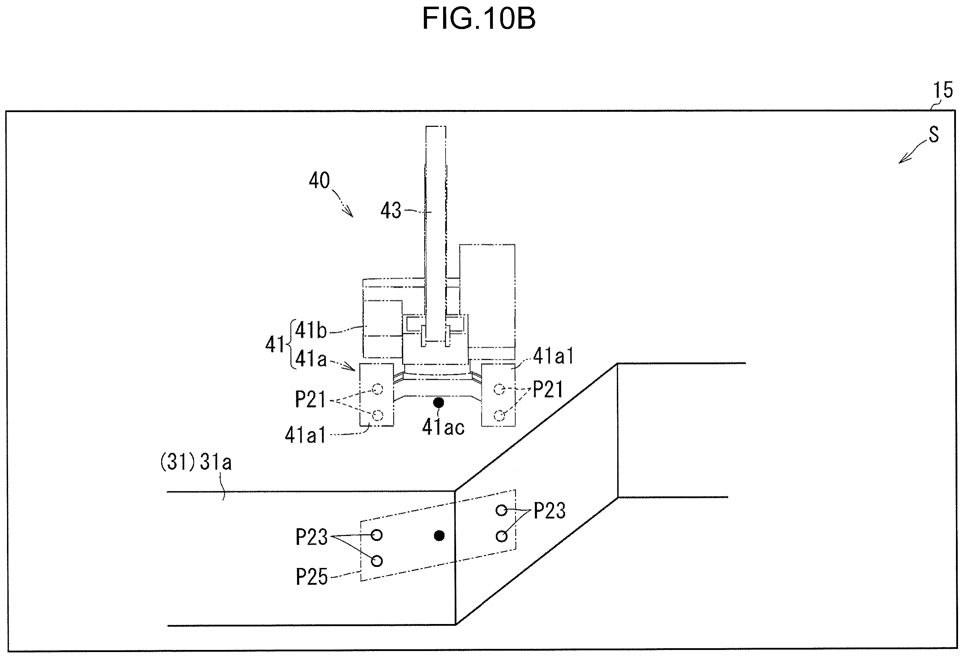

The computer 13 performs processing below or processing substantially equal to the processing below. As illustrated in FIG. 10B, the computer 13 projects each of a plurality of the grounding determination points P21 on the ground surface 31a (for example, projects each of the grounding determination points P21 downward in the vertical direction) in a state where the work machine 40 is not inclined with respect to a horizontal plane, that is, in a state where the slewing center axis 41b1 illustrated in FIG. 4B extends in the vertical direction. The computer 13 calculates a position (position on the ground surface 31a) of the grounding determination point P21 projected on the ground surface 31a. The computer 13 stores a position of the grounding determination point P21 projected on the ground surface 31a as a projected grounding determination point P23. The computer 13 calculates a grounding surface P25 based on three or more of the projected grounding determination points P23. For example, the computer 13 may set a plane passing through three of the projected grounding determination points P23 as the grounding surface P25. In a method of calculating the grounding surface P25, in a case where there are four or more of the projected grounding determination points P23, at least three of the projected grounding determination points P23 only need to be on the grounding surface P25. Further, for example, the computer 13 may calculate a plane in which distances between four or more of the projected grounding determination points P23 and the plane are minimized by a calculation method such as a least squares method, and use the calculated plane as the grounding surface P25 (perform planar approximation).

In a state where the work machine 40 is not arranged on the ground surface 31a, for example, when the user is about to arrange the work machine 40 on the ground surface 31a, the work machine 40 may be displayed above the ground surface 31a. In such a case, the computer 13 may cause the output device 15 to display at least a part of the grounding surface P25. For example, the computer 13 may cause the output device 15 to display a range in which a quadrangle having four sides at positions of ends in a width direction and ends in the front-rear direction of the lower travelling body 41a is projected onto the grounding surface P25. The computer 13 may cause the output device 15 to display a range in which the crawler 41a1 is projected (projected downward) onto the grounding surface P25 (not illustrated).

The computer 13 calculates a three-dimensional rotation angle (for example, a three-dimensional rotation angle with respect to the horizontal direction) of the grounding surface P25. As illustrated in FIG. 10C, the computer 13 rotates the work machine 40 with respect to the horizontal direction such that a three-dimensional rotation angle of the grounding surface P25 coincides with a three-dimensional rotation angle of a lower surface (specifically, a lower surface of the crawler 41a1) of the work machine 40. At this time, the computer 13 may rotate the work machine 40 about the work machine lower surface center point 41ac, for example.

The computer 13 arranges the work machine 40 such that a lower surface of the lower travelling body 41a of the rotated work machine 40 and the grounding surface P25 coincide with each other. At this time, for example, the computer 13 may arrange the work machine 40 such that a position of the work machine lower surface center point 41ac is a position directly above a position designated by the user as the work machine arrangement position P40c (see FIG. 4B). Further, for example, the computer 13 may arrange the work machine 40 such that three of the grounding determination points P21 and the ground surface 31a coincide with each other.

In this [Arrangement example 2], as compared with the case where a lower surface of the lower travelling body 41a is not arranged below the ground surface 31a as in [Arrangement example 1] described above, it is possible to reduce load of calculation regarding arrangement of the work machine 40 on the ground surface 31a.

### [Contact determination between work machine 40 and ground surface 31a]

The computer 13 may determine that a lower surface of the work machine 40 and the ground surface 31a are in a "contact state" in a case where three of the grounding determination points P21 are in contact with the ground surface 31a (on the ground surface 31a) and the remaining grounding determination points P21 are at a height equal to or more than the ground surface 31a. Note that in a case where only three of the grounding determination points P21 are set, the computer 13 may determine that a lower surface of the work machine 40 and the ground surface 31a are in a "contact state" in a case where three of the grounding determination points P21 are in contact with the ground surface 31a.

### [Regarding first aspect]

The work simulator 1 according to a first aspect includes the computer 13. The computer 13 simulates the work site S where the work machine 40 performs work in a virtual space. The computer 13 arranges the at least one arrangement target T in a virtual space. The at least one arrangement target T includes at least one of the object 30 and the area A. The computer 13 has a function of assisting arrangement of the at least one arrangement target T.

In the first aspect, since the computer 13 has a function of assisting arrangement of the arrangement target T, it is possible to reduce time and effort required for work of arranging the at least one arrangement target T as compared with a case where the user performs all operations of arranging the arrangement target T by manual operation.

### [Regarding second aspect]

In a second aspect, in a case where the at least one arrangement target T includes the first arrangement target and the second arrangement target, a position of the first arrangement target T at the work site S is set, and a position of the second arrangement target T at the work site S is not set, the computer 13 sets a position of the second arrangement target T based on a position of the first arrangement target T. Specifically, as illustrated in FIG. 3A, the computer 13 calculates the unset position P12 based on the set position P11. The set position P11 is a position of the arrangement target T (see FIG. 1) whose position is already set. The unset position P12 is a position of the arrangement target T (see FIG. 1) whose position is not set. The set position P11 is a position of at least a part of the work machine 40 arranged in a virtual space.

In the second aspect, the computer 13 automatically calculates the unset position P12 based on the set position P11 which is a position of at least a part of the work machine 40 arranged in a virtual space. Therefore, it is possible to reduce time and effort required for work of setting the unset position P12 as compared with a case where the user performs all settings of the unset position P12 by manual operation.

Specifically, for example, the computer 13 may set the work machine area A40, which is the area A associated with a position of the work machine 40. The set position P11 may be a position of the work machine area A40. In this case, the computer 13 automatically calculates the unset position P12 based on the work machine area A40 which is the set position P11. Therefore, it is possible to reduce time and effort required for work of setting the unset position P12 as compared with a case where the user performs all settings of the unset position P12 by manual operation.

### [Regarding third aspect]

In the third aspect, in a case where the at least one arrangement target T includes the work machine 40, a position of a first specific portion of the work machine 40 at the work site S is set, and a position of a second specific portion of the work machine 40 at the work site S is not set, the computer 13 sets a position of the second specific portion based on a position of the first specific portion.

In the third aspect, the computer 13 can set a position of the second specific portion based on a position of the first specific portion. Therefore, as compared with a case where the user performs manual operation for positions of both the first specific portion and the second specific portion, it is possible to reduce time and effort required for position setting work.

### [Regarding fourth aspect]

A fourth aspect is a specific example of the third aspect. In the fourth aspect, as illustrated in FIG. 4B, the work machine 40 includes the machine body 41 and the attachment 43. The attachment 43 can be raised and lowered with respect to the machine body 41. The attachment 43 includes the tip attachment 43c and the base end side attachment 43a. The tip attachment 43c is located at a tip portion of the attachment 43. The base end side attachment 43a is arranged between the tip attachment 43c and the machine body 41. The set position P11 is the work position P43c and the work machine arrangement position P40c. The work position P43c is a position of at least a part of the tip attachment 43c when the work machine 40 works. The work machine arrangement position P40c is a position where the machine body 41 is arranged. The unset position P12 is a position of the base end side attachment 43a. Each of the work position P43c and the work machine arrangement position P40c is an example of a position of the first specific portion. A position of the base end side attachment 43a is an example of the position of the second specific portion.

In the fourth aspect, the computer 13 automatically calculates a position (unset position P12) of the base end side attachment 43a based on the work position P43c as the set position P11 and the work machine arrangement position P40c as the set position P11. Therefore, as compared with a case where the user performs all settings of a position of the base end side attachment 43a by manual operation, it is possible to reduce time and effort required for work of setting a position of the base end side attachment 43a.

### [Regarding fifth aspect]

In a fifth aspect, after the work position P43c is set, the work machine arrangement position P40c is set.

In the fourth aspect described above, the work position P43c and the work machine arrangement position P40c are set as the set position P11. Here, a case where a position suitable as the work position P43c is determined in advance is assumed. In such a case, it is convenient for the user if the work machine arrangement position P40c is set after the work position P43c is set as in the fifth aspect.

### [Regarding sixth aspect]

In a sixth aspect, the work position P43c is set after the work machine arrangement position P40c is set.

In the fourth aspect described above, the work position P43c and the work machine arrangement position P40c are set as the set position P11. Here, a case where a position suitable as the work machine arrangement position P40c is determined in advance is assumed. In such a case, it is convenient for the user if the work position P43c is set after the work machine arrangement position P40c is set as in the sixth aspect.

### [Regarding seventh aspect]

In a seventh aspect, the computer 13 determines whether or not a posture of the work machine 40 when the tip attachment 43c is arranged at the work position P43c and the lower travelling body 41a is arranged at the work machine arrangement position P40c is a possible posture of the work machine 40.

In the above-described fourth aspect, a position of the base end side attachment 43a (unset position P12) is calculated based on positions of the work position P43c and the work machine arrangement position P40c (the set positions P11). However, depending on positions of the work position P43c and the work machine arrangement position P40c, a posture of the work machine 40 may not be established. Therefore, the work simulator 1 includes a configuration according to the seventh aspect. Therefore, the computer 13 can automatically determine whether or not a posture of the work machine 40 corresponding to the work position P43c and the work machine arrangement position P40c is a possible posture of the work machine 40.

### [Regarding eighth aspect]

In an eighth aspect, the work machine 40 includes the machine body 41 and the attachment 43. The attachment 43 can be raised and lowered with respect to the machine body 41. The attachment 43 includes the tip attachment 43c located at a tip portion of the attachment 43. As illustrated in FIG. 7A, the computer 13 sets the workable area A40b. The workable area A40b is an area where the tip attachment 43c is capable of being arranged when the attachment 43 is operated.

In the eighth aspect, the computer 13 can perform processing (for example, causing the output device 15 to perform display) based on the workable area A40b.

### [Regarding ninth aspect]

In a ninth aspect, the computer 13 sets the limited workable area A40b1 as illustrated in FIG. 7B. The limited workable area A40b1 is set based on a workable area limit value set in the computer 13. The limited workable area A40b1 is within a range of the workable area A40b and is narrower than the workable area A40b.

In the ninth aspect, the computer 13 can perform processing based on the limited workable area A40b1. Specifically, for example, the computer 13 may cause the output device 15 to display the limited workable area A40b1, and may calculate a value indicating a workable amount of the work machine 40 in the limited workable area A40b1.

### [Regarding tenth aspect]

In a tenth aspect, as illustrated in FIG. 9, the computer 13 causes the output device 15 to simultaneously display a plurality of fields of view (for example, the first view V1 and the second view V2) from different positions in a virtual space.

In the tenth aspect, the user can simultaneously check a plurality of fields of view (for example, the first view V1 and the second view V2). For example, the user can perform work of arranging the arrangement target T (see FIG. 1) while checking a plurality of fields of view.

### [Regarding eleventh aspect]

In an eleventh aspect, as illustrated in FIG. 10A, the computer 13 sets three or more predetermined points on a lower surface of the work machine 40 as the grounding determination point P21. As illustrated in FIG. 10B, the computer 13 calculates a position of the projected grounding determination point P23 obtained by projecting the grounding determination point P21 onto the ground surface 31a. The computer 13 calculates a three-dimensional rotation angle of the grounding surface P25 calculated based on three or more of the projected grounding determination points P23. As illustrated in FIG. 10C, the computer 13 rotates the work machine 40 so that a three-dimensional rotation angle of the grounding surface P25 coincides with a three-dimensional rotation angle of a lower surface of the work machine 40. The computer 13 arranges the work machine 40 such that a lower surface of the work machine 40 and the grounding surface P25 coincide with each other.

In the eleventh aspect, it is possible to reduce calculation load of calculation regarding arrangement of the work machine 40 on the ground surface 31a as compared with a case where a contact state between an entire lower surface of the work machine 40 and the ground surface 31a is calculated (for example, [Arrangement example 1] described above).

### [Regarding twelfth aspect]

In a twelfth aspect, the computer 13 has a function of operating the work machine 40 in a state where the arrangement target T is arranged in a virtual space.

In the twelfth aspect, it is possible to simulate, in a virtual space, a situation when the work machine 40 operates at the work site S where the arrangement target T is arranged. Therefore, the user or the computer 13 can check (verify) what kind of situation is obtained when the work machine 40 operates at the work site S.

### [Regarding thirteenth aspect]

In a thirteenth aspect, as illustrated in FIG. 4B, the work machine 40 includes the lower travelling body 41a, the upper slewing body 41b, and the attachment 43. The upper slewing body 41b is capable of slewing with respect to the lower travelling body 41a. The attachment 43 can be raised and lowered with respect to the upper slewing body 41b.

In the thirteenth aspect, the work machine 40 is a machine (specifically, an excavator, a crane, and the like) including the upper slewing body 41b capable of slewing with respect to the lower travelling body 41a and the attachment 43 that can be raised and lowered with respect to the upper slewing body 41b. In the work simulator 1, it is possible to assist arrangement of the arrangement target T to the work site S where the work machine 40 performs work.

Next, fourteenth to nineteenth aspects will be described.

The work simulator 1 according to the fourteenth to nineteenth aspects can solve a problem as described below. In a virtual space, various areas are set. For example, even if the user makes an attempt to determine a state of interference between areas by visually checking display, there is a possibility that the state of interference cannot be appropriately determined. For this reason, it is desired that a state of interference between areas in a virtual space is reliably determined.

The work simulator 1 according to the fourteenth to nineteenth aspects can reliably determine a state of interference between areas in a virtual space.

### [Regarding fourteenth aspect]

In the fourteenth aspect, as illustrated in FIG. 8A, the computer 13 determines a state of interference between the work machine area A40 and the determination target area A73. The work machine area A40 is set in association with a position of the work machine 40 arranged in a virtual space. The determination target area A73 is the area A set in a virtual space.

In the fourteenth aspect, the computer 13 automatically determines a state of interference between the work machine area A40 and the determination target area A73. Therefore, for example, a state of interference between the work machine area A40 and the determination target area A73 can be reliably determined as compared with a case where the user determines whether or not the work machine area A40 and the determination target area A73 interfere with each other by visually checking display. Therefore, a state of interference between the areas A in a virtual space can be reliably determined.

### [Regarding fifteenth aspect]

In the fifteenth aspect, the computer 13 limits arrangement of the work machine 40 so that the work machine area A40 of the work machine 40 which is about to be arranged does not interfere with the determination target area A73.

In the fifteenth aspect, for example, it is possible to reduce time and effort required for work of arranging the work machine 40 as compared with a case where the user performs work of arranging the work machine 40 while visually checking display so that the work machine area A40 and the determination target area A73 do not interfere with each other.

### [Regarding sixteenth aspect]

In a sixteenth aspect, as illustrated in FIG. 9, the computer 13 arranges the second work machine 50 different from the work machine 40. The computer 13 sets the second work machine area A50 associated with a position of the second work machine 50. The computer 13 determines a state of interference between the work machine area A40 and the second work machine area A50 when each of the work machine 40 and the second work machine 50 is operated.

In the sixteenth aspect, it is possible to reliably determine a state of interference between the work machine area A40 and the second work machine area A50 when a plurality of machines (the work machine 40 and the second work machine 50) operate.

### [Regarding seventeenth aspect]

In the seventeenth aspect, the work machine 40 operates simultaneously with operation by the user according to operation by the user (see the above-described operator operation mode), or operates based on information stored in advance according to operation by the user (see the above-described teaching).

In the seventeenth aspect, it is possible to reliably determine a state of interference between the work machine area A40 and the determination target area A73 when the work machine 40 is operated by operation desired by the user.

### [Regarding eighteenth aspect]

In the eighteenth aspect, the computer 13 stores a posture of the work machine 40 when the work machine area A40 and the determination target area A73 interfere with each other.

In the eighteenth aspect, information on a posture of the work machine 40 when the work machine area A40 and the determination target area A73 interfere with each other can be used (for example, checked) after interference determination.

### [Regarding nineteenth aspect]

In the nineteenth aspect, the computer 13 causes the output device 15 to display an overhead field of view of the work machine 40 and the determination target area A73, or causes the output device 15 to display a field of view of the determination target area A73 from the work machine 40 (see the second view V2).

In the nineteenth aspect, since an overhead field of view of the work machine 40 and the determination target area A73 is displayed on the output device 15, the user can grasp a relative position between the work machine 40 corresponding to the work machine area A40 and the determination target area A73. When a field of view of the determination target area A73 viewed from the work machine 40 is displayed on the output device 15, an effect below can be obtained. In this case, it is possible to allow the user to grasp how it looks when viewed from the work machine 40 corresponding to the work machine area A40 toward the determination target area A73.

### [Regarding thirtieth aspect]

In a thirtieth aspect, as illustrated in FIG. 1, a work simulation program is a program for simulating the work site S where the work machine 40 performs work in a virtual space. The work simulation program causes the computer 13 to execute the arrangement step and the arrangement assisting step. In the arrangement step, the arrangement target T, which is at least one of the object 30 and the area A, is arranged in a virtual space. The arrangement assisting step assists arrangement of the arrangement target T.

In the thirtieth aspect, the arrangement assisting step assists arrangement of the arrangement target T. Therefore, it is possible to reduce time and effort required for work of arranging the arrangement target T as compared with a case where the user performs all operations of arranging the arrangement target T by manual operation.

### [Regarding thirty-first aspect]

In a thirty-first aspect, a work simulation program is a program for simulating the work site S where the work machine 40 performs work in a virtual space. The work simulation program causes the computer 13 to execute the interference determination step. In the interference determination step, a state of interference between the work machine area A40 and the determination target area A73 is determined. The work machine area A40 is set in association with a position of the work machine 40 arranged in a virtual space. The determination target area A73 is the area A set in a virtual space.

In the thirty-first aspect, the computer 13 can automatically determine a state of interference between the work machine area A40 and the determination target area A73. Therefore, for example, a state of interference between the work machine area A40 and the determination target area A73 can be reliably determined as compared with a case where the user determines whether or not the work machine area A40 and the determination target area A73 interfere with each other by visually checking display. Therefore, a state of interference between the areas A in a virtual space can be reliably determined.

### [Regarding thirty-third aspect]

In a thirty-third aspect, a work simulation method is a method of simulating, in a virtual space, the work site S where the work machine 40 performs work. The work simulation method includes the arrangement step and the arrangement assisting step. In the arrangement step, the arrangement target T, which is at least one of the object 30 and the area A, is arranged in a virtual space. The arrangement assisting step assists arrangement of the arrangement target T.

In the thirty-third aspect, the arrangement assisting step assists arrangement of the arrangement target T. Therefore, it is possible to reduce time and effort required for work of arranging the arrangement target T as compared with a case where the user performs all operations of arranging the arrangement target T by manual operation.

### [Regarding thirty-fourth aspect]

In the thirtieth aspect, a work simulation method is a method of simulating, in a virtual space, the work site S where the work machine 40 performs work. The work simulation method includes the interference determination step. In the interference determination step, a state of interference between the work machine area A40 and the determination target area A73 is determined. The work machine area A40 is set in association with a position of the work machine 40 arranged in a virtual space. The determination target area A73 is the area A set in a virtual space.

In a thirty-fourth aspect, a state of interference between the work machine area A40 and the determination target area A73 can be determined. Therefore, for example, a state of interference between the work machine area A40 and the determination target area A73 can be reliably determined as compared with a case where the user determines whether or not the work machine area A40 and the determination target area A73 interfere with each other by visually checking display. Therefore, a state of interference between the areas A in a virtual space can be reliably determined.

### (Variation)

The work simulator 1 illustrated in FIG. 1 may include at least some of constituent elements of a remote operation device for remotely operating an actual machine (an actual machine configured similarly to the work machine 40). The work simulator 1 may use a constituent element of a remote operation device. For example, the work simulator 1 may be mounted on a remote operation device. For example, a remote operation device includes the input device 11, the computer 13, and the output device 15. The input device 11 includes an operation device (for example, an operation lever and an operation pedal), and outputs an operation signal (a lever operation signal and a pedal operation signal) corresponding to operation of the operation device. At the time of remote operation, the computer 13 exchanges a signal with an actual machine to be remotely operated via communicating means. At the time of remote operation, the computer 13 transmits, to an actual machine, an operation command signal that is a signal for operating a work device (a device corresponding to the attachment 43 illustrated in FIG. 4B), a travelling device (a device corresponding to the lower travelling body 41a illustrated in FIG. 4B), or the like of the actual machine based on an operation signal input from the input device 11. At the time of remote operation, the computer 13 receives image data of a camera mounted on an actual machine, a signal output from a sensor mounted on an actual machine, and the like via communicating means. The output device 15 (specifically, a monitor) outputs image data (data acquired by the computer 13) of a camera mounted on an actual machine at the time of remote operation.

The configuration may be such that the work simulator 1 includes only some of constituent elements of a remote operation device. For example, the input device 11 may use a constituent element of a remote operation device, and each of the computer 13 and the output device 15 may not use a constituent element of a remote operation device. Further, for example, each of the input device 11 and the output device 15 may use a constituent element of a remote operation device, and the computer 13 may not use a constituent element of a remote operation device.

In a case where the work simulator 1 includes the input device 11 of a remote operation device, the user can operate the work machine 40 in a virtual space by using the input device 11 of the remote operation device for remotely operating an actual machine (see, for example, the operator operation mode described above). Therefore, the user can physically experience an operational feel of an actual machine by operating the work machine 40 in a virtual space. As a result, for example, the user's proficiency in operating a remote operation device is promoted. Further, for example, it is possible to easily make an assumption (such as what kind of situation occurs) in a case where an actual machine of an actual work site (corresponding to the work site S) is operated by a remote operation device.

In a case where the work simulator 1 includes the output device 15 of a remote operation device, the user can operate the work machine 40 in a virtual space while viewing the output device 15 of the remote operation device that the user views when remotely operating an actual machine. Further, in this case, the output device 15 of the work simulator 1 can also be used as the output device 15 of a remote operation device. Therefore, it is not necessary to use a device (such as a monitor) different from the output device 15 of a remote operation device as the output device 15 of the work simulator 1.

When the work simulator 1 includes the input device 11 of a remote operation device and the output device 15 of the remote operation device, an effect below can be obtained. In this case, the user can operate the work machine 40 in a virtual space by operating the input device 11 of the remote operation device that the user operates when remotely operating an actual machine while viewing the output device 15 of the remote operation device that the user views when remotely operating the actual machine. Therefore, as compared with a case where the work simulator 1 includes only one of the input device 11 of a remote operation device and the output device 15 of the remote operation device, the user can physically experience a feel closer to an operational feel of an actual machine.

### (Another variation)

The above embodiment and variation may be modified in various ways. For example, various examples (including a variation) of the above-described embodiments may be combined in various ways. For example, the connection of constituent elements illustrated in FIG. 1 or the like may be changed. For example, the number of constituent elements of the above-described embodiment (including a variation) may be changed, and some of constituent elements may be omitted. The "constituent elements" include a constituent element (specifically, the object 30 and the area A) in a virtual space (the same applies hereinafter). For example, arrangement of a constituent element may be changed. For example, an inclusion relationship of constituent elements may be changed in various ways. For example, a constituent element described as a lower-level constituent element included in a certain higher-level constituent element is not required to be included in the higher-level constituent element, and may be included in another constituent element. For example, a plurality of members and portions that are described as different from each other may be described as one member and portion. For example, what is described as one member or portion may be divided into a plurality of members and a plurality of portions different from each other. For example, order of steps in the flowchart illustrated in FIG. 2 or the like may be changed, and some of the steps do not need to be performed, and, for example, the configuration may be such that each constituent element has only some features (function, arrangement, shape, operation, and the like).

### [Another embodiment]

Next, a work simulator (operation verification device), a work simulation program (operation verification program), and a work simulation method (operation verification method) according to another embodiment will be described with reference to FIGS. 11 to 20.

First, a problem to be solved by the work simulator, the work simulation program, and the work simulation method according to another embodiment will be described. Patent Literature 2 described above describes a management system that executes a simulation of a work machine, but a state in a virtual space can be desirably reset at a desired timing in a simulation of a work machine.

The work simulator 1 (operation verification device) according to the other embodiment includes the computer 13 that simulates, in a virtual space, a work site including the work machine 40 and a surrounding environment as a work target of the work machine 40. The computer 13 resets a state in the virtual space to a state at a designated timing.

The work simulation program (operation verification program) according to the other embodiment is a program for simulating, in a virtual space, a work site including the work machine 40 and a surrounding environment as a work target of the work machine 40. The work simulation program causes the computer 13 to execute the reset step of resetting a state in the virtual space to a state at a designated timing.

The work simulation method (operation verification method) according to the other embodiment is a method of simulating, in a virtual space, a work site including the work machine 40 and a surrounding environment as a work target of the work machine 40. The work simulation method includes the reset step of resetting a state in the virtual space to a state at a designated timing.

According to said another embodiment, a state in a virtual space in which the work simulation is performed can be reset to a desired timing.

Hereinafter, the work simulator 1 will be described with reference to FIGS. 11 to 20. The work simulator 1 may be referred to as the operation verification device.

As illustrated in FIG. 11, the work simulator 1 is a simulator that performs a work simulation that is a simulation for simulating a work site in a virtual space. The work simulator 1 may include at least one information terminal. The information terminal may be a personal computer, a portable information terminal such as a tablet or a smartphone, or another type of information terminal. The work simulator 1 includes an input device 11, the computer 13, and the output device 15. The work simulator 1 may include a client device 10 and a server device 20. The output device 15 may be a display device.

The input device 11 is a device for inputting information to the computer 13. The input device 11 includes an operation input device 11a and an information input device 11b.

The operation input device 11a is operated by the user (a worker, an operator, or the like) of the work simulator 1. Operation of the operation input device 11a by the user is also referred to as "manual operation". The operation input device 11a may be used for setting, designation, selection, and the like of a position in a virtual space. The operation input device 11a may be used for setting the object 30 in a virtual space. The operation input device 11a may be used for operating the work machine 40 in a virtual space. For example, the operation input device 11a may be used for an instruction to start and end operation of the work machine 40 in a virtual space, may be used for a travelling instruction for the work machine 40 in a virtual space, may be used for a slewing instruction for the upper slewing body 41b (see FIG. 11) in a virtual space, or may be used for an instruction to operate the attachment 43 (see FIG. 11) in a virtual space. For example, the operation input device 11a may include at least one of a mouse, a keyboard, a touch panel, and a game pad. The operation input device 11a may include operation levers that simulate left and right operation levers in an actual work machine (a machine corresponding to the work machine 40), or may include operation pedals modeled after left and right operation pedals (foot pedals) in an actual work machine.

The information input device 11b is a device for inputting various types of information (excluding information by operation of the operation input device 11a) to the computer 13. The various types of information may be, for example, information regarding the object 30 (described later) and request information input by the user regarding a reset timing (described later).

The computer 13 includes a computer that performs input and output of a signal, arithmetic operation, storage of information, and the like. The computer 13 includes a storage unit 13a and an arithmetic unit 13b. The computer 13 generates the work site S simulating a work site in a virtual space. A function of the computer 13 is realized by the arithmetic unit 13b executing a work simulation program (operation verification program) that is a program stored in the storage unit 13a. Examples of the function of the computer 13 include a function of the object processing unit 13b1 and a function of a reset timing processing unit 13b3 to be described later.

The computer 13 and another device may be connected by wireless communication or wired communication. Another device described above may be, for example, the input device 11 or the output device 15. Information output from the input device 11 is input to the computer 13. The computer 13 outputs information to the output device 15. The computer 13 (specifically, the computer 13 of the client device 10) may exchange information with the server device 20. Exchange between the computer 13 of the client device 10 and the server device 20 is performed through communicating means such as a mobile phone line, an optical line, a wireless local area network (LAN), or a wired LAN.

The storage unit 13a stores various types of information. The storage unit 13a stores a work simulation program. The storage unit 13a stores history information of a state in a virtual space. The storage unit 13a may store, for example, a state of the object 30 as a state in a virtual space. The state of the object 30 may include, for example, information on arrangement of the object 30 at the work site S in a virtual space.

The storage unit 13a stores the reset timing. The storage unit 13a stores an interval of fixed time. The storage unit 13a stores a task determination condition. The storage unit 13a stores an event determination condition. The storage unit 13a stores authentication information for a login. The authentication information may be stored in the storage unit 13a of the server device 20. The history information, the reset timing, the fixed time, the task determination condition, and the event determination condition will be described later.

The arithmetic unit 13b performs processing such as calculation and determination. The arithmetic unit 13b includes the object processing unit 13b1 and the reset timing processing unit 13b3. The object processing unit 13b1 performs processing of the object 30. The reset timing processing unit 13b3 performs processing of storing a timing that is a resetting candidate in the storage unit 13a. These types of processing will be described later.

Although not illustrated, the arithmetic unit 13b may include an authentication processing unit. The authentication processing unit performs processing of authenticating a login of the user. The authentication processing unit performs identification of the user by using user identification information. The user identification information may be stored in the storage unit 13a in association with the reset timing. The user identification information may be, for example, a user name, a user ID, or the like. The authentication processing may be executed in the arithmetic unit 13b of the server device 20.

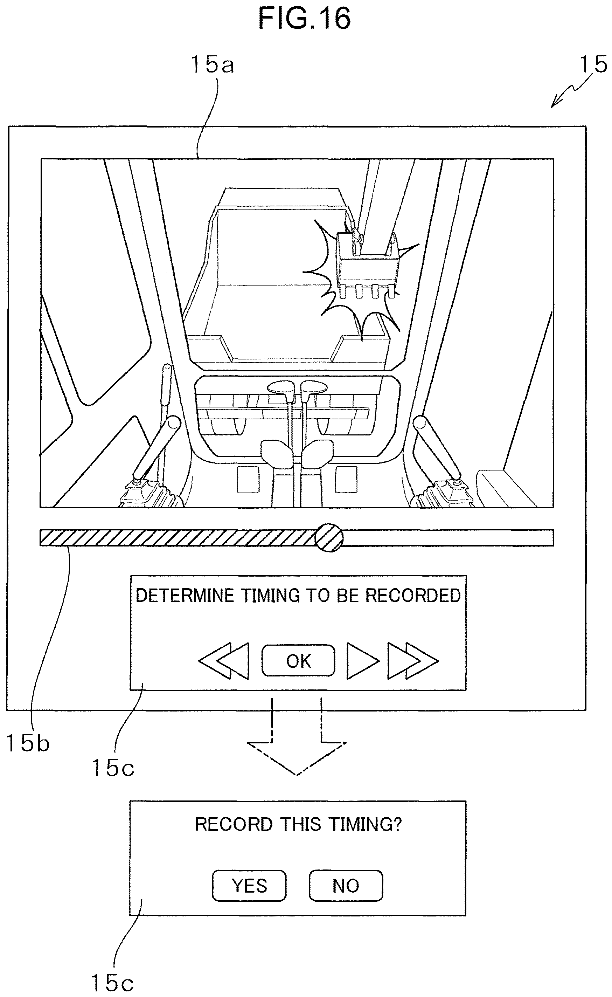

The output device 15 performs output according to a command input from the computer 13. Specifically, the output device 15 may perform display according to a command input from the computer 13, for example. The output device 15 may output a recorded video 15a illustrated in FIG. 16, for example. The output device 15 may display a field of view from the cab 41b2 in the operator operation mode (described later). The output device 15 may be, for example, a monitor having a screen. The output device 15 may display a calculation result of the computer 13. The output device 15 displays a virtual space calculated by the computer 13. The output device 15 displays a graphical user interface (GUI) for the user to perform operation of a work simulation. The output device 15 displays a GUI related to designation of a reset timing (described later). In description below, display of the output device 15 is display that the computer 13 causes the output device 15 to perform. The output device 15 may output sound.

The server device 20 includes a computer that operates in accordance with a command from the client device 10. The client device 10 includes the input device 11, the computer 13, and the output device 15. The server device 20 may store authentication information used by the arithmetic unit 13b to perform processing regarding authentication of the user. Further, the server device 20 may execute an authentication processing for authenticating the user. A function (for example, a function of the object processing unit 13b1 and a function of the reset timing processing unit 13b3) of the work simulator 1 may be realized by the client device 10 and the server device 20. A part of the computer 13 (for example, one of the storage unit 13a and the arithmetic unit 13b) may be included in the client device 10, and another part of the computer 13 (for example, the other of the storage unit 13a and the arithmetic unit 13b) may be included in the server device 20. The work simulator 1 may include a plurality of the server devices 20. Note that the work simulator 1 does not need to include the server device 20. The input device 11 may be included in the server device 20 (not illustrated). In this case, for example, information (for example, the various types of information described above) may be input from the input device 11 included in the server device 20 to the computer 13 included in the client device 10.

The work simulator 1 (mainly the computer 13) is configured to perform a work simulation below. A work simulation program (operation verification program) causes the computer 13 to execute a work simulation below. A work simulation method (operation verification method) is a method in which a work simulation below is performed.

The work simulator 1 generates the work site S simulating a work site in a virtual space. The work site S is a site model (construction site model) in which the work machine 40 as a work machine model performs work in a virtual space. The work site S includes the work machine 40 and a surrounding environment. The surrounding environment may include the terrain 31 as a work target of the work machine 40. Each of the work machine 40 and a surrounding environment is an example of the arrangement target T.

For example, the work simulator 1 (construction plan simulator) is used to make a construction plan which is a plan of the work site S. The work simulator 1 is used to make a plan related to the work machine 40 at the work site S. The work simulator 1 is used to check a position, size, workability (productivity), safety, and the like of the work machine 40. The work simulator 1 may be used to make a plan for an object other than the work machine 40. The work simulator 1 has an object processing function. The work simulator 1 may have various functions such as the operation mode switching function and a time change function. For example, the work simulator 1 may have a function of recording (storing) a situation or the like at the work site S, and may have a function of reproducing a recorded situation.

### [Object processing function]

The object processing unit 13b1 of the computer 13 performs processing on the object 30 that is an example of the arrangement target T (an object processing function and an object processing step). The object 30 is a model of an object modeled from an object in the work site S in a virtual space. The object 30 may be a three-dimensional model or a two-dimensional model.

Processing of the object 30 includes deletion of the object 30 in a virtual space, arrangement of the object 30 in a virtual space, and resetting of the object 30. That is, the processing of the object 30 includes deleting the object 30 arranged in a virtual space from the virtual space, arranging the object 30 in a virtual space, and resetting a state of the object 30 in a virtual space to a state at a designated timing.

The arrangement of the object 30 includes new arrangement of the object 30 in a virtual space, movement of the object 30 in a virtual space, and initial arrangement of the object 30 in a virtual space. The new arrangement of the object 30 is to newly arrange the object 30 at the work site S in a virtual space. The movement of the object 30 is to move the object 30 already present at the work site S in a virtual space.

Movement of the object 30 may include rotational movement of the object 30, or may include parallel movement of the object 30. The movement of the object 30 may include a posture change of the work machine 40 in a virtual space. The posture change of the work machine 40 is to change a posture of the work machine 40 in a virtual space. The movement of the object 30 may be deformation of the terrain 31 in a virtual space. The deformation of the terrain 31 is to deform the terrain 31 in a virtual space.

In a case where the object 30 is arranged in a virtual space, the computer 13 stores a position of the object 30 arranged in a virtual space.

The computer 13 stores history information that is information regarding a history of a state in a virtual space. The object processing unit 13b1 of the computer 13 stores a history of a state of the object 30. The object processing unit 13b1 may store a change in a state of the object 30 in time series. For example, the object processing unit 13b1 stores a history of a position of the object 30 for each time.

The object processing unit 13b1 may store a history of physical quantities other than a position for the object 30. For example, the object processing unit 13b1 may store a history of physical quantity information such as a remaining amount of fuel, operating time, and fuel consumption for the work machine 40 as the object 30. The object processing unit 13b1 may record a movement amount per unit time of a work object moved by the work machine 40 as a history. The work object is, for example, at least one of earth and sand, metal, wood, and the like. The object processing unit 13b1 may store a total movement amount of the work object moved by the work machine 40 as a history. The object processing unit 13b1 may store the number of times of movement (the number of cycles) between predetermined points as a history. Between predetermined points is, for example, between a predetermined position on a ground surface and a cargo bed of a dump truck. The object processing unit 13bl may record the number of cycles per unit time as a history. The object processing unit 13b1 may record an operation ratio of each drive unit of the work machine 40 as a history. The operation ratio of a drive unit may be, for example, a ratio of slewing time of the upper slewing body 41b to operation time of the work machine 40. The object processing unit 13b1 may record an operation ratio of each operation lever of the work machine 40 as a history. For example, the object processing unit 13b1 may store a history of a position, orientation, amount, shape, and the like of the object 30 other than the work machine 40. The object processing unit 13b1 may store a history of states of all the objects 30 existing in a virtual space. The object processing unit 13b1 may permanently store a history of a state of the object 30 or may delete (temporarily store) the history in predetermined time.

The "resetting of the object 30" described above is to change a state of the object 30 to a state of the object 30 at a designated reset timing. A timing for resetting may be designated by the user or may be designated based on a predetermined condition. In a case of resetting the object 30, the object processing unit 13b1 reflects a state of the object 30 identified at a designated timing on a state of the object 30 after resetting.

The resetting may be performed on all the objects 30 in a virtual space. The resetting may be performed on some of the objects 30 in a virtual space. The resetting may be performed excluding a predetermined target. For example, a resetting target to be reset may be a position and/or posture of a dump truck. For example, a resetting target may be arrangement of a work object. A work object to be reset may be a stone, wood, metal, resin, waste, scrap, or a structure (block or the like). For example, a predetermined target excluded from resetting may be a position and/or posture of the work machine 40. For example, a predetermined target excluded from resetting may be the object 30 arranged on a surrounding environment (around the work machine 40). For example, a predetermined target excluded from resetting may be the object 30 that is not deformed. The "object 30 that is not deformed" may be the object 30 that is not deformed even when in contact with the work machine 40 or the like, and may be, for example, the object 30 having a block shape modeled after a building (factory or the like).

Processing of the object 30 may include management of the object 30 in a virtual space. The management of the object 30 is to manage the object 30 arranged in a virtual space. The management of the object 30 may include, for example, managing a plurality of the objects 30 in a list format. The processing of the object 30 may include switching between display and non-display states for each of the objects 30 in the output device 15.

Hereinafter, an event in a virtual space will be described unless otherwise specified. For example, "the work machine 40 is arranged on a ground surface 31a" means that the work machine 40, which is an example of the object 30, is arranged on the ground surface 31a, which is an example of the object 30, in a virtual space.

A condition under which the computer 13 performs processing of the object 30 is as described below, for example. The computer 13 may perform processing of the object 30 when manual operation by the user is given to the input device 11. That is, the computer 13 may perform processing of the object 30 according to manual operation by the user. The computer 13 may automatically perform processing of the object 30 when a preset condition is satisfied in the computer 13.

A position of the object 30 will be described. A computer may store a reference position of the object 30 in a virtual space as a position of the object 30. The computer 13 may store a reference position of the object 30 in a virtual space and a direction of the object 30 in the virtual space as a position of the object 30.

The reference position of the object 30 is a position as a reference of the object 30. For example, the reference position of the object 30 may be a center position of a lower surface of the object 30 or a center of gravity position of the object 30. The direction of the object 30 may be defined by a relative orientation of the object 30 with respect to a predetermined coordinate axis. The direction of the object 30 may be defined by a relative posture of the object 30 with respect to a predetermined coordinate axis. A direction of the object 30 may be defined by a rotation angle with respect to a predetermined coordinate axis.

A specific example of the object 30 is as described below. In the present embodiment, the at least one arrangement target T includes a plurality of the objects 30. A plurality of the objects 30 may include the terrain 31 (surrounding environment information), the work machine 40, and the other objects 30. The other object 30 may include, for example, an obstacle and equipment.

As illustrated in FIG. 11, the terrain 31 includes information on a shape of the land of the work site S in a virtual space. The terrain 31 may have a two-dimensional shape or a three-dimensional shape. The terrain 31 may include, for example, the flat ground, an inclined surface (for example, slope face), irregularities, and the like. The terrain 31 may include the ground surface 31a and an underground portion 31b. The ground surface 31a is a surface (ground surface) of the terrain 31, and is, for example, a surface such as earth and sand. The underground portion 31b is a portion below the ground surface 31a in the terrain 31, and is, for example, a portion where earth and sand exist.

The terrain 31 may be a terrain model simulating actual land. In this case, the terrain 31 may include information regarding a shape generated based on detection information on actual land. In this case, the detection information of actual land may be information detected by an information acquisition device. The information acquisition device may be a stereo camera, a distance sensor, or a combination of a distance sensor and a two-dimensional camera. The distance sensor may be, for example, light detection and ranging (LIDAR) or a millimeter wave radar. The information acquisition device may be a device included in the information input device 11b, or may be a device different from the information input device 11b. The information acquisition device inputs detection information of actual land to the computer 13.

Furthermore, the terrain 31 may include shape information (shape information of the terrain 31) based on design data designed on a computer. The design data may be data related to a design surface designed on a computer. The computer on which design data is designed may be the work simulator 1 or a computer other than the work simulator 1.

The computer 13 may set the terrain 31 in a virtual space as illustrated in FIG. 11 and store the set terrain 31 in the storage unit 13a. The computer 13 may set only a single portion of the terrain 31 or a plurality of portions of the terrain 31 in a virtual space. A plurality of portions of the terrain 31 may include the terrain 31 before work in a virtual space, may include the terrain 31 in the middle of work in a virtual space, and may include the terrain 31 after completion of work in a virtual space (completed terrain 31).

Similarly, for the objects 30 other than the terrain 31, the computer 13 may set only a single one of the objects 30 or may set a plurality of the objects 30 in a virtual space.

The shape information of the terrain 31 may be input from the input device 11 to the computer 13, for example. That is, the computer 13 may read the shape information of the terrain 31 from the input device 11. When the user inputs the shape information of the terrain 31 to the input device 11, the computer 13 can acquire the shape information of the terrain 31 input to the input device 11 from the input device 11.

Similarly, for the object 30 other than the terrain 31, the computer 13 can acquire shape information of the object 30 input to the input device 11 from the input device 11.

The computer 13 may deform the terrain 31 in a virtual space as time elapses in a work simulation. That is, the computer 13 may change display of the terrain 31 on the output device 15 as time elapses. A specific example of a case where the computer 13 deforms the terrain 31 is as described below.

In a specific example illustrated in FIG. 11, the work machine 40 operates in a virtual space, and the tip attachment 43c performs work on the terrain 31 (for example, earth and sand). For example, in a virtual space, the work machine 40 performs operation of excavating the ground surface 31a. In such a case, the computer 13 may deform the terrain 31 according to work on the terrain 31 in a virtual space as time elapses. That is, the computer 13 may change display of the terrain 31 on the output device 15 according to work on the terrain 31. For example, in a virtual space, the computer 13 may deform the terrain 31 into a shape such as a hole or a groove formed by excavating earth and sand as time elapses. For example, in a virtual space, the computer 13 may deform the terrain 31 into a shape of an earth pile formed by discharge of earth and sand and depositing of earth and sand as time elapses.

The work machine 40 is a model of a work machine that performs work, and is, for example, a model of a construction machine that performs construction work. The work machine 40 may be, for example, a model of an excavator, a model of a crane, a model of a bulldozer, a model of a wheel loader, or a model of a dump truck (transport vehicle). Hereinafter, a case where the work machine 40 is an excavator will be mainly described. The work machine 40 includes a machine body 41 and the attachment 43. The machine body 41 is a main body portion of the work machine 40. The machine body 41 includes a lower travelling body 41a and the upper slewing body 41b.

The computer 13 may output a command to operate the work machine 40 in a virtual space. The computer 13 may operate the work machine 40 in a virtual space based on preset information. The output device 15 may perform display in which the work machine 40 operates according to the command input from the computer 13. The preset information may be, for example, information regarding a series of operations of the work machine 40 in work performed by the work machine 40. The storage unit 13a may store the information.

The computer 13 may operate the work machine 40 in a virtual space according to manual operation by the user given to the input device 11 (see an operator operation mode to be described later). The computer 13 may output a command according to manual operation by the user to the output device 15, and the output device 15 may display an image for operating the work machine 40 in a virtual space based on the command input from the computer 13. By this, the work machine 40 performs movement corresponding to manual operation by the user on a screen of the output device 15. Specifically, the computer 13 may cause the work machine 40 to travel in a virtual space, may cause the upper slewing body 41b to slew with respect to the lower travelling body 41a in a virtual space, or may change a posture of the attachment 43 in a virtual space. Note that the computer 13 does not need to operate the work machine 40 in a virtual space. That is, the work machine 40 may be simply arranged at the work site S in a virtual space.

The computer 13 can cause the lower travelling body 41a to travel on a travelling surface such as the ground surface 31a in a virtual space. The computer 13 may cause the output device 15 to perform display for causing the lower travelling body 41a to travel according to manual operation by the user given to the input device 11. The lower travelling body 41a may include a crawler 41a1 and may include a wheel (not illustrated).

The computer 13 can slew the upper slewing body 41b with respect to the lower travelling body 41a in a virtual space. The computer 13 may cause the output device 15 to perform display for slewing the upper slewing body 41b with respect to the lower travelling body 41a in accordance with manual operation by the user given to the input device 11.

The upper slewing body 41b may include the cab 41b2. The cab 41b2 is a portion corresponding to a cab in which an operator operates a work machine in an actual work machine. The cab 41b2 may be fixed to a bottom portion (slewing frame) of the upper slewing body 41b. The cab 41b2 may be movable with respect to a bottom portion of the upper slewing body 41b. In this case, the cab 41b2 may be movable parallel to a bottom portion of the upper slewing body 41b in the up-down direction, may be rotatable (rotationally movable) in the up-down direction, or may be movable parallel to and rotatable in the up-down direction. For example, the cab 41b2 may be an elevator cab, a link cab, or a tilt cab. The cab 41b2, which is an elevator cab, is movable in the up-down direction with respect to a bottom portion of the upper slewing body 41b. The cab 41b2, which is a link cab, is arranged at a bottom portion of the upper slewing body 41b via a link mechanism. The cab 41b2, which is a link cab, is movable in the up-down direction and the front-rear direction with respect to a bottom portion of the upper slewing body 41b by a link mechanism operating. The cab 41b2, which is a tilt cab, can rotate (tilt) in the up-down direction about a rotation axis extending in the lateral direction with respect to a bottom portion of the upper slewing body 41b. The cab 41b2 may include an accessory attached to a main body portion of the cab 41b2. This accessory may be, for example, a guard for protecting an upper surface of the cab 41b2, a front window, and the like from a flying object or the like.

The attachment 43 is a work device that performs work in a virtual space. The computer 13 can raise and lower the attachment 43 with respect to the upper slewing body 41b, that is, can rotate the attachment 43 upward and downward. The computer 13 may cause the output device 15 to perform display for raising and lowering the attachment 43 with respect to the upper slewing body 41b according to manual operation by the user given to the input device 11.

The attachment 43 includes the boom 43a1, the arm 43a2, and the tip attachment 43c.

The boom 43a1 is rotatably attached to the upper slewing body 41b. The arm 43a2 is rotatably attached to the boom 43a1.

The tip attachment 43c is located at a tip portion of the attachment 43. The tip attachment 43c is rotatably attached to the arm 43a2. The tip attachment 43c may be a bucket for performing work of scooping a work object, excavation, and the like. The tip attachment 43c may be a device such as a grapple or a nibbler that sandwiches a work object, a device such as a breaker that crushes a work object, or a device having a magnet that attracts a metal work object. An object (work object) as a target of work by the tip attachment 43c illustrated in FIG. 11 may be earth and sand, a stone, wood, metal, resin, waste, or a structure (block or the like).

### [Area processing function]

Although not illustrated, the computer 13 may perform processing of an area. The area is a region in a virtual space and is an example of the arrangement target T. The area may be a three-dimensional region in a virtual space, a two-dimensional region in a virtual space, a region represented by a line in a virtual space, or a region (position) represented by a point in a virtual space.

The processing of an area includes deletion of an area (deletion from a virtual space) and arrangement of an area (arrangement in a virtual space). The arrangement of an area may be referred to as setting of an area. A condition under which the processing of an area is performed is, for example, as described below.

The computer 13 may perform processing of the area A when manual operation by the user is given to the input device 11. The computer 13 may perform processing of the area A according to manual operation by the user. The computer 13 may automatically perform processing of the area A when a preset condition in the computer 13 is satisfied. For example, the computer 1 3 may arrange an area based on a position of the object 30 when the object 30 is arranged in a virtual space. For example, the computer 13 may set the area A based on a position of the work machine 40.

Specifically, the computer 13 may set the area A as a region where work by the work machine 40 is scheduled. The computer 13 may set the terrain 31 as the object 30 in an area set based on the work machine 40 as a work target of the work machine 40. Specifically, the computer 13 may set the object 30 in an area set based on the work machine 40 as a resetting target when the work machine 40 is reset. The computer 13 may set the area A based on the object 30 other than the work machine 40.

The computer 13 may set the area A without being based on the object 30. For example, the computer 13 may set the area A based on manual operation by the user. Specifically, the computer 13 may set the area A as an entry prohibited region that the work machine 40 cannot enter. Similarly to the resetting of the object 30 described above, the area may be reset.

### [Operation mode switching function]

The work simulator 1 has an operation mode switching function. The work simulator 1 may be configured to be able to set any operation mode among a plurality of operation modes as a mode of the work simulator 1.

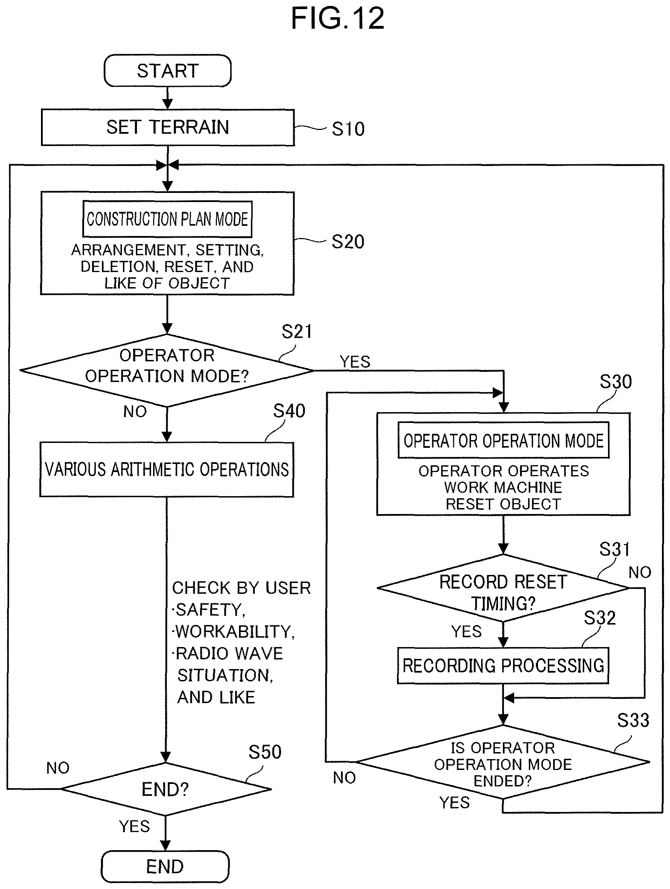

A function for each of a plurality of operation modes may be set in the computer 13 illustrated in FIG. 11. The computer 13 may switch start and end of control for each of a plurality of operation modes. In the present embodiment, a plurality of operation modes include the construction plan mode illustrated in Step S20 illustrated in FIG. 12 and the operator operation mode illustrated in Step S30 illustrated in FIG. 12. Note that a function for an operation mode other than these may be set in advance in the computer 13.

The construction plan mode illustrated in Step S20 illustrated in FIG. 12 is an operation mode for performing a construction plan. In Step S20, the computer 13 sets a mode of the work simulator 1 to the construction plan mode and performs arithmetic processing for a construction plan.

For example, in the construction plan mode, the computer 13 may cause the output device 15 to display an image of the work site S in a virtual space. In the specific example illustrated in FIG. 11, the computer 13 causes the output device 15 to display an overhead image of the work site S. For example, in the construction plan mode, the computer 13 may perform processing such as arrangement of the object 30 and deletion of the object 30 according to manual operation given to the input device 11 by the user. In the construction plan mode, the computer 13 may automatically perform processing such as arrangement of the object 30, deletion of the object 30, arrangement of the area A, and deletion of the area A based on a construction plan mode program for the construction plan mode stored in advance in the storage unit 13a. The work simulation program may include a construction plan mode program.

The operator operation mode illustrated in Step S30 illustrated in FIG. 12 is an operation mode in which an operator can steer the work machine 40 simulating an actual work machine in a virtual space. In Step S30, the computer 13 sets a mode of the work simulator 1 to the operator operation mode and performs arithmetic processing for the operator operation mode.

For example, in the operator operation mode, the computer 13 operates the work machine 40 in a virtual space in accordance with manual operation by the user given to the operation input device 11a. That is, the computer 13 outputs a command corresponding to manual operation by the user to the output device 15, and the output device 15 displays movement of the work machine 40 corresponding to the manual operation by the user. Specifically, for example, in a case where the user's manual operation is travelling operation corresponding to travelling of the lower travelling body 41a, the computer 13 outputs a command corresponding to the travelling operation to the output device 15, and the output device 15 displays movement of the lower travelling body 41a travelling. In a case where user's manual operation is a posture changing operation of changing a posture of the attachment 43 or a posture of the upper slewing body 41b, the computer 13 outputs a command according to the posture changing operation to the output device 15, and the output device 15 displays movement of changing a posture of the attachment 43 or the upper slewing body 41b. A change in a posture of the attachment 43 may be a change in a posture of the boom 43al illustrated in FIG. 11, a change in a posture of the arm 43a2, or a change in a posture of the tip attachment 43c.

In the operator operation mode, the computer 13 may operate the work machine 40 based on an instruction other than manual operation by the user. For example, when a button or the like (not illustrated) on a screen is pressed, the computer 13 may automatically operate the work machine 40.

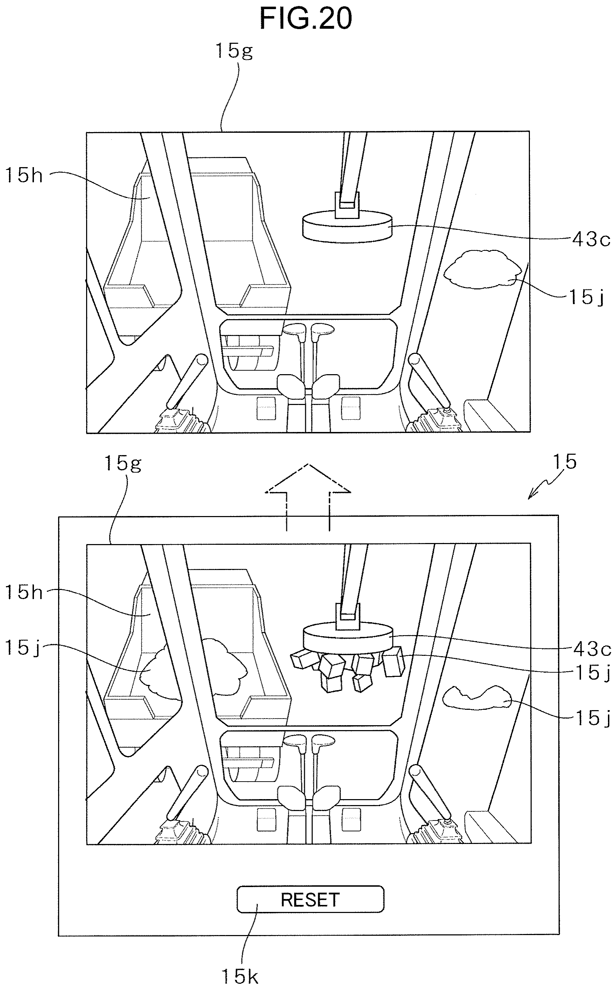

As illustrated in FIG. 20, in the operator operation mode, the computer 13 may cause the output device 15 to display a field of view as viewed from the inside of the cab 41b2 (see FIG. 11) in which an operator's seat of the work machine 40 is located. Specifically, the computer 13 may cause the output device 15 to display a virtual space as viewed toward the front of the work machine 40 from the inside of the cab 41b2 through a windshield and left and right side windows.

Further, the computer 13 may cause the output device 15 to output a video from any position in a virtual space. For example, the computer 13 may cause the output device 15 to output a video from a viewpoint of a camera arranged in a virtual space. The camera may be freely arranged in a virtual space. For example, the camera may be freely arranged at any position in a virtual space in any direction of a line of sight. Arrangement of the camera may be performed in the construction plan mode or in the operator operation mode. A plurality of cameras may be arranged in a virtual space. Further, the computer 13 may cause the output device 15 to display a video of a camera arranged in a virtual space (a video in a virtual space in a direction of a line of sight of the camera). The computer 13 may cause the output device 15 to output a video of any camera among a plurality of cameras in a virtual space. The computer 13 may cause the output device 15 to output a video of a designated camera from a plurality of cameras in a virtual space. The computer 13 may cause the output device 15 to simultaneously output videos of a plurality of cameras in a virtual space.

In the operator operation mode, the computer 13 may change a state of the work site S according to operation of the work machine 40 in a virtual space. A state of the work site S includes a state of a work target which is an example of the object 30. The work target may be, for example, earth and sand forming the terrain 31 or the suspended load 62. The computer 13 may deform the terrain 31 according to progress of work such as excavation work and leveling work performed by the work machine 40 in a virtual space. The computer 13 may move the suspended load 62 in accordance with progress of lifting work performed by the work machine 40 in a virtual space.

The operator operation mode may be used for storage (teaching) of operation of the work machine 40 illustrated in FIG. 11. The teaching is performed as described below. The user operates the work machine 40 in a virtual space by giving manual operation to the operation input device 11a while viewing the work machine 40 displayed on the output device 15, and the computer 13 stores teaching data which is data regarding the operation of the work machine 40. After that, the computer 13 may operate the work machine 40 based on the stored teaching data.

In the operator operation mode, the reset timing processing unit 13b3 may store a state of the object 30 at a reset timing in a history of a state of the object 30 that changes as time elapses in a work simulation. The reset timing is a timing at which a state of the object 30 is stored, and is a timing to which a state of the object 30 can be reset (returned). The reset timing may be automatically set in the computer 13, or may be set by manual operation by the user.

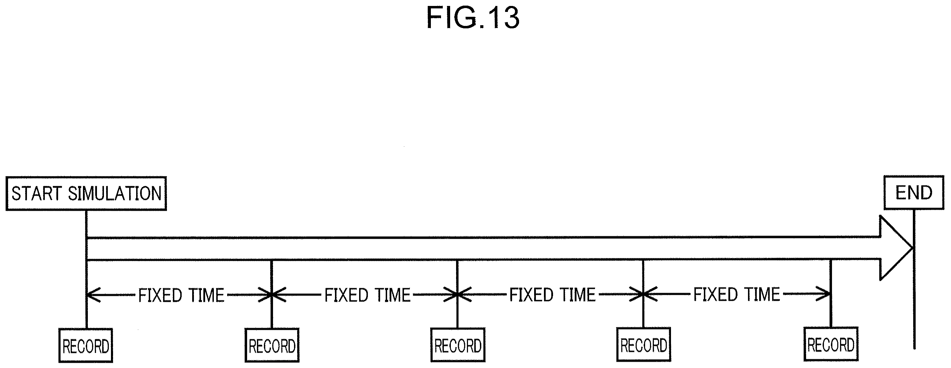

The computer 13 may automatically store a state of the object 30 at the reset timing. As illustrated in FIG. 13, for example, the computer 13 may automatically store a state of the object 30 at the reset timing at each fixed time interval from start of a work simulation. The fixed time may be changeable by a request from the user via the information input device 11b, for example. As illustrated in FIGS. 13 to 15, a start time of a work simulation may be included as the reset timing to be automatically stored.

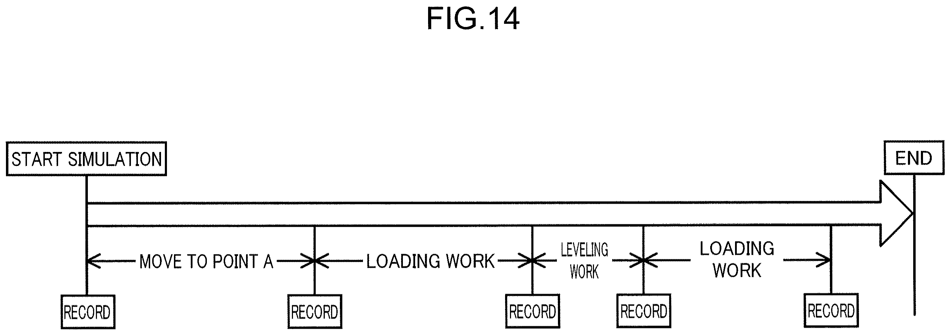

As illustrated in FIG. 14, for example, the computer 13 may automatically store a state of the object 30 at the reset timing in a case where the work machine 40 manually operated by the user starts a predetermined task after a work simulation is started. The predetermined task is a type of work performed by the work machine 40. For example, as illustrated in FIG. 14, the predetermined task may include movement of the work machine 40, may include dump truck loading work by the work machine 40, and may include leveling work by the work machine 40. The computer 13 may determine a type of work performed by the work machine 40 based on a task determination condition. The task determination condition may be stored in the storage unit 13a in advance. The task determination condition is constructed using information specific to a task such as movement, loading work, and leveling work of the work machine 40. The specific information may include, for example, information regarding a position of the work machine 40, information regarding operation of the work machine 40 (for example, information regarding lever operation), and information regarding a posture of the attachment 43.

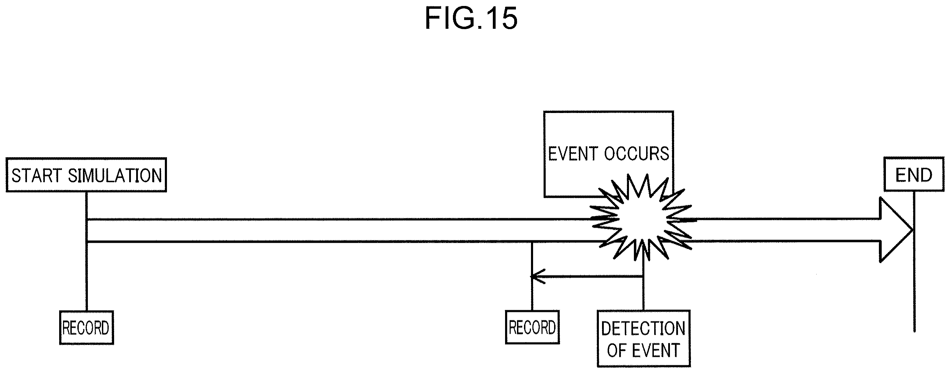

As illustrated in FIG. 15, for example, the computer 13 may automatically store a state of the object 30 at the reset timing in a case where the work machine 40 manually operated by the user generates a predetermined event. For example, the event is an event that occurs in the work machine 40 and is an event other than the task. Specifically, the event may be that the work machine 40 approaches another one of the objects 30 to within a predetermined distance or less, may be that the work machine 40 enters a predetermined area, or may be that the work machine 40 lifts off. That the work machine 40 "approaches another one of the objects 30 to within a predetermined distance or less" may include that the work machine 40 is in contact with another one of the objects 30.

The computer 13 may determine whether or not the work machine 40 generates a predetermined event based on the event determination condition. The event determination condition may be stored in the storage unit 13a in advance. The event determination condition is constructed using information specific to an event. The specific information may include, for example, information regarding a position of the work machine 40, information regarding a position of the object 30 in a surrounding environment, information regarding a relative position between the work machine 40 and the object 30 in a surrounding environment, information regarding a position of an area, or information regarding a relative position between the work machine 40 and an area.

In a case where a state of the object 30 is recorded at the time of occurrence of an event, the computer 13 may record a state quantity at the time of occurrence of the event together with a state of the object 30. For example, a state quantity recorded at the time of occurrence of an event may be a distance between the object 30 such as a person or an obstacle that the work machine 40 approaches and the work machine 40, may be a distance between an area that the work machine 40 approaches and the work machine 40, may be an entry amount to an area that the work machine 40 enters, or may be a lift off angle of the work machine 40. The computer 13 may determine the reset timing at which a state of the object 30 is recorded to a timing a certain time before a timing at which an event occurs, for example, as illustrated in FIG. 5. By this, the computer 13 can reset a state of the object 30 to a state a certain period of time before occurrence of an event.

The computer 13 may record a state of the object 30 at the reset timing based on a request issued manually. The object processing unit 13b1 permanently or temporarily stores a history of a state in a virtual space, such as a state of the object 30. In a case where there is a state to be recorded as a resettable state during a work simulation, the user manually designates the state to be recorded by using a device such as the input device 11, for example, and the computer 13 determines the designated timing as the reset timing and records a state of the object 30 at the reset timing.

The user may input a request for causing the output device 15 to output a history of a state in a virtual space to a device such as the input device 11, and in this case, the device inputs the request to the reset timing processing unit 13b3 of the computer 13. The reset timing processing unit 13b3 outputs a history in a virtual space to the output device 15 in response to a request from the user. The input device 11 may be configured to allow the user to designate a history output to the output device 15, that is, to be able to receive designation by the user. In this case, the computer 13 may cause the output device 15 to output a history in a virtual space as the recorded video 15a as illustrated in FIG. 16, for example, or may cause the output device 15 to output the history as a list of still images. The user designates a history to be recorded as a resettable state from histories in a virtual space. The reset timing processing unit 13b3 records a state in a virtual space corresponding to a history designated by the user as a resettable state.

The reset timing processing unit 13b3 may store a state of the object 30 at a reset timing in association with identifiable information. The identifiable information may include, for example, a time in a history, a task name, or an event name. The identifiable information may be identification information of a logged-in user.

### [Reset function]

The object processing unit 13b1 resets a state in a virtual space. Reset of a state in a virtual space is to return a state changed in the virtual space to a state at a designated timing (reset timing). The reset timing does not necessarily have to be a start time point of a work simulation, and may be an intermediate time point in flow of time in a work simulation.

The object processing unit 13b1 returns a state of the object 30 that changes in a virtual space to a state at a designated timing (reset timing). The computer 13 may execute reset in response to manual operation by the user who requests execution of reset, or may automatically execute reset. Reset may be executed in any operation mode. For example, reset may be executed in the construction plan mode or may be executed in the operator operation mode. In a case where reset is performed in response to a request from the user, the object processing unit 13b1 may cause the output device 15 to display one or a plurality of stored candidates for a state of a virtual space, and may cause the user to select one of the displayed candidates. The object processing unit 13b1 may designate the object 30 as a reset target. The reset target is a target to be reset. The object 30 as the reset target may be designated by manual operation by the user, or may be automatically designated by the computer 13. For example, in a case of being reset during the operator operation mode, a reset target may be limited to the work machine 40 being operated and/or a surrounding environment as a work target of the work machine 40. Each of the work machine 40 and a surrounding environment is an example of the object 30.

The reset target may include the object 30 other than the work machine 40 and a surrounding environment. For example, the reset target may be all the objects 30 in a virtual space. For example, the reset target may be at least one of the work machine 40 being operated, the object 30 in a work area of the work machine 40, and a work target of the work machine 40. The object processing unit 13b1 may identify the object 30 as the reset target and the reset timing and perform reset.

### [Another function]

The computer 13 may have various functions other than the above. A specific example of the functions is as described below.

The computer 13 may have a time change function that is a function of simulating a change in the work site S as time elapses. That is, the computer 13 may perform a time change step of simulating a change in the work site S as time elapses. For example, the object 30 may change according to a predetermined step or a lapse of time in a work simulation.

### [Specific example of processing by computer]

The computer 13 can perform various pieces of processing in various orders. An example of flow of processing of the computer 13 will be described with reference to FIG. 12. A specific example of the arithmetic processing illustrated in FIG. 12 includes processing of Steps S10 to S50.

In Step S10, the computer 13 illustrated in FIG. 11 sets (arranges) the terrain 31, which is an example of the object 30, in a virtual space. For example, the computer 13 reads information of the terrain 31 from the information input device 11b.

In Step S20, the computer 13 sets a mode of the work simulator 1 to the construction plan mode and starts control of the construction plan mode. In the construction plan mode, the object processing unit 13b1 arranges and deletes the object 30. Further, the object processing unit 13b1 may reset the object 30 in the construction plan mode.

In Step S21, the computer 13 determines whether or not to start control for the operator operation mode. Specifically, the computer 13 determines whether or not an operator operation mode start condition, which is a condition for starting control regarding the operator operation mode, is satisfied. For example, the operator operation mode start condition may be that start of the operator operation mode is selected by user's manual operation (for example, operation on a GUI). In a case where the operator operation mode start condition is satisfied (YES in Step S21), the computer 13 performs processing of Step S30. In a case where the operator operation mode start condition is not satisfied (NO in Step S21), the computer 13 performs processing of Step S40 without starting control for the operator operation mode.

In Step S30, the computer 13 sets a mode of the work simulator 1 to the operator operation mode and starts control for the operator operation mode. In the operator operation mode, the user can operate the work machine 40 by manual operation in a virtual space constructed in the work simulator 1. By this, the user can check workability of the work machine 40 in a virtual space. Further, the computer 13 may reset the object 30 in the operator operation mode.

In Step S31, the computer 13 determines whether or not to record the reset timing. The computer 13 executes this determination in parallel while performing control for operating the work machine 40 in accordance with manual operation by the user. For example, the computer 13 may perform determination in Step S31 in response to a change in the object 30 in a virtual space. Further, the computer 13 may perform determination in Step S31 at each predetermined time interval.

In a case where there is a request for reset timing recording by the user, the computer 13 determines that it is necessary to record the reset timing (YES in Step S31), and performs processing of Step S32.

For example, in a case where a condition for automatic recording is set in advance, the computer 13 may perform processing below. The condition for automatic recording may be a fixed time condition in which the reset timing is recorded at each fixed time interval, may be the task determination condition, or may be the event determination condition. When the condition for automatic recording is satisfied (YES in Step S31), the computer 13 performs the processing of Step S32.

In a case where the reset timing is not recorded (NO in Step S31), the computer 13 performs processing of Step S33.

In Step S32, the computer 13 performs processing of recording the reset timing. In a case where there is a request for reset timing recording by the user, the computer 13 performs processing for causing the user to determine the reset timing. In a case where a condition for automatic recording is set, the computer 13 records the reset timing according to the condition for automatic recording as illustrated in FIGS. 13 to 15. After the above, the computer 13 performs the processing of Step S33.

In Step S33, the computer 13 determines whether or not to end the operator operation mode. Specifically, the computer 13 determines whether or not an operator operation mode end condition, which is a condition for ending the operator operation mode, is satisfied. For example, the operator operation mode end condition may be that end of the operator operation mode is selected by manual operation (for example, operation on a GUI) of the user. In a case where the operator operation mode end condition is not satisfied (NO in Step S33), the computer 13 continues control for the operator operation mode in Step S30. In a case where the operator operation mode end condition is satisfied (YES in Step S33), the computer 13 ends the operator operation mode, sets a mode of the work simulator 1 to the construction plan mode in Step S20, and performs processing in and after Step S20.

When ending the operator operation mode, the computer 13 may store a situation of the work site S changed in the operator operation mode (for example, a shape of the ground surface 31a after the change) in the storage unit 13a. The computer 13 may set the work site S in the construction plan mode as the stored work site S when the mode of the work simulator 1 is changed from the operator operation mode to the construction plan mode. In other words, the computer 13 may transfer a change in a situation of the work site S in the operator operation mode to the construction plan mode. However, when a mode of the work simulator 1 is changed from the operator operation mode to the construction plan mode, the computer 13 may set the work site S in the construction plan mode as the work site S at a start time point of the operator operation mode (for example, the operator operation mode immediately before). In other words, the computer 13 does not need to transfer a change in a situation of the work site S in the operator operation mode to the construction plan mode. The computer 13 may prompt the user to select whether or not to transfer a change in a situation of the work site S in the operator operation mode to the construction plan mode.

In Step S40, the computer 13 performs various arithmetic operations. For example, the computer 13 performs arithmetic operation of various events at the work site S. In Step S40, the computer 13 may perform arithmetic operation regarding safety at the work site S. The computer 13 may perform, for example, the interference determination and the like as arithmetic operation regarding safety. In Step S40, the computer 13 may calculate workability (productivity) of work by the work machine 40. The computer 13 may output a result of the interference determination to the output device 15, or may output an arithmetic operation result of the workability (the productivity) to the output device 15. By this, the user can check safety at the work site S and workability of the work machine 40.

In Step S50, the computer 13 determines whether or not to end the work simulation. Specifically, the computer 13 determines whether or not the work simulation end condition, which is a condition for ending a work simulation, is satisfied. For example, the work simulation end condition may be that end of a work simulation is selected by user's manual operation (for example, operation on a GUI). In a case where the work simulation end condition is satisfied (YES in Step S50), the computer 13 ends the work simulation. In a case where the work simulation end condition is not satisfied (NO in Step S50), the computer 13 continues the work simulation. In this case, the computer 13 performs processing in and after Step S20 again.

### [Specific example in case of manually recording state of object 30]

FIG. 16 is a diagram illustrating a video displayed on the output device 15 when a state of the object 30 is manually recorded. In the example of FIG. 16, a video of a past history of loading work onto a dump truck (transport vehicle) by the work machine 40 is displayed on a display screen of the output device 15 as a work simulation.

As illustrated in FIG. 16, the work simulator 1 may be configured such that the user can designate the reset timing at which the user desires to record a state while viewing the recorded video 15a displayed on the output device 15. As described above, the work simulator 1 causes the output device 15 to display the recorded video 15a in order for a timing at which a state of the object 30 is desired to be recorded to be determined. As illustrated in FIG. 16, the recorded video 15a may be a video of a field of view from the inside of the cab 41b2 such as an elevator cab. As illustrated in FIG. 11, the recorded video 15a may be a video of the work machine 40 viewed from a third party's viewpoint. The computer 13 can preferably stop the recorded video 15a at any timing when the user operates the input device 11. Specifically, as illustrated in FIG. 16, the computer 13 may cause the output device 15 to display, below recorded video 15a, an indicator 15b that allows adjustment of a reproduction timing. By this, a state of a virtual space corresponding to a position of the indicator 15b is displayed as a still image (in a stopped state). Further, in order to simplify checking of the recorded video 15a, the input device 11 can preferably realize operation of functions such as fast-forwarding and rewinding of the recorded video 15a. Specifically, as illustrated in FIG. 16, an operation panel 15c for determining the reset timing and these functions may be displayed below the indicator 15b. Further, when the user determines the reset timing, the reset timing processing unit 13b3 may display a dialog for confirming whether or not the reset timing may be determined. Specifically, as illustrated in FIG. 16, content of the operation panel 15c may be changed to a confirmation dialog for determining, by operation, whether or not the reset timing may be determined.

### [Specific example of GUI regarding designation of reset timing]

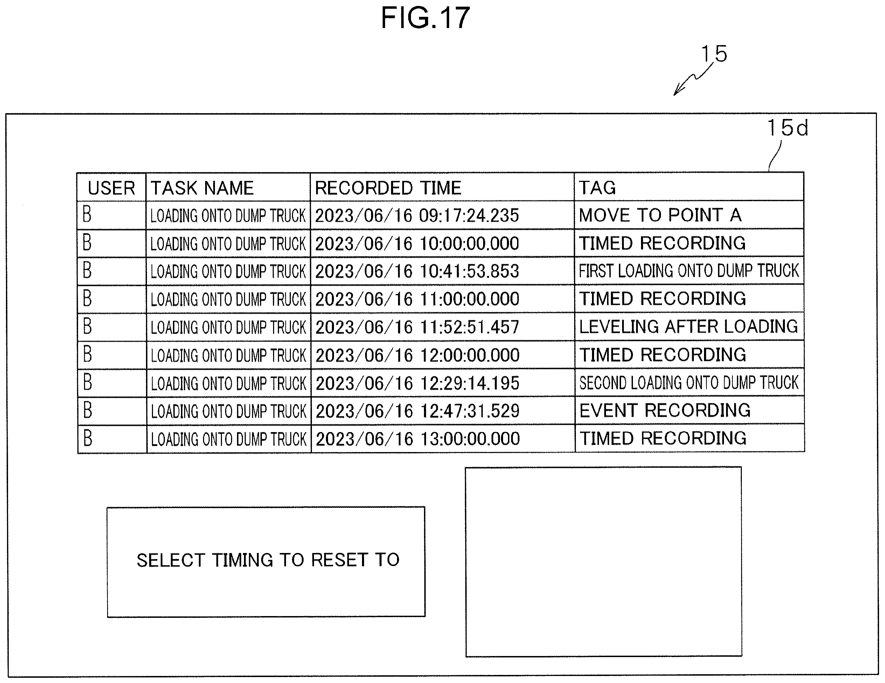

For example, as illustrated in FIG. 17, the computer 13 may cause the output device 15 to display a list 15d of candidates for a state in a virtual space that is recorded, specifically, the list 15d of candidates for a state of the object 30. The computer 13 may display the list 15d on the output device 15, for example, in a case where the user performs operation of requesting reset of the object 30.

The list 15d includes a plurality of candidates. Each of a plurality of candidates is displayed in any row in the list 15d. In the list 15d, one candidate (reset timing) is shown in one row. Each of a plurality of candidates is a candidate for the reset timing. Any reset timing is selected by the user operating the input device 11.

The user, a task name, a recorded time, and a tag are shown in association with the reset timing shown in the list 15d. The user is a user name that logs in when a state corresponding to each candidate is recorded. The task name may be a name of a task detected under the task determination condition or may be input by the user. The recorded time indicates a time when a state corresponding to each candidate is recorded in a history. The tag indicates a condition when a state corresponding to each candidate is recorded. For example, if the tag is a tag of the reset timing recorded by automatic recording at fixed time intervals, the tag is indicated as "timed recording". For example, in a case where the tag is a tag of the reset timing recorded by automatic recording due to satisfaction of the task determination condition, a name of a task associated with the task determination condition is shown. For example, a tag is shown as "event recording" if the tag is of the reset timing recorded by automatic recording due to satisfaction of the event determination condition. Further, for example, if a tag is a tag of the reset timing recorded by automatic recording due to satisfaction of the event determination condition, a name indicating the event may be shown.

Although not illustrated, a work simulation of a plurality of the work sites S may be performed. In this case, the list 15d may include an identification name indicating the work site S at each reset timing.

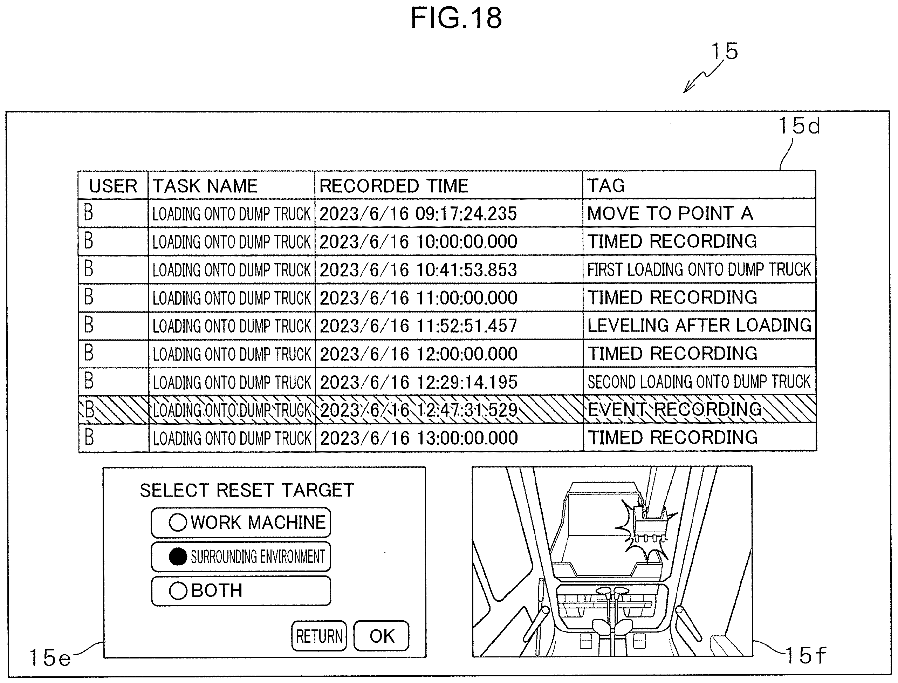

Further, as illustrated in FIG. 18, a reset target may be configured to be selectable. For example, the computer 13 may cause the output device 15 to display a screen for selecting a reset target in a case where the user performs operation of determining any reset timing from the list 15d. Specifically, the output device 15 may display a selection screen 15e for selecting one of the work machine 40, the object 30 in a surrounding environment, and both of them. Further, a preview image 15f may be displayed on the output device 15. The preview image 15f is an image indicating a state of the object 30 at a selected reset timing.

### [Specific example of processing of reset function]

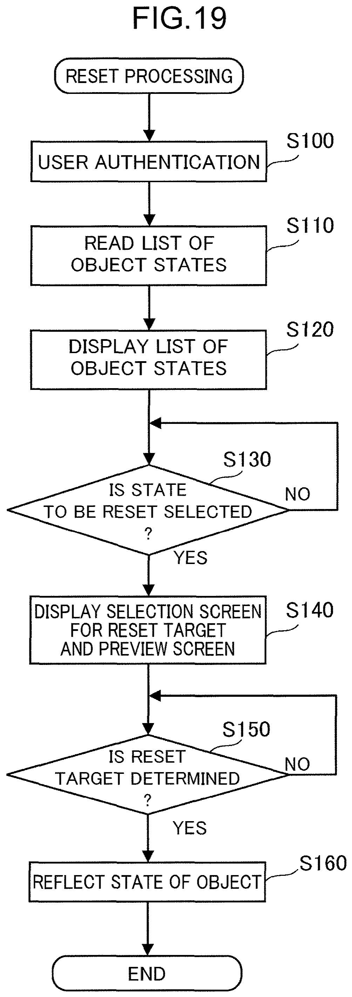

FIG. 19 is a flowchart illustrating an example of the reset processing performed by the computer 13. For example, the reset processing may be executed in setting of the terrain 31 in processing of the computer 13 (Step S10 illustrated in FIG. 12). Further, for example, the reset processing may be executed in the construction plan mode (Step S20 illustrated in FIG. 12) in processing of the computer 13.

In Step S100, the computer 13 authenticates the user. In Step S110, the computer 13 reads the list 15d (list) of states of the object 30 stored in the storage unit 13a. Note that the computer 13 may narrow down items included in a list of states of the object 30 according to the user to be authenticated. For example, the computer 13 may narrow down only states of the object 30 including information regarding the user to be authenticated. For example, a state of the object 30 of the user having a higher-level role of the user to be authenticated may be excluded.

In Step S120, the computer 13 causes the output device 15 to display the list 15d (list) of states of the object 30 (see FIG. 17). In Step S130, the computer 13 determines whether or not one reset timing is selected from the list of states of the object 30. In a case where no reset timing is selected (NO in Step S130), the computer 13 executes the processing of Step S130 again. In a case where a reset timing is selected (YES in Step S130), the computer 13 shifts the processing to Step S140.

In Step S140, the computer 13 causes the output device 15 to display a selection screen 15e for a reset target (see FIG. 18). Note that, in a case where this routine is called from setting of the terrain 31 in processing of the computer 13 (Step S10 in FIG. 12), an option of the work machine 40 on the selection screen 15e may be made unselectable. Further, the computer 13 displays a state of the selected object 30 on the output device 15 in the preview image 15f (see FIG. 18).

In Step S150, the computer 13 determines whether or not a reset target is determined. In a case where no reset target is determined (NO in Step S150), the computer 13 executes the processing of Step S150 again. In a case where a reset target is determined (YES in Step S150), the computer 13 shifts the processing to Step S160.

In Step S160, the computer 13 reads a state at the reset timing of the object 30 of the determined reset target, reflects the read state in a state of the object 30 after reset, and ends this routine.

For example, Steps S110 to S150 may be omitted, and instead, processing below may be performed. Specifically, the computer 13 may determine the presence or absence of a specific input signal from the input device 11 (whether or not a specific operation is performed). In a case where there is a specific input signal from the input device 11, the computer 13 may automatically select a specific state and a specific reset target and execute reset (automatic reset). The computer 13 may return the state to a state at a start time portion of a work simulation as a state after automatic reset. The computer 13 may select a surrounding environment excluding the work machine 40 as an automatic reset target and execute reset for the surrounding environment.

### [Specific example of automatic reset]

An example of automatic reset by a specific operation will be described with reference to FIG. 20. FIG. 20 is an example of a simulation video 15g displayed on the output device 15 in a case where the work machine 40 performs loading work to a dump truck (transporter vehicle) 15h in the operator operation mode in a work simulation. In FIG. 20, the simulation video 15g in which the work machine 40 is performing work on a block 15j arranged on the ground is displayed. Specifically, the work machine 40 to which a lifting magnet is attached as the tip attachment 43c moves the attracted block 15j from a predetermined position on the ground to a cargo bed of the dump truck 15h.

In a case where the computer 13 receives a specific signal from the input device 11 (in a case where a specific operation is performed on the input device 11), the computer 13 executes automatic reset. The computer 13 may display a reset button 15k for receiving a specific operation on a display screen of the output device 15. The specific operation is preferably simple. For example, the specific operation may be a touch operation on a touch panel. For example, the specific operation may be input of a shortcut key on a keyboard.

In a case of receiving a specific signal from the input device 11, the computer 13 resets the block 15j to a state at a time point when a work simulation is started. By the reset, the computer 13 returns the block 15j in the simulation video 15g to a state at a simulation start time. Specifically, the block 15j loaded on a cargo bed of the dump truck 15h and a work object moved from an initial position such as the block 15j being attracted to the tip attachment 43c are deleted. Further, the object 30 of a work object at an initial position such as the block 15j stacked on the ground returns to an initial state. As described above, for example, in the automatic reset, a work object of the work machine 40 is reset. By this, the user can reset a work object with a simple operation, and can repeatedly practice work on a work object.

Note that in a case where the dump truck 15h is moved during a simulation, a position of the dump truck 15h may be returned to an initial position at a simulation start time. The work machine 40 may be a predetermined target excluded from reset. By this, the object 30 other than the work machine 40 can be reset.

### [Regarding twentieth aspect]

The work simulator 1 according to a twentieth aspect includes the computer 13. The computer 13 simulates the work site S including the work machine 40 and a surrounding environment as a work target of the work machine 40 in a virtual space. The computer 13 resets a state in a virtual space to a state at a designated timing.

In the twentieth aspect, the computer 13 can reset a state in a virtual space to a state at a designated timing. Therefore, a state in a virtual space in which a work simulation is performed can be reset to a desired timing.

### [Regarding twenty-first aspect]

In a twenty-first aspect, the computer 13 resets a state of the work machine 40 in a virtual space to a state at a designated timing.

In the twenty-first aspect, a state of the work machine 40 in a virtual space can be reset to a state at a designated timing. Therefore, a state of the work machine 40 in a virtual space can be reset at a desired timing.

### [Regarding twenty-second aspect]

In a twenty-second aspect, the at least one arrangement target includes a surrounding environment as a work target of the work machine, and the computer 13 resets a state of the object 30 in a surrounding environment in a virtual space to a state at a designated timing.

In the twenty-second aspect, a state of the object 30 in a surrounding environment in a virtual space can be reset to a state at a designated timing. Therefore, a state of the object 30 in a surrounding environment in a virtual space can be reset at a desired timing.

### [Regarding twenty-third aspect]

In a twenty-third aspect, as illustrated in FIG. 13, the computer 13 records a state in a virtual space at predetermined time intervals, and resets a state in a virtual space to a state at a designated timing among recorded states.

In the twenty-third aspect, a state in a virtual space can be recorded at each predetermined time interval (fixed time interval), and a state can be reset to a state at a designated timing among recorded states. Therefore, a state of the object 30 in a surrounding environment in a virtual space can be reset at a desired timing among recorded ones at each predetermined time interval.

### [Regarding twenty-fourth aspect]

In a twenty-fourth aspect, as illustrated in FIG. 14, the computer 13 records a state in a virtual space at a timing when one task by the work machine 40 is started or a timing at which each of a plurality of tasks is started, and resets a state in a virtual space to a state at a designated timing among recorded states.

In the twenty-fourth aspect, a state in a virtual space can be recorded at a timing when a task by the work machine 40 is started, and a state can be reset to a state at a designated timing among recorded states. Therefore, a state of the object 30 in a surrounding environment in a virtual space can be reset to a desired timing among timings recorded when a task is started.

### [Regarding twenty-fifth aspect]

In a twenty-fifth aspect, as illustrated in FIG. 15, the computer 13 records a state in a virtual space at a timing when one event related to the work machine 40 occurs or a timing when each of a plurality of events occurs, and resets a state in a virtual space to a state at a designated timing among recorded states.

In the twenty-fifth aspect, a state in a virtual space can be recorded at a timing when an event related to the work machine 40 occurs, and reset can be performed to a state at a designated timing among recorded states. Therefore, a state of the object 30 in a surrounding environment in a virtual space can be reset to a desired timing among timings recorded when an event occurs.

### [Regarding twenty-sixth aspect]

In a twenty-sixth aspect, the computer 13 records a state in a virtual space at a timing when the work machine 40 approaches the predetermined object 30 to within a predetermined distance or less.

In the twenty-sixth aspect, a state in a virtual space can be recorded at a timing when the work machine 40 approaches the predetermined object 30 to within a predetermined distance or less. Therefore, reset can be performed to a state in which the work machine 40 approaches the predetermined object 30 to within a predetermined distance or less in a virtual space.

### [Regarding twenty-seventh aspect]

In a twenty-seventh aspect, the computer 13 records a state in a virtual space at a timing when the work machine 40 enters a predetermined area.

In the twenty-seventh aspect, a state in a virtual space can be recorded at a timing when the work machine 40 enters a predetermined area. Therefore, reset can be performed to a state in which the work machine 40 enters a predetermined area in a virtual space.

### [Regarding twenty-eighth aspect]

In a twenty-eighth aspect, the work simulator 1 further includes the output device 15 and the input device 11. As illustrated in FIG. 16, the computer 13 outputs a history of a state in a virtual space to the output device 15 in a mode capable of being designated by the input device 11. The computer 13 resets a state in a virtual space to a state at a timing associated with a designated history.

In the twenty-eighth aspect, a state in a virtual space can be reset to a timing desired by the user while the user is allowed to check a history of a state in a virtual space.

A specific example of the twenty-eighth aspect may include a configuration below. That is, the work simulator 1 may include the output device 15, and the computer 13 may cause the output device to display one or a plurality of scenes included in a history of a state in a virtual space, and may reset a state in the virtual space to a state at a timing corresponding to a scene selected from among the one or plurality of scenes. A scene included in the history may be, for example, a scene displayed on the output device 15 as illustrated in FIG. 16.

### [Regarding twenty-ninth aspect]

In a twenty-ninth aspect, the computer 13 resets a state in a virtual space by excluding a predetermined target. Specifically, the at least one arrangement target T includes a plurality of the arrangement targets T, and the computer 13 resets a state in a virtual space to a state at a designated timing for a part of the plurality of the arrangement targets T and does not reset a state in the virtual space to the state at the designated timing for another part of the plurality of the arrangement targets T.

In the twenty-ninth aspect, since a predetermined target is excluded in reset, a work simulation can be continued while a state of the predetermined target is maintained.

### [Regarding thirty-second aspect]

A work simulation program according to a thirty-second aspect is a program for simulating, in a virtual space, the work site S including the work machine 40 and the object 30 in a surrounding environment as a work target of the work machine 40. The work simulation program causes the computer 13 to execute, as the arrangement assisting step, the reset step of resetting a state in a virtual space to a state at a designated timing.

In the thirty-second aspect, a state in a virtual space can be reset to a state at a designated timing. Therefore, a state in a virtual space in which a work simulation is performed can be reset to a desired timing.

### [Regarding thirty-fifth aspect]

A work simulation method according to a thirty-fifth aspect is a method of simulating, in a virtual space, the work site S including the work machine 40 and the object 30 in a surrounding environment as a work target of the work machine 40. The work simulation method includes, as the arrangement assisting step, the reset step of resetting a state in a virtual space to a state at a designated timing.

In the thirty-fifth aspect, a state in a virtual space can be reset to a state at a designated timing. Therefore, a state in a virtual space in which a work simulation is performed can be reset to a desired timing.

### (Variation)

The above embodiment may be modified in various ways. For example, various examples (including a variation) of the above-described embodiments may be combined in various ways. For example, the connection of constituent elements illustrated in FIG. 11 or the like may be changed. For example, the number of constituent elements of the above-described embodiment (including a variation) may be changed, and some of constituent elements may be omitted. The "constituent elements" include a constituent element (specifically, the object 30) in a virtual space (the same applies hereinafter). For example, arrangement of a constituent element may be changed. For example, an inclusion relationship of constituent elements may be changed in various ways. For example, a constituent element described as a lower-level constituent element included in a certain higher-level constituent element is not required to be included in the higher-level constituent element, and may be included in another constituent element. For example, a plurality of members and portions that are described as different from each other may be described as one member and portion. For example, what is described as one member or portion may be divided into a plurality of members and a plurality of portions different from each other. For example, order of steps in the flowchart illustrated in FIGS. 12 and 19 may be changed, and some of the steps do not need to be performed, and, for example, the configuration may be such that each constituent element has only some of features (function, arrangement, shape, operation, and the like).

The work simulator 1 may include a remote operation device for remotely operating an actual machine (an actual machine configured similarly to the work machine 40). The work simulator 1 may be mounted on the remote operation device. The remote operation device includes the input device 11, the computer 13, and the output device 15. The input device 11 includes an operation device (for example, an operation lever and an operation pedal), and outputs an operation signal (a lever operation signal and a pedal operation signal) corresponding to operation of the operation device. At the time of remote operation, the computer 13 exchanges a signal with an actual machine to be remotely operated via communicating means. At the time of remote operation, the computer 13 transmits, to an actual machine, a signal (operation command signal) for operating a work device (corresponding to the attachment 43 (see FIG. 11)), a travelling device (corresponding to the lower travelling body 41a (see FIG. 11)), and the like of the actual machine based on an operation signal input from the input device 11. At the time of remote operation, the computer 13 receives image data of a camera mounted on an actual machine, a signal output from a sensor mounted on an actual machine, and the like via communicating means. The output device 15 (specifically, a monitor) outputs image data (data acquired by the computer 13) of a camera mounted on an actual machine at the time of remote operation.

Since the work simulator 1 includes a remote operation device, the user can use the remote operation device for remotely operating an actual machine to operate the work machine 40 in a virtual space (see, for example, the operator operation mode described above). Therefore, the user can physically experience an operational feel of an actual machine by operating the work machine 40 in a virtual space. As a result, for example, the user's proficiency in operating a remote operation device is promoted. Further, for example, it is possible to easily make an assumption (such as what kind of situation occurs) in a case where an actual machine of an actual site (corresponding to the work site S) is operated by a remote operation device.

The number of the work machines 40 arranged in a virtual space is not limited to one, and a plurality of the work machines 40 may be arranged. Each of a plurality of the work machines 40 may be operated in the operator operation mode or may be operated by automatic operation based on a construction plan. Further, each of a plurality of the work machines 40 arranged may be configured to be selectable as a reset target. Each of a plurality of work machines 40 arranged only needs to be a construction machine, and is not limited to an excavator.

## Claims

1. work simulator that simulates, in a virtual space, a work site where a work machine performs work, the work simulator comprising
a computer that assists arrangement of at least one arrangement target at the work site in the virtual space.

2. The work simulator according to claim 1, wherein
the at least one arrangement target includes a first arrangement target and a second arrangement target, and
in a case where a position of the first arrangement target at the work site is set and a position of the second arrangement target at the work site is not set, the computer sets the position of the second arrangement target based on the position of the first arrangement target.

3. The work simulator according to claim 1, wherein
the at least one arrangement target includes the work machine, and
in a case where a position of a first specific portion of the work machine at the work site is set and a position of a second specific portion of the work machine at the work site is not set, the computer sets the position of the second specific portion based on the position of the first specific portion.

4. The work simulator according to claim 3, wherein
the work machine includes:
a machine body; and
an attachment capable of being raised and lowered with respect to the machine body,
the attachment includes:
a tip attachment located at a tip portion of the attachment; and
a base end side attachment arranged between the tip attachment and the machine body,
the position of the first specific portion is a work position that is a position of the tip attachment when the work machine works,
a work machine arrangement position, which is a position where the machine body is arranged at the work site, is set,
the second specific portion is the base end side attachment, and
the computer sets a position of the base end side attachment based on the work position and the work machine arrangement position.

5. The work simulator according to claim 4, wherein the computer sets the work machine arrangement position after setting the work position.

6. The work simulator according to claim 4, wherein the computer sets the work position after setting the work machine arrangement position.

7. The work simulator according to any one of claims 4 to 6, wherein the computer determines whether or not a posture of the work machine when the tip attachment is arranged at the work position and the machine body is arranged at the work machine arrangement position is a possible posture of the work machine.

8. The work simulator according to any one of claims 1 to 7, wherein
the work machine includes:
a machine body; and
an attachment capable of being raised and lowered with respect to the machine body,
the attachment includes a tip attachment located at a tip portion of the attachment, and
the computer sets a workable area which is an area in which the tip attachment is capable of being arranged by raising and lowering of the attachment.

9. The work simulator according to claim 8, wherein the computer sets a limited workable area within a range of the workable area and narrower than the workable area based on at least one workable area limit value set in the computer.

10. The work simulator according to any one of claims 1 to 9, wherein the computer causes an output device to simultaneously display a plurality of fields of view from different positions in the virtual space.

11. The work simulator according to any one of claims 1 to 10, wherein
the at least one arrangement target includes the work machine,
the computer:
sets three or more grounding determination points on a lower surface of the work machine;
calculates a position of three or more projected grounding determination points obtained by projecting the three or more grounding determination points onto ground;
calculates a grounding surface based on the three or more projected grounding determination points;
calculates a rotation angle of the grounding surface with respect to a predetermined reference;
rotates the work machine such that the rotation angle of the grounding surface coincides with a rotation angle of the lower surface of the work machine with respect to the predetermined reference, and
arranges the work machine at the work site such that the lower surface of the work machine and the grounding surface coincide with each other.

12. The work simulator according to any one of claims 1 to 11, wherein the computer is configured to operate the work machine in a state where the at least one arrangement target is arranged in the virtual space.

13. The work simulator according to claim 1, wherein
the work machine includes:
a lower travelling body;
an upper slewing body capable of slewing with respect to the lower travelling body; and
an attachment capable of being raised and lowered with respect to the upper slewing body.

14. The work simulator according to claim 1, wherein
the at least one arrangement target includes:
a work machine area set in association with a position of the work machine in the virtual space; and
a determination target area set in the virtual space, and
the computer determines a state of interference between the work machine area and the determination target area.

15. The work simulator according to claim 14, wherein in a case where the work machine area and the determination target area interfere with each other, the computer limits arrangement of the work machine to avoid interference between the work machine area and the determination target area.

16. The work simulator according to claim 14 or 15, wherein
the at least one arrangement target includes:
a second work machine different from the work machine; and
a second work machine area set in association with a position of the second work machine in the virtual space, and
the computer determines a state of interference between the work machine area and the second work machine area when the work machine and the second work machine are operated.

17. The work simulator according to any one of claims 14 to 16, wherein the computer operates the work machine simultaneously with an operation by a user in accordance with the operation by the user, or operates the work machine based on information stored in advance in accordance with an operation by the user.

18. The work simulator according to any one of claims 14 to 17, wherein the computer stores a posture of the work machine when the work machine area and the determination target area interfere with each other.

19. The work simulator according to any one of claims 14 to 18, wherein the computer causes an output device to display an overhead field of view of the work machine and the determination target area, or causes the output device to display a field of view of the determination target area from the work machine.

20. The work simulator according to claim 1, wherein the computer resets a state in the virtual space to a state at a designated timing.

21. The work simulator according to claim 20, wherein the computer resets a state of the work machine in the virtual space to a state at a designated timing.

22. The work simulator according to claim 20 or 21, wherein
the at least one arrangement target includes a surrounding environment as a work target of the work machine, and
the computer resets a state of the surrounding environment in the virtual space to a state at a designated timing.

23. The work simulator according to any one of claims 20 to 22, wherein
the computer:
records a state in the virtual space at predetermined time intervals; and
resets a state in the virtual space to a state at a designated timing among recorded states.

24. The work simulator according to any one of claims 20 to 22, wherein
the computer:
records a state in the virtual space at a timing when a task by the work machine is started; and
resets a state in the virtual space to a state at a designated timing among recorded states.

25. The work simulator according to any one of claims 20 to 22, wherein
the computer:
records a state in the virtual space at a timing when an event related to the work machine occurs; and
resets a state in the virtual space to a state at a designated timing among recorded states.

26. The work simulator according to claim 25, wherein the computer records a state in the virtual space at a timing when the work machine approaches a predetermined object to within a predetermined distance or less.

27. The work simulator according to claim 25 or 26, wherein the computer records a state in the virtual space at a timing when the work machine enters a predetermined area.

28. The work simulator according to any one of claims 20 to 27, further comprising:
an output device; and
an input device, wherein
the computer:
outputs a history of a state in the virtual space to the output device in a mode capable of being designated by the input device; and
resets a state in the virtual space to a state at the timing associated with the history that is designated.

29. The work simulator according to any one of claims 20 to 28, wherein
the at least one arrangement target includes a plurality of arrangement targets, and
the computer resets a state in the virtual space to a state at a designated timing for a part of the plurality of arrangement targets, and does not reset a state in the virtual space to a state at the designated timing for another part of the plurality of arrangement targets.

30. A work simulation program for simulating, in a virtual space, a work site where a work machine performs work, the work simulation program causing a computer to execute an arrangement assisting step of assisting arrangement of at least one arrangement target at the work site in the virtual space.

31. The work simulation program according to claim 30, wherein
the at least one arrangement target includes:
a work machine area set in association with a position of the work machine in the virtual space; and
a determination target area set in the virtual space,
the work simulation program causing the computer to execute, as the arrangement assisting step, an interference determination step of determining a state of interference between the work machine area and the determination target area.

32. The work simulation program according to claim 30, the work simulation program causing the computer to execute, as the arrangement assisting step, a reset step of resetting a state in the virtual space to a state at a designated timing.

33. A work simulation method for simulating, in a virtual space, a work site where a work machine performs work, the work simulation method comprising
an arrangement assisting step of assisting arrangement of at least one arrangement target at the work site in the virtual space.

34. The work simulation method according to claim 33, wherein
the at least one arrangement target includes:
a work machine area set in association with a position of the work machine in the virtual space; and
a determination target area set in the virtual space,
the work simulation method comprising, as the arrangement assisting step, an interference determination step of determining a state of interference between the work machine area and the determination target area.

35. The work simulation method according to claim 33, further comprising, as the arrangement assisting step, a reset step of resetting a state in the virtual space to a state at a designated timing.
